# FASCICULE DE BREVET EUROPEEN

(11) **EP 3 568 290 B1**
(45) Date de publication et mention de la délivrance du brevet: **06.01.2021**
(21) Numéro de dépôt: 18702755.2
(22) Date de dépôt: 10.01.2018
(51) Int. Cl.: B29C 70/24, B29D 30/02, B60C 17/00, B29D 30/06, B60C 3/02, B60C 9/18, B60C 17/04

(54) **ASSEMBLAGE COMPRENANT UN TISSU PARTIELLEMENT ROMPABLE ET UNE STRUCTURE PORTEUSE**
ANORDNUNG MIT EINEM TEILWEISE ZERBRECHBAREM GEWEBE UND EINER TRAGENDEN STRUKTUR
ASSEMBLY COMPRISING A PARTIALLY BREAKABLE FABRIC AND A SUPPORTING STRUCTURE

(30) Priorité: 12.01.2017 FR 1750287
(43) Date de publication de la demande: 20.11.2019
(73) Titulaire: Compagnie Générale des Etablissements Michelin, 63000 Clermont-Ferrand (FR)
(72) Inventeur: RIGO, Sébastien, 63040 Clermont-Ferrand Cedex 9 (FR); CORNILLE, Richard, 63040 Clermont-Ferrand Cedex 9 (FR); HUG, Gregor, 63040 Clermont-Ferrand Cedex 9 (FR); LIMOZIN, Bastien, 63040 Clermont-Ferrand Cedex 9 (FR); VILCOT, Florian, 63040 Clermont-Ferrand Cedex 9 (FR)
(74) Mandataire: Louret, Sylvain
(86) Numéro de dépôt international: PCT/FR2018/050056
(87) Numéro de publication internationale: WO 2018/130783

(56) Documents cités:
- WO-A1-2011/112920
- WO-A1-2016/116491
- FR-A1- 3 025 529
- GB-A- 542 379
- JP-A- 2010 000 761
- US-A- 5 175 034
- US-A- 5 840 399
- US-A1- 2003 121 581
- US-A1- 2007 215 266
- US-A1- 2007 267 116
- US-B1- 6 561 245

## Description

L'invention a pour objet un assemblage, un assemblage imprégné, un pneumatique, un ensemble monté et un procédé de fabrication d'un pneumatique.

L'invention concerne le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organisation (ETRTO).

Un pneumatique classique porte la charge appliquée, essentiellement par les extrémités axiales de la bande de roulement, ou épaules, et par les flancs reliant la bande roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document US 4235270 décrit un pneumatique ayant un corps annulaire en matériau élastomérique, comprenant une partie cylindrique radialement extérieure, à la périphérie du pneumatique, pouvant comprendre une bande de roulement, et une partie cylindrique radialement intérieure, destinée à être montée sur une jante. Une pluralité de parois, espacées selon la direction circonférentielle, s'étendent depuis la partie cylindrique radialement intérieure jusqu'à la partie cylindrique radialement extérieure, et assurent le port de la charge. En outre, des flancs peuvent relier les deux parties cylindriques respectivement radialement intérieure et radialement extérieure, pour former, en association avec la bande de roulement et les flancs, une cavité fermée et permettre ainsi la pressurisation du pneumatique. Un tel pneumatique a toutefois une masse élevée, par rapport à un pneumatique classique, et, en raison de son caractère massif, est susceptible de dissiper une énergie élevée, pouvant limiter son endurance, et donc sa durée de vie.

Le document WO 2009087291 décrit une structure pneumatique comprenant deux viroles annulaires respectivement interne, ou radialement intérieure, et externe, ou radialement extérieure, reliées par deux flancs et par une structure porteuse. Selon cette invention, la structure porteuse est pressurisée et partage le volume annulaire du pneumatique en une pluralité de compartiments ou d'alvéoles, et les flancs sont liés ou intégrés à la structure porteuse. Dans ce cas, la charge appliquée est portée à la fois par la structure porteuse et les flancs. La répartition de pression dans l'aire de contact n'est pas homogène dans la largeur axiale de l'aire de contact, avec des surpressions au niveau des épaules dues à la difficulté de mise à plat méridienne en raison de la liaison entre les flancs et la structure porteuse. Ces surpressions au niveau des épaules sont susceptibles de générer une usure importante des épaules de la bande de roulement.

Le document WO 2005007422 décrit une roue adaptative comprenant une bande adaptative et une pluralité de rayons s'étendant radialement vers l'intérieur depuis la bande adaptative jusqu'à un moyeu. La bande adaptative est destinée à s'adapter à la surface de contact avec un sol et à envelopper les obstacles. Les rayons transmettent la charge portée entre la bande adaptative et le moyeu, grâce à la mise en tension des rayons qui ne sont pas en contact avec le sol. Une telle roue adaptative nécessite une optimisation de la répartition des rayons pour garantir une périphérie sensiblement cylindrique. De plus, une roue adaptative a une masse relativement élevée par rapport à un pneumatique classique. Le document WO 2016/116491 A1 décrit un pneumatique comportant une première et une deuxième structure de révolution comprenant des tissus ou tricots comprenant des éléments filaires, concentriques et reliées par une structure porteuse comprenant en alternative des éléments filaires.

La présente invention a pour objectif de proposer un pneumatique permettant une mise à plat améliorée de la bande de roulement lorsque le pneumatique est soumis à une charge et qui soit facile à fabriquer à partir d'un assemblage adapté.

### Assemblage selon l'invention

A cet effet, l'invention a pour objet un assemblage, de préférence pour pneumatique, comprenant :
- un premier tissu s'étendant selon une première direction générale, le premier tissu comprenant des premiers éléments filaires, dits de chaine, sensiblement parallèles entre eux et s'étendant selon une première direction, dite de chaine, sensiblement parallèle à la première direction générale, chaque premier élément filaire de chaine comprenant des premier et deuxième organes filaires,
- un deuxième tissu ou tricot,
- une structure porteuse comprenant des éléments filaires porteurs reliant le premier tissu et le deuxième tissu ou tricot entre eux, chaque élément filaire porteur comprenant au moins une portion filaire porteuse s'étendant entre le premier tissu et le deuxième tissu ou tricot,
le premier tissu étant agencé de sorte que, pour une longueur au repos L du premier tissu selon la première direction générale, exprimée en m :
- pour tout allongement du premier tissu inférieur ou égal à (2π x H) / L, le premier organe filaire présente un allongement non nul et est non rompu,
- il existe un allongement du premier tissu inférieur ou égal à (2π x H) / L à partir duquel le deuxième organe filaire est rompu,
dans lequel H0 x K ≤ H avec H0 la distance droite moyenne entre une face interne du premier tissu et une face interne du deuxième tissu ou tricot lorsque chaque portion filaire porteuse est au repos, H et H0 étant exprimées en m, et K=0,50.

Le principe de l'assemblage selon l'invention est d'avoir une structure porteuse comprenant des éléments porteurs reliant le premier tissu et le deuxième tissu ou tricot, et capable, une fois l'assemblage agencé dans le pneumatique, de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

L'assemblage selon l'invention peut être écru, c'est-à-dire dépourvu de toute composition adhésive destinée à favoriser l'adhésion entres les premiers éléments filaires du premier tissu et/ou les deuxièmes éléments filaires du deuxième tissu ou tricot avec une composition d'élastomère. L'assemblage selon l'invention peut également être adhérisé, c'est-à-dire revêtu au moins en partie d'au moins une composition adhésive favorisant une telle adhésion. Dans un mode de réalisation à deux couches, chaque premier et deuxième élément filaire à encoller est revêtu d'une couche d'un primaire d'adhésion et la couche de primaire d'adhésion est revêtue d'une couche de composition adhésive. Dans un mode de réalisation à une couche, chaque premier et deuxième élément filaire à encoller est directement revêtu d'une couche de composition adhésive. Un exemple de primaire d'adhésion est une résine époxy et/ou un composé isocyanate, éventuellement bloqué. La composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642.

Par direction générale, on entend la direction générale selon laquelle s'étend le tissu ou tricot selon sa plus grande longueur et qui est parallèle aux bords longitudinaux du tissu ou tricot. Ainsi, par exemple, un tissu ou un tricot enroulé sur une bobine de révolution autour d'un axe présente une direction générale sensiblement parallèle à la direction de déroulage du tissu ou tricot (ie la direction circonférentielle) qui est perpendiculaire aux directions axiale et radiale de la bobine.

La première direction de chaine étant sensiblement parallèle à la première direction générale et le premier tissu étant suffisamment déformable, le procédé de fabrication du pneumatique est largement facilité. En effet, le premier tissu peut être déformé grâce à l'allongement du premier organe filaire sans rompre totalement de façon à s'allonger suffisamment pour suivre la conformation qui lui est imposée lors de la fabrication du pneumatique. La rupture du deuxième organe filaire permet d'avoir un premier tissu présentant une rigidité relativement importante et une capacité à s'allonger relativement faible lors du procédé de fabrication du premier tissu rendant ce dernier plus facile à mettre en oeuvre par rapport à un premier tissu dans lequel les premiers éléments filaires de chaine seraient plus élastiques et auraient une capacité à s'allonger relativement élevée. L'utilisation de tels premiers éléments filaires de chaine permet d'obtenir des allongements relativement importants. Cette déformabilité du premier tissu permet de poser le premier tissu en l'enroulant simplement autour du cylindre de confection contrairement à d'autres modes de réalisation dans lesquels d'autres solutions, beaucoup plus complexes industriellement, doivent être utilisées pour permettre au premier tissu de suivre la conformation imposée lors de la fabrication du pneumatique. Enfin, malgré la rupture du deuxième organe filaire, la structure tissée du premier tissu est conservée en raison de la non rupture du premier organe filaire qui permet le maintien d'une structure de chaine continue dans le premier tissu.

Le premier tissu forme une première structure de premiers éléments filaires. Le deuxième tissu ou tricot forme une deuxième structure de deuxièmes éléments filaires.

Dans la présente demande, les propriétés du premier tissu sont déterminées en soumettant le premier tissu à un essai en traction conformément à la norme NF EN ISO 13934-1 de juillet 2013. Les propriétés intrinsèques des éléments et organes filaires sont déterminées en soumettant les éléments filaires à un essai en traction conformément à la norme ASTM D885/D885 MA de janvier 2010.

H représente, une fois l'assemblage intégré au pneumatique, la hauteur radiale moyenne de l'espace annulaire intérieur délimité radialement par la face interne du premier tissu et la face interne du deuxième tissu ou tricot en l'absence de charge appliquée au pneumatique et en l'absence de pression dans le pneumatique. Cette hauteur radiale est au moins égale à 0,5 fois la distance droite moyenne entre les deux faces pour une portion filaire porteuse au repos de sorte que, une fois l'assemblage agencé dans le pneumatique, l'assemblage est capable de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée. Ainsi, dans l'invention, on a au minimum H=H0 x K et Art > (2π x H0 x K) / L avec Art étant l'allongement à force maximale mesuré conformément à la norme NF EN ISO 13934-1 de juillet 2013.

L'homme du métier sélectionnera une valeur de H supérieure ou égale à K x H0 en fonction du type de pneumatique qu'il conçoit et en fonction du port de charge qu'il souhaite obtenir. De façon préférée, H0 x K ≤ H < H0 se sorte que, en l'absence de charge appliquée au pneumatique et en l'absence de pression dans le pneumatique, chaque portion filaire porteuse est dans un état replié.

Par élément filaire porteur, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

Par distance droite moyenne entre la face interne du premier tissu et la face interne du deuxième tissu ou tricot, on entend la distance mesurée perpendiculairement à ces deux faces. En d'autres termes, il s'agit de la distance la plus courte entre ces deux faces. Cette distance droite est mesurée et moyennée en au moins 5 points différents équi-répartis sur l'assemblage au repos.

Par longueur au repos du premier tissu, on entend une longueur du premier tissu qui n'est ni en extension ni en compression selon la première direction générale et présente donc un allongement nul selon cette première direction générale. Le premier tissu n'est alors soumis à aucune contrainte extérieure autre que son propre poids.

Chaque élément filaire porteur, notamment chaque portion filaire porteuse qui relie les faces internes du premier tissu et du deuxième tissu ou tricot l'une à l'autre, peut être caractérisée géométriquement par sa longueur au repos L_{P} et par sa section moyenne S_{P}, qui est la moyenne des sections obtenues par la coupe de la portion filaire porteuse par toutes les surfaces parallèles au premier tissu et au deuxième tissu ou tricot et comprises entre le premier tissu et le deuxième tissu ou tricot. Dans le cas le plus fréquent d'une section constante de l'élément porteur et la portion filaire porteuse, la section moyenne S_{P} est égale à cette section constante.

Chaque élément filaire porteur, notamment chaque portion porteuse, présente typiquement une plus petite dimension caractéristique E de sa section moyenne S_{P} (qui est la moyenne des sections obtenues par la coupe de l'élément filaire porteur par toutes les surfaces parallèles au premier tissu et au deuxième tissu ou tricot et comprises entre le premier tissu et le deuxième tissu ou tricot, préférentiellement au plus égale à 0.02 fois l'espacement maximal entre les deux faces internes du premier tissu et du deuxième tissu ou tricot (qui correspond à la hauteur radiale moyenne H de l'espace annulaire intérieur une fois l'assemblage agencé au sein du pneumatique en l'absence de charge appliquée au pneumatique et en l'absence de pression dans le pneumatique) et un rapport de forme R de sa section moyenne S_{P} préférentiellement au plus égal à 3. Une plus petite dimension caractéristique E de la section moyenne S_{P} de l'élément porteur au plus égale à 0.02 fois la hauteur radiale moyenne H de l'espace annulaire intérieur exclut tout élément porteur massif, ayant un volume important. En d'autres termes, lorsqu'il est filaire, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue.

Un rapport de forme R de sa section moyenne S_{P} au plus égal à 3 signifie que la plus grande dimension caractéristique V de sa section moyenne S_{P} est au plus égale à 3 fois la plus petite dimension caractéristique E de sa section moyenne S_{P}. A titre d'exemples, une section moyenne S_{P} circulaire, ayant un diamètre égal à d, a un rapport de forme R=1, une section moyenne S_{P} rectangulaire, ayant une longueur V et une largeur V', a un rapport de forme R=V/V', et une section moyenne S_{P} elliptique, ayant un grand axe B et un petit axe B', a un rapport de forme R=B/B'.

Un élément porteur filaire a un comportement mécanique de type filaire, c'est-à-dire qu'il ne peut être soumis qu'à des efforts d'extension ou de compression selon sa ligne moyenne.

Il est à noter que tous les éléments porteurs filaires d'une structure porteuse n'ont pas nécessairement des longueurs au repos L_{P} identiques.

Dans un mode de réalisation préféré, la structure porteuse comprend une pluralité d'éléments porteurs identiques, c'est-à-dire dont les caractéristiques géométriques et les matériaux constitutifs sont identiques.

Les éléments porteurs sont agencés de sorte qu'ils sont deux à deux non liés mécaniquement dans un espace délimité par le premier tissu et le deuxième tissu ou tricot. Ainsi, les éléments porteurs ont des comportements mécaniques indépendants. Par exemple, les éléments porteurs ne sont pas liés entre eux de façon à former un réseau ou un treillis.

Avantageusement, K=0,75, de préférence de K=0,80 et plus préférentiellement K=0,90.

Plus K se rapproche de 1, plus les portions filaires porteuses sont, en l'absence de charge appliquée au pneumatique et en l'absence de pression dans le pneumatique, proches de leur état au repos. Très préférentiellement, K=0,90 ce qui permet un port optimisé de la charge.

Dans un mode de réalisation préféré, le deuxième organe filaire est sensiblement rectiligne et le premier organe filaire est enroulé en hélice autour du deuxième organe filaire. De tels premiers éléments filaires de chaines sont appelés éléments filaires guipés, le deuxième organe filaire formant une âme autour de laquelle est enroulée une guipe ou une couche formée par le premier organe filaire.

Avantageusement, chaque premier et deuxième organe filaire comprend, indépendamment l'une de l'autre, au moins un brin multifilamentaire comprenant plusieurs monofilaments chacun constitué d'un matériau choisi parmi un polyester, un polyamide, une polycétone, un polyuréthane , une fibre naturelle, une fibre minérale, de préférence choisi parmi un polyester, un polyamide, une polycétone, un polyuréthane, une fibre naturelle et un assemblage de ces matériaux, plus préférentiellement choisi parmi un polyester, une fibre naturelle et un assemblage de ces matériaux.

Avantageusement, le premier organe filaire comprend au moins un brin multifilamentaire comprenant plusieurs monofilaments chacun constitué d'un matériau choisi parmi un polyester, un polyamide, une polycétone, un polyuréthane, une fibre naturelle, de préférence choisi parmi un polyester, un polyamide, une polycétone, un polyuréthane et un assemblage de ces matériaux, plus préférentiellement choisi parmi les polyesters et les assemblages de polyesters. Les polyesters sont avantageux en raison de leur ténacité élevée, leur coût faible, leur tenue thermique comptaible avec une utilisation en pneumatique et une contraction thermique standard pouvant être choisie.

Avantageusement, le deuxième organe filaire comprend au moins un brin multifilamentaire comprenant plusieurs monofilaments chacun constitué d'un matériau choisi parmi un polyester, un polyamide, une polycétone, une fibre naturelle, une fibre minérale, de préférence choisi parmi un polyester, un polyamide, une polycétone et une fibre naturelle et un assemblage de ces matériaux, plus préférentiellement en rayonne. Les organes filaires en rayonne présentent avantageusement des allongements à rupture relativement faible.

Dans un mode de réalisation préféré, le premier tissu est agencé de sorte que, pour toute contrainte non nulle, exprimée en N, inférieure ou égale à (P0 x (L/2π + H) x l) / 2 exercée sur le premier tissu selon la première direction générale, le premier tissu présente un allongement non nul selon la première direction générale avec I étant la largeur du premier tissu exprimée en m et P0=100000.

Avantageusement, le premier tissu est agencé de sorte que, pour toute contrainte non nulle, exprimée en N, inférieure ou égale à (P0 x (L/2π + H) x l) / 2 exercée sur le premier tissu selon la première direction générale, le premier organe filaire de chaque premier élément filaire de chaine présente un allongement non nul selon la première direction générale sur au moins une partie de sa longueur et est non rompu avec l étant la largeur du premier tissu exprimée en m et P0=100000.

Avantageusement, le premier tissu est agencé de sorte que la contrainte exercée sur le premier tissu selon la première direction générale nécessaire, exprimée en N, pour entrainer la rupture du deuxième organe filaire de chaque premier élément filaire de chaine est inférieure ou égale à (P0 x (L/2π + H) x l) / 2 avec l étant la largeur du premier tissu exprimée en m et P0=100000.

Dans un mode de réalisation préféré, le premier tissu est agencé de sorte que, pour tout allongement du premier tissu selon la première direction générale inférieur ou égal à (2π x H) / L, le premier tissu développe une force, exprimée en N, selon la première direction générale inférieure ou égale à (P0 x (L/2π + H) x l) / 2 avec l étant la largeur du premier tissu exprimée en m et P0=100000.

Ainsi, le premier tissu est déformable sous une contrainte relativement faible ce qui permet, lors du procédé de fabrication du pneumatique, d'utiliser une contrainte de conformation adaptée ne risquant pas de détériorer l'ébauche.

Dans un mode de réalisation, le premier tissu présente une force maximale, selon la première direction générale, supérieure à (P0 x (L/2π + H) x l) / 2 avec l étant la largeur du premier tissu exprimée en m et P0=100000. La force maximale est la force nécessairement pour obtenir l'allongement à la force maximale tel que défini dans la norme NF EN ISO 13934-1 de juillet 2013. Ainsi, à contrainte imposée, on évite de rompre le premier tissu lors de la conformation.

Avantageusement, P0=80000, de préférence P0=60000, plus préférentiellement P0=40000. Plus P0 est petit, plus il est possible d'utiliser des contraintes petites lors du procédé de fabrication du pneumatique et moins on risque de détériorer l'ébauche lors de ce procédé.

Dans un mode de réalisation préféré, chaque élément filaire porteur est textile. Par textile, on entend que chaque élément filaire porteur est non métallique, et est par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 µm, par exemple 10 µm.

Dans un autre mode de réalisation, chaque élément filaire porteur est métallique, par exemple un assemblage de monofilaments métalliques, chaque monofilament métallique présentant un diamètre typiquement inférieur à 50 µm, par exemple 10 µm. Dans un mode de réalisation, chaque élément filaire porteur est constitué d'un assemblage de plusieurs monofilaments métalliques. Dans un autre mode de réalisation, chaque élément filaire porteur est constitué d'un monofilament métallique.

Dans un mode de réalisation, chaque élément filaire porteur s'étend alternativement du premier tissu vers le deuxième tissu ou tricot et du deuxième tissu ou tricot vers le premier tissu lorsqu'on se déplace le long de l'élément filaire porteur.

### Premier tissu de l'assemblage selon l'invention

Dans un mode de réalisation, le premier tissu comprend des premiers éléments filaires, dits de trame, sensiblement parallèles entre eux et s'étendant selon une première direction, dite de trame, et s'entrecroisant avec les premiers éléments filaires de chaine. Dans ce mode de réalisation préférentiel, le premier tissu comprend, de manière connue pour l'homme du métier, une armure caractérisant l'entrecroisement des premiers éléments filaires de chaine et de trame. Selon les modes de réalisation, cette armure est de type toile, serge ou satin.

De façon préférée, afin de conférer des bonnes propriétés mécaniques dans une utilisation en pneumatique, l'armure est de type toile.

Avantageusement, les premières directions de chaine et de trame forment l'une avec l'autre un angle allant de 70° à 90°, de préférence sensiblement égal à 90°.

Les caractéristiques mécaniques de tels tissus telles que leur rigidité en extension et leur force à force maximale en traction, selon le sens des éléments filaires de chaine ou de trame, dépendent des caractéristiques des éléments filaires, telles que, pour des éléments filaires textiles, le titre, exprimé en tex ou g/1000 m, la ténacité, exprimée en cN/tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

Dans un mode de réalisation, chaque élément filaire porteur comprend une première portion filaire d'ancrage de chaque élément filaire porteur dans le premier tissu prolongeant la portion filaire porteuse dans le premier tissu.

Préférentiellement, chaque première portion filaire d'ancrage est entrelacée avec le premier tissu. Un tel assemblage présente l'avantage de pouvoir être fabriqué en une seule étape. Toutefois, il est également possible d'envisager de fabriquer l'assemblage en deux étapes, une première étape de fabrication du premier tissu et une deuxième étape d'entrelacement du ou des éléments filaires porteurs avec le premier tissu. Dans les deux cas, l'entrelacement de chaque élément porteur avec le premier tissu permet d'assurer l'ancrage mécanique de chaque élément porteur dans le premier tissu et ainsi de conférer les propriétés mécaniques souhaitées à la structure porteuse.

Dans un mode de réalisation, afin d'assurer l'ancrage mécanique de la portion filaire d'ancrage, chaque première portion filaire d'ancrage est enroulée au moins en partie autour d'au moins un premier élément filaire du premier tissu.

Avantageusement, le premier tissu comprend :
- des premiers éléments filaires, dits de chaine, sensiblement parallèles entre eux et s'étendant selon une première direction, dite de chaine, sensiblement parallèle à la première direction générale, et
- des premiers éléments filaires, dits de trame, sensiblement parallèles entre eux et s'étendant selon une première direction, dite de trame, et s'entrecroisant avec les premiers éléments filaires de chaine,
chaque première portion filaire d'ancrage est enroulée au moins en partie autour d'au moins un premier élément filaire de trame du premier tissu, de préférence autour d'au moins deux premiers éléments filaire de trame adjacents selon la première direction générale.

Dans un mode de réalisation, chaque première portion filaire d'ancrage s'étend selon une direction sensiblement parallèle à la première direction générale.

De préférence, chaque première portion filaire d'ancrage passe alternativement d'une face du premier tissu à l'autre face du premier tissu entre deux premiers éléments filaires de trame adjacents autour desquels la première portion filaire d'ancrage s'enroule.

Très avantageusement, les premiers éléments filaires de chaine s'étendent continûment sur toute la longueur du premier tissu. Ainsi, les éléments filaires de chaine ne présentent aucune discontinuité sur leur longueur, à l'exception des éventuels raccords entre deux extrémités de deux éléments filaires qui forment un élément filaire de chaine néanmoins continu.

Dans un mode de réalisation préféré permettant d'assurer efficacement la conformation du premier tissu, le premier tissu comprend :
- au moins une zone droite transversale d'un premier groupe de zone(s) droite(s) transversale(s), chaque zone droite transversale du premier groupe de zone(s) droite(s) transversale(s) étant agencée de façon à permettre un allongement avec rupture partielle d'au moins une zone droite transversale du premier groupe de zone(s) droite(s) transversale(s) selon la première direction générale, de préférence un allongement avec rupture partielle de chaque zone droite transversale du premier groupe de zone(s) droite(s) transversale(s) selon la première direction générale,
- au moins une zone droite transversale d'un deuxième groupe de zone (s) droite(s) transversale(s), chaque zone droite transversale du deuxième groupe de zone(s) droite(s) transversale(s) étant agencée de façon à empêcher une rupture de chaque zone droite transversale du deuxième groupe de zone(s) droite(s) transversale(s).
chaque zone droite transversale de chaque premier et deuxième groupe de zone(s) droite(s) transversale(s) s'étendant sur toute la largeur du premier tissu.

De préférence, chaque zone droite transversale du premier groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, permettre un allongement avec rupture partielle d'au moins une zone droite transversale du premier groupe de zone(s) droite(s) transversale(s) selon la première direction générale, de préférence de chaque zone droite transversale du premier groupe de zone(s) droite(s) transversale(s) selon la première direction générale.

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, empêcher une rupture de chaque zone droite transversale du deuxième groupe de zone(s) droite(s) transversale(s).

Dans un mode de réalisation permettant d'obtenir des zones droites transversales du deuxième groupe de zone(s) droite(s) transversale(s) indéformables, chaque zone droite transversale du deuxième groupe de zone(s) droite(s) transversale(s) est agencée de façon à empêcher un allongement de chaque zone droite transversale du deuxième groupe de zone(s) droite(s) transversale(s) selon la première direction générale.

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, empêcher un allongement de chaque zone droite transversale du deuxième groupe de zone(s) droite(s) transversale(s).

Dans un mode de réalisation préféré utilisant des zones droites transversales du deuxième groupe de zone(s) droite(s) transversale(s) indéformables, chaque zone droite transversale du deuxième groupe de zone(s) droite(s) transversale(s) est agencée de façon à empêcher un allongement de chaque premier élément filaire de chaine selon la première direction générale dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, empêcher un allongement de chaque premier élément filaire de chaine selon la première direction générale dans chaque zone droite transversale du deuxième groupe de zone(s) droite(s) transversale(s).

Dans un autre mode de réalisation permettant d'obtenir des zones droites transversales du deuxième groupe de zone(s) droite(s) transversale(s) déformables, chaque zone droite transversale du deuxième groupe de zone(s) droite(s) transversale(s) est agencée de façon à permettre un allongement de chaque zone droite transversale du deuxième groupe de zone(s) droite(s) transversale(s) selon la première direction générale, de préférence de façon à permettre un allongement de chaque zone droite transversale du deuxième groupe de zone(s) droite(s) transversale(s) selon la première direction générale au plus égal à 20%, de préférence à 15%, et plus préférentiellement à 10% de l'allongement de chaque zone droite transversale du premier groupe de zone(s) droite(s) transversale(s) selon la première direction générale.

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, permettre un allongement de chaque zone droite transversale du deuxième groupe de zone(s) droite(s) transversale(s), de préférence de façon à permettre un allongement de chaque zone droite transversale du deuxième groupe de zone(s) droite(s) transversale(s) selon la première direction générale au plus égal à 20%, de préférence à 15%, et plus préférentiellement à 10% de l'allongement de chaque zone droite transversale du premier groupe de zone(s) droite(s) transversale(s) selon la première direction générale.

Dans un mode de réalisation préféré utilisant des zones droites transversales du deuxième groupe de zone(s) droite(s) transversale(s) déformables, chaque zone droite transversale du deuxième groupe de zone(s) droite(s) transversale(s) est agencée de façon à permettre un allongement de chaque premier élément filaire de chaine selon la première direction générale dans chaque zone droite transversale du deuxième groupe de zone(s) droite(s) transversale(s), de préférence de façon à permettre un allongement de chaque premier élément filaire de chaine selon la première direction générale dans chaque zone droite transversale du deuxième groupe de zone(s) droite(s) transversale(s) au plus égal à 20%, de préférence à 15%, et plus préférentiellement à 10% de l'allongement de chaque premier élément filaire de chaine selon la première direction générale dans chaque zone droite transversale du premier groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, permettre un allongement de chaque premier élément filaire de chaine selon la première direction générale dans chaque zone droite transversale du deuxième groupe de zone(s) droite(s) transversale(s), de préférence de façon à permettre un allongement de chaque premier élément filaire de chaine selon la première direction générale dans chaque zone droite transversale du deuxième groupe de zone(s) droite(s) transversale(s) au plus égal à 20%, de préférence à 15%, et plus préférentiellement à 10% de l'allongement de chaque premier élément filaire de chaine selon la première direction générale dans chaque zone droite transversale du premier groupe de zone(s) droite(s) transversale(s).

Par définition, une zone droite transversale est délimitée longitudinalement par deux droites imaginaires sensiblement perpendiculaires à la première direction générale du tissu. Une zone droite transversale s'étend sur toute la largeur du tissu, c'est-à-dire que la zone droite transversale est délimitée transversalement par les bords longitudinaux du tissu.

Par rupture partielle, on entend une rupture d'au moins un organe filaire de chaque élément filaire de chaine de la zone. On entend également qu'il s'agit d'une rupture qui n'est que partielle et donc pas totale, c'est-à-dire pas une rupture de tous les organes constituants chaque élément filaire de chaine de la zone. Dans le cas des premiers éléments filaires de chaine conformes à l'invention, on comprend qu'une rupture partielle d'une zone est une rupture du deuxième organe filaire sans rupture du premier organe filaire de chaque élément filaire de chaine de la zone. Une rupture partielle d'une zone ne doit pas être confondue avec une rupture de certains éléments filaires de la zone et une non rupture d'autres éléments filaires de la zone, ce qui ne permettrait pas de conformer correctement le premier tissu.

Dans la présente demande, une rupture partielle est donc différente d'une rupture qui doit être comprise comme une rupture totale, c'est-à-dire une interruption totale de chaque élément filaire ou portion filaire concerné contrairement à une rupture partielle dans laquelle il n'y a pas d'interruption totale de chaque élément filaire ou portion filaire concerné.

Dans un mode de réalisation, chaque zone droite transversale du premier groupe de zone(s) droite(s) transversale(s) est agencée de façon à permettre un allongement avec rupture partielle de chaque premier élément filaire de chaine selon la première direction générale dans au moins une zone droite transversale du premier groupe de zone(s) droite(s) transversale(s), de préférence un allongement avec rupture partielle de chaque premier élément filaire de chaine selon la première direction générale dans chaque zone droite transversale du premier groupe de zone(s) droite(s) transversale(s).

De préférence, chaque zone droite transversale du premier groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L permettre un allongement avec rupture partielle de chaque premier élément filaire de chaine selon la première direction générale dans au moins une zone droite transversale du premier groupe de zone(s) droite(s) transversale(s), de préférence un allongement avec rupture partielle de chaque premier élément filaire de chaine selon la première direction générale dans chaque zone droite transversale du premier groupe de zone(s) droite(s) transversale(s).

Dans un mode de réalisation préféré, chaque zone droite transversale du premier groupe de zone(s) droite(s) transversale(s) est agencée de façon à permettre un allongement sans rupture du premier organe filaire de chaque premier élément filaire de chaine selon la première direction générale dans chaque zone droite transversale du premier groupe de zone(s) droite(s) transversale(s) et entrainer au moins une rupture du deuxième organe filaire de chaque premier élément filaire de chaine dans au moins une zone droite transversale du premier groupe de zone(s) droite(s) transversale(s), de préférence dans chaque zone droite transversale du premier groupe de zone(s) droite(s) transversale(s).

De préférence, chaque zone droite transversale du premier groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L permettre un allongement sans rupture du premier organe filaire de chaque premier élément filaire de chaine selon la première direction générale dans chaque zone droite transversale du premier groupe de zone(s) droite(s) transversale(s) et entrainer au moins une rupture du deuxième organe filaire de chaque premier élément filaire de chaine dans au moins une zone droite transversale du premier groupe de zone(s) droite(s) transversale(s), de préférence dans chaque zone droite transversale du premier groupe de zone(s) droite(s) transversale(s).

Optionnellement, le premier tissu comprenant des premiers éléments filaires, dits de trame, sensiblement parallèles entre eux et s'entrecroisant avec les premiers éléments filaires de chaine, chaque zone droite transversale du premier groupe de zone(s) droite(s) transversale(s) est agencée de façon à permettre un écartement des éléments filaire de trame les uns par rapport aux autres selon la première direction générale dans chaque zone droite transversale du premier groupe de zone(s) droite(s) transversale(s).

De préférence, chaque zone droite transversale du premier groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, permettre un écartement des éléments filaire de trame les uns par rapport aux autres selon la première direction générale dans chaque zone droite transversale du premier groupe de zone(s) droite(s) transversale(s).

Dans un mode de réalisation, chaque zone droite transversale du deuxième groupe de zone(s) droite(s) transversale(s) est agencée de façon à empêcher une rupture de chaque premier élément filaire de chaine dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, empêcher une rupture de chaque premier élément filaire de chaine dans chaque zone droite transversale du deuxième groupe de zone(s) droite(s) transversale(s).

Dans un mode de réalisation préféré, chaque zone droite transversale du deuxième groupe de zone(s) droite(s) transversale(s) est agencée de façon à empêcher :
- une rupture du premier organe filaire de chaque premier élément filaire de chaine dans chaque zone droite transversale du deuxième groupe de zone(s) droite(s) transversale(s), et
- une rupture du deuxième organe filaire de chaque premier élément filaire de chaine dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, empêcher :
- une rupture du premier organe filaire de chaque premier élément filaire de chaine dans chaque zone droite transversale du deuxième groupe de zone(s) droite(s) transversale(s), et
- une rupture du deuxième organe filaire de chaque premier élément filaire de chaine dans chaque zone droite transversale du deuxième groupe de zone(s) droite(s) transversale(s).

Optionnellement, dans le mode de réalisation utilisant des zones droites transversales du deuxième groupe de zone(s) droite(s) transversale(s) indéformables, le premier tissu comprenant des premiers éléments filaires, dits de trame, sensiblement parallèles entre eux et s'entrecroisant avec les premiers éléments filaires de chaine, chaque zone droite transversale du deuxième groupe de zone(s) droite(s) transversale(s) est agencée de façon à empêcher un écartement des premiers éléments filaire de trame les uns par rapport aux autres selon la première direction générale dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu (26) selon la première direction générale, et pour tout allongement du premier tissu selon la première direction générale inférieur ou égal à (2π x H) / L, empêcher un écartement des premiers éléments filaire de trame les uns par rapport aux autres selon la première direction générale dans chaque zone droite transversale du deuxième groupe de zone(s) droite(s) transversale(s).

Optionnellement, dans le mode de réalisation utilisant des zones droites transversales du deuxième groupe de zone(s) droite(s) transversale(s) déformables, chaque zone droite transversale du deuxième groupe de zone(s) droite(s) transversale(s) est agencée de façon à permettre un écartement des premiers éléments filaire de trame les uns par rapport aux autres selon la première direction générale dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur ou égal à (2π x H) / L, permettre un écartement des premiers éléments filaire de trame les uns par rapport aux autres selon la première direction générale dans chaque zone droite transversale du deuxième groupe de zone(s) droite(s) transversale(s).

Dans les modes de réalisation préférés décrits ci-dessus, chaque zone droite transversale du premier groupe est une zone dite déformable. De telles zones sont déformables dans les conditions de conformation et participent à la conformabilité du premier tissu. Au contraire, chaque zone droite transversale du deuxième groupe est une zone non rompable. De telles zones sont non rompables dans les conditions de conformation et ne participent pas ou peu à la conformabilité du premier tissu. Ainsi, chaque zone droite transversale dite déformable du premier groupe se déforme suffisamment pour permettre la conformation de l'assemblage et compense le non allongement ou le faible allongement des zones droites transversales dites non rompables du deuxième groupe. L'allongement à force maximale de l'ensemble des zones droites transversales du premier groupe sera d'autant plus grand que les zones droites transversales dites déformables du premier groupe sont courtes et peu nombreuses par rapport aux zones droites transversales non rompables du deuxième groupe. A l'échelle des éléments filaires de chaine, les portions de chaque premier élément filaire de chaine situées dans chaque zone droite transversale dite déformable du premier groupe se déforment suffisamment pour permettre la conformation de l'assemblage et compense le non allongement ou le faible allongement des portions de chaque premier élément filaire de chaine situées dans les zones droites transversales dites non rompables du deuxième groupe.

Aussi, chaque zone dite déformable du premier groupe est déformable sous une contrainte relativement faible ce qui permet, lors du procédé de fabrication du pneumatique, d'utiliser une contrainte de conformation adaptée ne risquant pas de détériorer l'ébauche au contraire de chaque zone dite indéformable et non rompable du deuxième groupe.

Ainsi, dans un mode de réalisation préféré, toutes les zones droites transversales du premier groupe de zone(s) droite(s) transversale(s) étant identiques, l'allongement à force maximale Art1 de chaque zone droites transversales du premier groupe de zone(s) droite(s) transversale(s) selon la première direction générale vérifie Art1 > (2π x H) / SLd1 avec SLd1 étant la somme des longueurs au repos Ld1 de toutes les zones droites transversales du premier groupe de zone(s) droite(s) transversale(s). L'allongement à la force maximale est mesuré conformément à la norme NF EN ISO 13934-1 de juillet 2013 sur des échantillons de zones droites transversales du premier groupe de zone(s) droite(s) transversale(s).

Ainsi, avantageusement, dans le mode de réalisation précédent, l'allongement à rupture Arc de chaque premier élément filaire de chaine vérifie Arc > (2π x H) / SLd1. L'allongement à rupture Arc est mesuré selon la norme ASTM D885/D885 MA de janvier 2010. L'allongement à rupture Arc de chaque premier élément filaire de chaine est l'allongement nécessaire pour obtenir la rupture des premier et deuxième organes filaires.

De préférence, pour tout allongement de chaque zone droite transversale du premier groupe de zone(s) droite(s) transversale(s) selon la première direction générale inférieur ou égal à (2π x H) / SLd1, le premier tissu développe une force, exprimée en N, selon la première direction générale inférieure ou égale à (P0 x (L/2π + H) x I) / 2 avec I étant la largeur du premier tissu exprimée en m, P0=100000 et SLd1 étant la somme des longueurs au repos de toutes les zones droites transversales du premier groupe de zone(s) droite(s) transversale(s) exprimée en m. L'allongement, la contrainte exercée et la force développée sont déterminés conformément à la norme NF EN ISO 13934-1 de juillet 2013.

Dans un mode de réalisation préféré, chaque élément filaire porteur comprenant une première portion filaire d'ancrage de chaque élément filaire porteur dans le premier tissu prolongeant la portion filaire porteuse dans le premier tissu :
- chaque zone droite transversale du premier groupe de zone(s) droite(s) transversale(s) est dépourvue de toute première portion filaire d'ancrage sur toute la largeur du premier tissu,
- chaque zone droite transversale du deuxième groupe de zone(s) droite(s) transversale(s) comprend au moins une première portion filaire d'ancrage sur la largeur du premier tissu.

De préférence, chaque zone droite transversale du deuxième groupe de zone(s) droite(s) transversale(s) est agencée de façon à empêcher une rupture de chaque première portion filaire d'ancrage.

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur à ou égal à (2π x H) / L, empêcher une rupture de chaque première portion filaire d'ancrage.

Ainsi, chaque zone droite comprenant au moins une première portion filaire d'ancrage non rompable et ce, même sous une contrainte relativement élevée ce qui permet, lors du procédé de fabrication du pneumatique, d'utiliser une contrainte de conformation adaptée ne risquant pas de détériorer l'ébauche.

Dans un mode de réalisation, chaque zone droite transversale du deuxième groupe de zone(s) droite(s) transversale(s) est agencée de façon à empêcher un allongement de chaque première portion filaire d'ancrage selon la première direction générale.

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur à ou égal à (2π x H) / L, empêcher un allongement de chaque première portion filaire d'ancrage selon la première direction générale.

Dans un autre mode de réalisation, chaque zone droite transversale du deuxième groupe de zone(s) droite(s) transversale(s) est agencée de façon à permettre un allongement de chaque première portion filaire d'ancrage selon la première direction générale.

De préférence, chaque zone droite transversale du deuxième groupe de zone(s) droite(s) transversale(s) est agencée de façon à, pour toute contrainte non nulle inférieure ou égale à (P0 x (L/2π + H) x l) / 2, l étant exprimée en m et P0=100000, exercée sur le premier tissu selon la première direction générale, et pour tout allongement du premier tissu selon la première direction générale inférieur à ou égal à (2π x H) / L, permettre un allongement de chaque première portion filaire d'ancrage selon la première direction générale.

Avantageusement, P0=80000, de préférence P0=60000, plus préférentiellement P0=40000. Plus P0 est petit, plus il est possible d'utiliser des contraintes petites lors du procédé de fabrication du pneumatique et moins on risque de détériorer l'ébauche lors de ce procédé.

De façon préférée, chaque zone droite transversale du premier groupe de zone(s) droite(s) transversale(s) alterne, selon la première direction générale, avec une zone droite transversale du deuxième groupe de zone(s) droite(s) transversale(s).

Ainsi, à l'échelle du premier tissu, on obtient une déformation homogène de l'ensemble du premier tissu, cette déformation étant d'autant plus homogène que la longueur au repos de chaque zone droite transversale selon la première direction générale est petite. Par longueur au repos d'une zone droite transversale selon la première direction générale, on entend la longueur de la zone selon la direction longitudinale en l'absence de toute contrainte extérieure exercée sur la zone (autre que la pression atmosphérique). Une zone droite transversale au repos selon la première direction générale n'est ni en extension ni en compression selon cette direction et présente donc un allongement nul selon cette direction.

### Deuxième structure de deuxièmes éléments filaires de l'assemblage selon l'invention

Avantageusement, le deuxième tissu ou tricot s'étendant selon une deuxième direction générale, la deuxième direction générale est sensiblement parallèle à la première direction principale.

Dans un mode de réalisation, le deuxième tissu ou tricot est un deuxième tissu comprenant :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine.

Dans ce mode de réalisation préférentiel, le deuxième tissu comprend, de manière connue pour l'homme du métier, une armure caractérisant l'entrecroisement des deuxièmes éléments filaires de chaine et de trame. Selon les modes de réalisation, cette armure est de type toile, serge ou satin. De façon préférée, afin de conférer des bonnes propriétés mécaniques dans une utilisation en pneumatique, l'armure est de type toile.

Avantageusement, les deuxièmes directions de chaine et de trame forment l'une avec l'autre un angle allant de 70° à 90°, de préférence sensiblement égal à 90°.

Avantageusement, le deuxième tissu s'étendant selon une deuxième direction générale, la deuxième direction de chaine des deuxièmes éléments filaires étant sensiblement parallèle à la deuxième direction générale. Un tel deuxième tissu permet un procédé de fabrication de l'assemblage et du pneumatique largement facilité.

Dans un autre mode de réalisation, le deuxième tissu ou tricot est un tricot comprenant des boucles entrelacées.

Dans un mode de réalisation, chaque élément filaire porteur comprend une deuxième portion filaire d'ancrage de chaque élément filaire porteur dans le deuxième tissu ou tricot prolongeant la portion filaire porteuse dans le deuxième tissu ou tricot.

Préférentiellement, chaque deuxième portion filaire d'ancrage est entrelacée avec le deuxième tissu ou tricot. Un tel assemblage présente l'avantage de pouvoir être fabriqué en une seule étape. Toutefois, il est également possible d'envisager de fabriquer l'assemblage en deux étapes, une première étape de fabrication du deuxième tissu ou tricot et une deuxième étape d'entrelacement du ou des éléments filaires porteurs avec le deuxième tissu ou tricot. Dans les deux cas, l'entrelacement de chaque élément porteur avec le deuxième tissu ou tricot permet d'assurer l'ancrage mécanique de chaque élément porteur dans le deuxième tissu ou tricot et ainsi de conférer les propriétés mécaniques souhaitées à la structure porteuse.

Dans un mode de réalisation, afin d'assurer l'ancrage mécanique de la portion filaire d'ancrage, chaque deuxième portion filaire d'ancrage est enroulée au moins en partie autour d'au moins un deuxième élément filaire du deuxième tissu ou tricot.

Avantageusement, le deuxième tissu ou tricot est un deuxième tissu comprenant :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine,
chaque deuxième portion filaire d'ancrage est enroulée au moins en partie autour d'au moins un deuxième élément filaire de trame du deuxième tissu, de préférence autour d'au moins deux deuxièmes éléments filaire de trame adjacents selon la deuxième direction générale.

Dans un mode de réalisation, chaque deuxième portion filaire d'ancrage s'étend selon une direction sensiblement parallèle à la deuxième direction générale.

De préférence, chaque deuxième portion filaire d'ancrage passe alternativement d'une face du deuxième tissu à l'autre face du deuxième tissu entre deux deuxièmes éléments filaires de trame adjacents autour desquels la deuxième portion filaire d'ancrage s'enroule.

Très avantageusement, les deuxièmes éléments filaires de chaine s'étendent continûment sur toute la longueur du deuxième tissu.

### Assemblage imprégné selon l'invention.

Un autre objet de l'invention est un assemblage imprégné, de préférence pour pneumatique, comprenant :
- des première et deuxième couches respectivement de première et deuxième compositions polymériques;
- un assemblage tel que défini ci-dessus dans lequel :
   - le premier tissu est imprégné au moins en partie de la première composition polymérique;
   - le deuxième tissu ou tricot est imprégné au moins en partie de la deuxième composition polymérique.

Chaque premier tissu et deuxième tissu ou tricot de l'assemblage est imprégné par la composition polymérique correspondante. Ainsi, on peut envisager plusieurs modes de réalisation. Dans un mode de réalisation préféré, chaque première et deuxième structure d'éléments filaires comprend des premier et deuxième tissus imprégnés par la composition polymérique correspondante. Dans encore un autre mode de réalisation, la première structure de premiers éléments filaires comprend un premier tissu imprégné par la première composition polymérique et la deuxième structure de deuxièmes éléments filaires comprend un deuxième tricot imprégné par la deuxième composition.

Par imprégné, on entend que chaque composition polymérique pénètre au moins en surface la structure d'éléments filaires. On peut donc avoir une imprégnation unifaciale avec une couverture d'une face de la structure d'éléments filaires par la composition polymérique ou une imprégnation bifaciale avec une couverture des deux faces de la structure d'éléments filaires par la composition polymérique. Dans les deux cas, l'imprégnation permet de créer un ancrage mécanique grâce à la pénétration de la composition polymérique dans les interstices présents dans de la structure d'éléments filaires.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver soit à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

### Pneumatique selon l'invention

L'invention a encore pour objet un pneumatique de révolution autour d'un axe principal comprenant :
- une première structure de révolution comprenant un premier tissu comprenant des premiers éléments filaires, dits de chaine, sensiblement parallèles entre eux et s'étendant selon une première direction, dite de chaine, la direction circonférentielle du pneumatique formant un angle inférieur ou égal à 10° avec la première direction de chaine, chaque premier élément filaire de chaine comprenant des premier et deuxième organes filaires,
- une deuxième structure de révolution comprenant un deuxième tissu ou tricot, la deuxième structure de révolution étant agencée radialement à l'intérieur de la première structure de révolution,
- une structure porteuse comprenant des éléments filaires porteurs reliant le premier tissu et le deuxième tissu ou tricot entre eux, chaque élément filaire porteur comprenant au moins une portion filaire porteuse s'étendant entre le premier tissu et le deuxième tissu ou tricot,
- un espace annulaire intérieur délimité radialement par une face interne du premier tissu et une face interne du deuxième tissu ou tricot, avec :
   ∘ H0 étant la hauteur radiale moyenne de l'espace annulaire intérieur lorsque chaque portion filaire porteuse est au repos,
   ∘ H étant la hauteur radiale moyenne de l'espace annulaire intérieur en l'absence de charge appliquée au pneumatique et en l'absence de pression dans le pneumatique, tel que H0 x K ≤ H avec K=0,50,
   pneumatique dans lequel :
- le premier organe filaire de chaque premier élément filaire de chaine présente, au moins sur une partie de sa longueur, un allongement non nul selon la première direction de chaine et est non rompu, et
- le deuxième organe filaire de chaque premier élément filaire de chaine est rompu en au moins un point de sa longueur.

Conformément à l'invention et comme expliqué ci-dessus, un tel pneumatique est facile à fabriquer.

Par portion filaire porteuse au repos, on entend une portion filaire porteuse qui n'est ni en extension ni en compression et présente donc un allongement nul. La portion filaire porteuse n'est alors soumise à aucune contrainte extérieure autre que son propre poids et le poids des éléments auxquels elle est liée.

Par hauteur radiale moyenne de l'espace annulaire intérieur, on entend la moyenne de la hauteur radiale correspondante mesurée en au moins 5 points différents circonférentiellement équi-répartis autour du pneumatique et mesurée dans le plan circonférentiel médian du pneumatique défini comme le plan qui est normal à l'axe de rotation du pneumatique et qui se situe à équidistance des structures de renfort de chaque bourrelet.

La première structure de révolution radialement extérieure du pneumatique est destinée à assurer, entre autres fonctions, la liaison de l'assemblage avec une structure de révolution de sommet. La deuxième structure de révolution radialement intérieure du pneumatique est destinée à assurer, entre autres fonctions, la liaison de l'assemblage, et donc du pneumatique, avec le moyen de montage.

La première structure de révolution radialement extérieure du pneumatique présente un axe de révolution confondu avec l'axe de rotation du pneumatique. La deuxième de révolution radialement intérieure du pneumatique est coaxiale à la première structure de révolution radialement extérieure du pneumatique.

En l'absence de charge appliquée au pneumatique et en l'absence de pression dans le pneumatique, l'espace annulaire intérieur a une hauteur radiale moyenne H. Lorsque le pneumatique est soumis à une charge radiale nominale Z_{N} et est en contact avec un sol plan par une surface de contact A, les éléments porteurs, reliés à la portion de la première structure de révolution radialement extérieure du pneumatique en contact avec le sol par l'intermédiaire du premier tissu, sont soumis à un flambage en compression et au moins une partie des éléments porteurs, reliés à la portion de première structure de révolution radialement extérieure du pneumatique non en contact avec le sol, sont en tension.

Afin de supporter la charge appliquée, la densité surfacique moyenne DS de portions filaires porteuses par unité de surface de la première structure de révolution radialement extérieure, exprimée en 1/m2, étant au moins égale à (S/S_{E})* Z_{N} /(A*Fr), où S est la surface, en m2, de la face radialement intérieure d'une structure de révolution de sommet, S_{E} est la surface de liaison entre la face externe de la première structure de révolution radialement extérieure et la face radialement intérieure de la structure de révolution de sommet, en m2, Z_{N} est la charge radiale nominale, en N, appliquée au pneumatique, A est la surface de contact au sol, en m2, du pneumatique, et Fr la force à rupture, en N, de chaque portion porteuse. La charge radiale nominale Z_{N} est la charge recommandée pour l'utilisation du pneumatique. La surface de contact au sol A est la surface selon laquelle le pneumatique est écrasé sur le sol sous l'action de la charge radiale nominale Z_{N}.

L'expression selon laquelle DS est au moins égale à (S/S_{E})* Z_{N} /(A*Fr) traduit, en particulier, le fait que la densité surfacique moyenne DS des portions porteuses est d'autant plus forte que la charge radiale nominale Z_{N} élevée et/ou que le rapport de surfaces S_{E}/S, représentant le taux de recouvrement de la face radialement intérieure de la structure de révolution de sommet par la première structure de révolution radialement extérieure, est faible. La densité surfacique moyenne DS des portions porteuses est d'autant plus faible que la force à rupture en traction Fr d'une portion porteuse est élevée.

Une telle densité surfacique moyenne DS des portions porteuses permet, d'une part, aux éléments porteurs en extension en dehors de l'aire de contact de porter la charge radiale nominale Z_{N}, et, d'autre part, aux éléments porteurs en compression dans l'aire de contact de garantir une mise à plat de la bande de roulement, à la fois dans un plan circonférentiel et dans un plan méridien, améliorée par rapport aux pneumatiques connus de l'état de la technique.

Généralement, la densité surfacique des portions porteuses est constante à la fois selon la direction circonférentielle et selon la direction axiale, c'est-à-dire que la répartition des portions porteuses est uniforme à la fois circonférentiellement et axialement : la densité surfacique moyenne DS est donc égale à la densité surfacique constante. L'avantage d'une densité surfacique constante est de contribuer à conférer à la bande de roulement une géométrie quasi cylindrique, avec un effet dit de « mise en marguerite » diminué par rapport à d'autres pneumatiques de l'état de la technique.

Toutefois, dans certains modes de réalisation, la densité surfacique des portions porteuses peut être variable selon la direction circonférentielle et/ou selon la direction axiale, c'est-à-dire que la répartition des portions porteuses n'est pas nécessairement uniforme circonférentiellement et/ou axialement, d'où l'introduction de la caractéristique de densité surfacique moyenne DS de portions porteuses.

La densité surfacique DS des portions porteuses, exprimée en 1/m2, est avantageusement au moins égale à 3*(S/S_{E})* Z_{N} /(A*Fr). Une densité surfacique plus élevée de portions porteuses améliore l'homogénéisation des pressions dans l'aire de contact au sol et garantit un coefficient de sécurité plus élevé vis-à-vis de la charge appliquée et vis-à-vis de l'endurance.

La densité surfacique DS des portions porteuses, exprimée en 1/m2, est encore plus avantageusement au moins égale à 6*(S/S_{E})* Z_{N} /(A*Fr). Une densité surfacique encore plus élevée de portions porteuses améliore encore davantage l'homogénéisation des pressions dans l'aire de contact au sol et permet d'augmenter encore le coefficient de sécurité vis-à-vis de la charge appliquée et vis-à-vis de l'endurance.

La densité surfacique moyenne DS des portions porteuses, exprimée en 1/m2, est avantageusement au moins égale à 5000.

Dans certains modes de réalisation, la surface S_{E} est sensiblement égale à la surface S, c'est-dire que la première structure de révolution radialement extérieure recouvre intégralement la face radialement intérieure de la structure de révolution de sommet. Dans ces conditions, la densité surfacique moyenne DS des portions porteuses minimale est égale à Z_{N} /(A*Fr).

Dans d'autres modes de réalisation, S_{E} est différente de S et même S_{E}<S. En effet, la première structure de révolution n'est pas obligatoirement continue (axialement et/ou circonférentiellement) et peut être constituée de portions de structure d'éléments filaires juxtaposées : dans ce cas, la surface S_{E} est la somme des surfaces de liaison entre les faces externes de la première structure de révolution radialement extérieure et la face radialement intérieure de la structure de révolution de sommet. Ainsi, quand S_{E}<S, la première structure de révolution radialement extérieure ne recouvre pas intégralement c'est-à-dire ne recouvre que partiellement, la face radialement intérieure de la structure de révolution de sommet.

Cette conception permet avantageusement d'avoir un assemblage pouvant être fabriquée de façon indépendante et intégrée d'un seul bloc lors de la fabrication du pneumatique. L'assemblage utilisé peut être solidarisé à d'autres éléments du pneumatique par vulcanisation, collage ou tout autre procédé de liaison des première et deuxième couches des première et deuxième compositions polymériques.

Le premier tissu radialement extérieur et le deuxième tissu ou tricot radialement intérieur servent d'interfaces entre les éléments porteurs et les structures de révolution respectivement radialement extérieure et radialement intérieure qui ne sont donc pas en contact direct.

Grâce au pneumatique décrit, on observe une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une augmentation de la durée de vie en usure et de l'adhérence du pneumatique.

Enfin, la résistance au roulement d'un tel pneumatique est sensiblement diminuée, ce qui est favorable à une baisse de la consommation de carburant du véhicule.

En outre, dans un mode de réalisation préféré, H0x K ≤ H <H0, ce qui signifie que, en l'absence de charge appliquée au pneumatique et en l'absence de pression dans le pneumatique, les portions filaires porteuses des éléments filaires porteurs se trouvent dans un état replié.

Avantageusement, la première structure de révolution comprend une première couche d'une première composition polymérique, le premier tissu étant imprégné au moins en partie de la première composition polymérique et la deuxième structure de révolution comprend une deuxième couche d'une deuxième composition polymérique, le deuxième tissu ou tricot étant imprégné au moins en partie de la deuxième composition polymérique.

Chaque première et deuxième composition polymérique permet d'assurer la cohésion physico-chimique de l'assemblage avec les autres éléments du pneumatique.

Dans un mode de réalisation, le pneumatique comprend :
- une structure de révolution de sommet agencée radialement à l'extérieur de la première structure de révolution ;
- deux flancs reliant entre elles chaque extrémité axiale de la première structure de révolution et chaque extrémité axiale de la deuxième structure de révolution, les deux flancs délimitant axialement l'espace annulaire intérieur ; l'espace annulaire intérieur formant une cavité apte à être pressurisée par un gaz de gonflage.

De façon préférentielle, chaque flanc ayant une longueur curviligne L_{F}, la longueur curviligne L_{F} de chaque flanc est avantageusement au moins égale à 1.05 fois, de préférence, 1.15 fois la hauteur radiale moyenne H de l'espace annulaire intérieur. Encore plus avantageusement, la longueur curviligne L_{F} de chaque flanc est au moins égale à 1.3 fois et au plus égale à 1.6 fois la hauteur radiale moyenne H de l'espace annulaire intérieur. Cette caractéristique de longueur de flanc garantit que la déformation du flanc ne va pas perturber la mise à plat méridienne du pneumatique en raison d'une trop faible courbure.

Avantageusement, les flancs ne sont pas liés directement à l'assemblage et de préférence ne sont pas liés directement aux éléments porteurs. Les flancs participent en partie au port de la charge, selon leur propre rigidité structurelle. Toutefois, les flancs ont un comportement mécanique indépendant et n'interfèrent pas dans le comportement mécanique de la structure porteuse. Les flancs comprennent généralement au moins un matériau élastomérique et peuvent comprendre éventuellement une armature de renforcement.

Dans le cas d'une pressurisation effective par un gaz de gonflage, le pneumatique présente alors une rigidité pneumatique, due à la pression, qui va également contribuer au port de la charge appliquée. Usuellement, pour une utilisation sur un véhicule de tourisme, la pression est au moins égale à 0.5 bar, de préférence au moins égale à 1 bar. Plus la pression est élevée, plus la contribution de la rigidité pneumatique au port de la charge appliquée est élevée, et, corrélativement, plus la contribution de la rigidité structurelle de la structure porteuse et/ou des flancs et/ou des première et deuxième structures de révolution au port de la charge appliquée est faible.

Dans un mode de réalisation préféré, le pneumatique comprend une structure de révolution de carcasse agencée radialement entre la première structure de révolution et la structure de révolution de sommet.

Avantageusement, la structure de révolution de carcasse s'étend continûment entre chaque extrémité axiale de la deuxième structure de révolution radialement au travers de chaque flanc et axialement sur toute la largeur axiale de la première structure de révolution. Ainsi, une telle structure de carcasse permet de reprendre une partie des efforts exercés par la pression à l'intérieur du pneumatique.

Dans un mode de réalisation particulièrement préféré, la structure de révolution de carcasse comprend une nappe de carcasse comprenant des éléments de renforts de carcasse sensiblement parallèles les uns aux autres selon une direction faisant un angle supérieur ou égal à 65°, de préférence supérieur ou égal à 80° et plus préférentiellement sensiblement égal à 90° avec la direction circonférentielle du pneumatique. Une telle structure de révolution de carcasse favorise la déformation uniforme du premier tissu, et dans les modes de réalisation correspondants, la déformation uniforme des zones droites transversales dites déformables. Les inventeurs émettent l'hypothèse que les efforts de déformation selon la première direction générale du premier tissu sont, lors du procédé de fabrication du pneumatique, transmis le long du premier tissu par la structure de révolution de carcasse.

Avantageusement, la structure de révolution de sommet comprend deux nappes de travail, chaque nappe de travail comprenant des éléments de renfort de travail sensiblement parallèles les uns aux autres selon une direction faisant un angle allant de 15° et 40°, de préférence allant de 20° à 30° avec la direction circonférentielle du pneumatique, les éléments de renfort de travail étant croisés d'une nappe de travail par rapport à l'autre.

Avantageusement, la structure de révolution de sommet comprend une nappe de frettage comprenant des éléments de renfort filaires de frettage sensiblement parallèles les uns aux autres formant un angle au plus égal à 10°, de préférence allant de 5° à 10° avec la direction circonférentielle du pneumatique.

Dans un mode de réalisation préféré, la nappe de frettage est agencée radialement à l'extérieur des nappes de travail.

Dans un mode de réalisation préféré permettant d'assurer efficacement la conformation du premier tissu, le premier tissu comprend :
- au moins une zone droite transversale d'un premier groupe de zone(s) droite(s) transversale(s), chaque zone droite transversale du premier groupe de zone(s) droite(s) transversale(s) présentant un allongement non nul selon la direction circonférentielle du pneumatique et étant partiellement rompue,
- au moins une zone droite transversale d'un deuxième groupe de zone (s) droite(s) transversale(s), chaque zone droite transversale du deuxième groupe de zone(s) droite(s) transversale(s) étant non rompu,
chaque zone droite transversale de chaque premier et deuxième groupe de zone(s) droite(s) transversale(s) s'étendant sur toute la largeur du premier tissu.

Dans un mode de réalisation permettant d'obtenir des zones droites transversales du deuxième groupe de zone (s) droite(s) transversale(s) indéformables, chaque zone droite transversale du deuxième groupe de zone (s) droite(s) transversale(s) présente un allongement sensiblement nul selon la direction circonférentielle du pneumatique.

Dans un mode de réalisation préféré utilisant des zones droites transversales du deuxième groupe de zone(s) droite(s) transversale(s) indéformables, chaque premier élément filaire de chaine de chaque zone droite transversale du deuxième groupe de zone(s) droite(s) transversale(s) présente un allongement sensiblement nul selon la direction circonférentielle du pneumatique.

Dans un mode de réalisation, chaque premier élément filaire de chaine de chaque zone droite transversale du premier groupe de zone(s) droite(s) transversale(s) est partiellement rompu.

Dans un mode de réalisation préféré, le premier organe filaire de chaque premier élément filaire de chaine de chaque zone droite transversale du premier groupe de zone(s) droite(s) transversale(s) présente un allongement non nul selon la première direction de chaine et est non rompu, et le deuxième organe filaire de chaque premier élément filaire de chaine de chaque zone droite transversale du premier groupe de zone(s) droite(s) transversale(s) est rompu en au moins un point de sa longueur dans au moins une zone droite transversale du premier groupe de zone(s) droite(s) transversale(s), de préférence dans chaque zone droite transversale du premier groupe de zone(s) droite(s) transversale(s).Dans un mode de réalisation préféré, chaque premier élément filaire de chaine dans chaque zone droite transversale du deuxième groupe de zone(s) droite(s) transversale(s) est non rompu.

Dans un mode de réalisation préféré, le premier organe filaire et le deuxième organe filaire de chaque premier élément filaire de chaine de chaque zone droite transversale du deuxième groupe de zone(s) droite(s) transversale(s) sont non rompus.

Dans ces modes de réalisation préférés, toutes les zones droites transversales du premier groupe de zone(s) droite(s) transversale(s) étant identiques, l'allongement de chaque zone droite transversale du premier groupe de zone(s) droite(s) transversale(s) selon la première direction générale est sensiblement égal à (2π x H) / SLd1 avec SLd1 étant la somme des longueurs au repos Ld1 de toutes les zones droites transversales du premier groupe de zone(s) droite(s) transversale(s). L'allongement est mesuré conformément à la norme NF EN ISO 13934-1 de juillet 2013. La longueur allongée de chaque zone droite transversale du premier groupe de zone(s) droite(s) transversale(s) selon la première direction général est sensiblement égale à ((2π x H) + SLd1)/N avec N étant le nombre de zones droites transversales du premier groupe de zone(s) droite(s) transversale(s) comprise sur la circonférence du pneumatique et par enroulement circonférentiel de premier tissu autour de l'axe principal de révolution du pneumatique et SLd1 étant la somme des longueurs au repos Ld1 des zones droites transversales du premier groupe de zone(s) droite(s) transversale(s) selon la première direction générale. Chaque zone droite transversale du premier groupe de zone(s) droite(s) transversale(s) étant allongée et partiellement rompue, la somme des longueurs allongées de chaque zone droite transversale du premier groupe de zone(s) droite(s) transversale(s) selon la première direction générale est sensiblement égale à ((2π x H) + SLd1).

Toujours dans ce mode de réalisation, toutes les zones droites transversales du deuxième groupe de zone(s) droite(s) transversale(s) étant identiques, l'allongement de chaque zone droite transversale du deuxième groupe de zone(s) droite(s) transversale(s) selon la première direction générale est sensiblement nul. L'allongement est mesuré conformément à la norme NF EN ISO 13934-1 de juillet 2013. La longueur de chaque zone droite transversale du deuxième groupe de zone(s) droite(s) transversale(s) selon la première direction générale est alors sensiblement égale à la longueur au repos de chaque zone droite transversale du deuxième groupe de zone(s) droite(s) transversale(s). Ainsi, la conformation du premier tissu est obtenue uniquement grâce à l'allongement des zones droites transversales dites déformables du premier groupe de zone(s) droite(s) transversale(s) sans contribution d'aucun allongement ni rupture des zones droites transversales dites indéformables et non rompables du deuxième groupe de zone(s) droite(s) transversale(s).

Dans un autre mode de réalisation permettant d'obtenir des zones droites transversales du deuxième groupe de zone (s) droite(s) transversale(s) déformables, chaque zone droite transversale du deuxième groupe de zone (s) droite(s) transversale(s) présente un allongement non nul selon la direction circonférentielle du pneumatique, de préférence un allongement selon la direction circonférentielle du pneumatique au plus égal à 20%, de préférence à 15%, et plus préférentiellement à 10% de l'allongement de chaque zone droite transversale du premier groupe de zone(s) droite(s) transversale(s) selon la direction circonférentielle du pneumatique.

Dans un mode de réalisation préféré utilisant des zones droites transversales du deuxième groupe de zone(s) droite(s) transversale(s) déformables, chaque premier élément filaire de chaine de chaque zone droite transversale du deuxième groupe de zone(s) droite(s) transversale(s) présente un allongement non nul selon la direction circonférentielle du pneumatique, de préférence un allongement selon la direction circonférentielle du pneumatique au plus égal à 20%, de préférence à 15%, et plus préférentiellement à 10% de l'allongement de chaque premier élément filaire de chaine dans chaque zone droite transversale du premier groupe de zone(s) droite(s) transversale(s) selon la direction circonférentielle du pneumatique.

Optionnellement, le premier tissu comprenant des premiers éléments filaires, dits de trame, sensiblement parallèles entre eux et s'entrecroisant avec les premiers éléments filaires de chaine, les premiers éléments filaire de trame de chaque zone droite transversale du premier groupe de zone(s) droite(s) transversale(s) présentent un écartement deux à deux selon la direction circonférentielle du pneumatique supérieur à l'écartement deux à deux selon la direction circonférentielle du pneumatique entre les premiers éléments filaire de trame de chaque zone droite transversale du deuxième groupe de zone(s) droite(s) transversale(s).

Par écartement deux à deux selon la direction circonférentielle du pneumatique, on entend l'écart selon la direction circonférentielle du pneumatique entre chaque couple d'éléments filaires adjacents.

Dans un mode de réalisation préféré, chaque élément filaire porteur comprenant une première portion filaire d'ancrage de chaque élément filaire porteur dans le premier tissu prolongeant la portion filaire porteuse dans le premier tissu:
- chaque zone droite transversale du premier groupe de zone(s) droite(s) transversale(s) est dépourvue de toute première portion filaire d'ancrage sur toute la largeur du premier tissu,
- chaque zone droite transversale du deuxième groupe de zone(s) droite(s) transversale(s) comprend au moins une première portion filaire d'ancrage sur la largeur du premier tissu.

Avantageusement, chaque portion filaire d'ancrage est non rompue.

Dans un mode de réalisation, chaque portion filaire d'ancrage présente un allongement sensiblement nul selon la direction circonférentielle du pneumatique.

Dans un autre mode de réalisation, chaque portion filaire d'ancrage présente un allongement non nul selon la direction circonférentielle du pneumatique.

Avantageusement, chaque zone droite transversale du premier groupe de zone(s) droite(s) transversale(s) alterne, selon la direction circonférentielle du pneumatique, avec une zone droite transversale du deuxième groupe de zone(s) droite(s) transversale(s).

Dans un premier mode de réalisation, la première direction de chaine et la direction circonférentielle du pneumatique forment un angle sensiblement nul.

Dans ce premier mode de réalisation, avantageusement, l'assemblage s'étend circonférentiellement sur au plus un tour complet autour de l'axe principal de façon à ce que la première structure de révolution forme un enroulement cylindrique axialement continu de l'assemblage entre les deux flancs du pneumatique. Ainsi, on utilise au plus un tour complet, c'est-à-dire au moins un tour mais moins de deux tours complets. La jonction entre les deux extrémités de l'assemblage peut être réalisée par recouvrement ou aboutage.

Dans un deuxième mode de réalisation, la première direction de chaine et la direction circonférentielle du pneumatique forment un angle sensiblement non nul inférieur à 10°, de préférence un angle sensiblement non nul inférieur ou égal à 5°

Dans ce deuxième mode de réalisation, avantageusement, l'assemblage s'étend circonférentiellement sur plusieurs tours complets autour de l'axe principal de façon à ce que la première structure de révolution forme un enroulement hélicoïdal axialement discontinu de l'assemblage entre les deux flancs du pneumatique. A l'inverse du mode de réalisation précédent, l'assemblage est enroulé sur plusieurs tours complets sans qu'il soit nécessaire de joindre les deux extrémités de l'assemblage.

Dans une première variante du mode de réalisation utilisant les zones droites transversales du premier groupe dites déformables et les zones droites transversales du deuxième groupe dites indéformables et non rompables, chaque extrémité circonférentielle de chaque zone droite transversale du premier groupe de zone(s) droite(s) transversale(s) d'un tour est axialement sensiblement alignée avec chaque extrémité circonférentielle de chaque zone droite transversale du premier groupe de zone(s) droite(s) transversale(s) de chaque tour adjacent. Ainsi, on permet une conformation axialement identique et plus aisée de l'assemblage.

Dans une deuxième variante du mode de réalisation utilisant les zones droites transversales du premier groupe dites déformables et les zones droites transversales du deuxième groupe dites indéformables et non rompables, chaque extrémité circonférentielle de chaque zone droite transversale du premier groupe de zone(s) droite(s) transversale(s) d'un tour se situe entre les prolongements axiaux des deux extrémités circonférentielles de chaque zone droite transversale du premier groupe de zone(s) droite(s) transversale(s) de chaque tour adjacent. Ainsi, on réparti axialement les zones déformables et les zones indéformables et non rompables.

Dans une troisième variante du mode de réalisation utilisant les zones droites transversales du premier groupe dites déformables et les zones droites transversales du deuxième groupe dites indéformables et non rompables, certaines extrémités circonférentielles de certaines zones droites transversales du premier groupe de zone(s) droite(s) transversale(s) d'un tour sont axialement sensiblement alignées avec des extrémités circonférentielles d'au moins une zone droite transversale du premier groupe de zone(s) droite(s) transversale(s) de chaque tour adjacent et certaines extrémités circonférentielles de certaines zones droites transversales du premier groupe de zone(s) droite(s) transversale(s) d'un tour se situent entre les prolongements axiaux des deux extrémités circonférentielles de certaines zones droites transversales du premier groupe de zone(s) droite(s) transversale(s) de chaque tour adjacent.

### Ensemble monté selon l'invention

En outre, l'invention a pour objet un ensemble monté comprenant un pneumatique tel que défini ci-dessus, le pneumatique étant monté sur un moyen de montage de l'ensemble monté sur un véhicule.

Le moyen de montage est par exemple une jante. De préférence, le moyen de montage comprend une face coopérant avec une face externe du pneumatique selon l'invention. Les deux faces coopérante sont maintenues au contact l'une de l'autre, par exemple par collage ou bien par les forces de pression résultant du gonflage du pneumatique.

### Procédé selon l'invention

Enfin, l'invention a pour objet un procédé de fabrication d'un pneumatique dans lequel :
- on enroule, autour d'un cylindre de confection sensiblement de révolution autour d'un axe de révolution, un assemblage comprenant :
   - un premier tissu comprenant des premiers éléments filaires, dits de chaine, sensiblement parallèles entre eux et s'étendant selon une première direction, dite de chaine, chaque premier élément filaire de chaine comprenant des premier et deuxième organes filaires,
   - un deuxième tissu ou tricot,
   - une structure porteuse comprenant des éléments filaires porteurs reliant le premier tissu et le deuxième tissu ou tricot entre eux, chaque élément filaire porteur comprenant au moins une portion filaire porteuse s'étendant entre le premier tissu et le deuxième tissu ou tricot,
   de sorte que la première direction de chaine et la direction circonférentielle du cylindre de confection forment un angle inférieur ou égal à 10°,
- on écarte radialement par rapport à l'axe de révolution le premier tissu de façon à :
   - former un espace annulaire intérieur délimité radialement par une face interne du premier tissu et une face interne du deuxième tissu ou tricot et distante l'une de l'autre d'une distance radiale moyenne H telle que H0 x K ≤ H avec K=0,50 et H0 étant la hauteur radiale moyenne entre la face interne du premier tissu et la face interne du deuxième tissu ou tricot lorsque chaque portion filaire porteuse est au repos,
   - ce que le premier organe filaire de chaque premier élément filaire de chaine s'allonge selon la première direction de chaine sur au moins une partie de sa longueur sans rompre, et
   - ce que le deuxième organe filaire de chaque premier élément filaire de chaine rompe en au moins un point de sa longueur.

Conformément à l'invention et comme expliqué ci-dessus, un tel procédé est facile à mettre en oeuvre.

En outre, de façon préférée, à l'issu de l'étape d'écartement radial, H0 x K ≤ H < H0, ce qui signifie que, en l'absence de charge appliquée au pneumatique et en l'absence de pression dans le pneumatique, les éléments filaires porteurs se trouvent dans un état replié.

Avantageusement, lors de l'étape d'écartement du premier tissu par rapport à l'axe de révolution, on exerce sur le premier tissu une force, exprimée en N, selon la direction circonférentielle du cylindre de confection inférieure ou égale à (P0 x (L/2π + H) x l) / 2 avec l étant la largeur du premier tissu, L étant la longueur au repos du premier tissu selon la première direction générale, l et L étant exprimées en m et PO=100000. Ainsi, le premier tissu se déforme sous une contrainte relativement faible ce qui permet, lors du procédé de fabrication du pneumatique, d'utiliser une contrainte de conformation adaptée ne risquant pas de détériorer l'ébauche.

Dans un mode de réalisation, lors de l'étape d'écartement du premier tissu par rapport à l'axe de révolution, on exerce sur le premier tissu une force, selon la direction circonférentielle du cylindre de confection, inférieure à la force nécessaire pour rompre le premier organe filaire de chaque premier élément filaire de chaine.

Dans un mode de réalisation, lors de l'étape d'écartement du premier tissu par rapport à l'axe de révolution, on exerce sur le premier tissu une force, selon la direction circonférentielle du cylindre de confection supérieure ou égale à la force nécessaire pour entrainer au moins une rupture du deuxième organe filaire de chaque premier élément filaire de chaine.

Avantageusement, P0=80000, de préférence P0=60000, plus préférentiellement P0=40000. Plus P0 est faible, plus la contrainte de conformation est faible et moindre est le risque de détériorer l'ébauche.

Dans un mode de réalisation préféré permettant d'assurer efficacement la conformation du premier tissu, le premier tissu comprend :
- au moins une zone droite transversale d'un premier groupe de zone(s) droite(s) transversale(s),
- au moins une zone droite transversale d'un deuxième groupe de zone(s) droite(s) transversale(s),
chaque zone droite transversale de chaque premier et deuxième groupe de zone(s) droite(s) transversale(s) s'étendant sur toute la largeur du premier tissu,
on allonge chaque zone droite transversale du premier groupe de zone(s) droite(s) transversale(s) selon la direction circonférentielle du cylindre de confection et on rompt partiellement chaque zone droite transversale du premier groupe de zone(s) droite(s) transversale(s), et
on ne rompt sensiblement aucune zone droite transversale du deuxième groupe de zone(s) droite(s) transversale(s).

Dans un mode de réalisation permettant d'obtenir des zones droites transversales du deuxième groupe de zone (s) droite(s) transversale(s) indéformables, on n'allonge selon la direction circonférentielle du cylindre de confection aucune zone droite transversale du deuxième groupe de zone(s) droite(s) transversale(s).

Dans un mode de réalisation préféré utilisant des zones droites transversales du deuxième groupe de zone(s) droite(s) transversale(s) indéformables, on n'allonge selon la direction circonférentielle du cylindre de confection aucun premier élément filaire de chaine dans chaque zone droite transversale du deuxième groupe de zone(s) droite(s) transversale(s).

Dans un mode de réalisation permettant d'obtenir des zones droites transversales du deuxième groupe de zone (s) droite(s) transversale(s) déformables, on allonge selon la direction circonférentielle du cylindre de confection chaque zone droite transversale du deuxième groupe de zone(s) droite(s) transversale(s).

Dans un mode de réalisation préféré utilisant des zones droites transversales du deuxième groupe de zone(s) droite(s) transversale(s) déformables, on allonge selon la direction circonférentielle du cylindre de confection chaque premier élément filaire de chaine dans chaque zone droite transversale du deuxième groupe de zone(s) droite(s) transversale(s).

Dans un mode de réalisation, on rompt partiellement chaque premier élément filaire de chaine dans chaque zone droite transversale du premier groupe de zone(s) droite(s) transversale(s).

Dans un mode de réalisation préféré, on allonge sans rompre le premier organe filaire de chaque premier élément filaire de chaine selon la première direction de chaine de chaque zone droite transversale du premier groupe de zone(s) droite(s) transversale(s) et on rompt le deuxième organe filaire chaque premier élément filaire de chaine d'au moins une zone droite transversale du premier groupe de zone(s) droite(s) transversale(s) en au moins un point de sa longueur sur la zone droite transversale du premier groupe de zone(s) droite(s) transversale(s), de préférence on rompt le deuxième organe filaire de chaque premier élément filaire de chaine de chaque zone droite transversale du premier groupe de zone(s) droite(s) transversale(s) en au moins un point de sa longueur sur chaque zone droite transversale du premier groupe de zone(s) droite(s) transversale(s).

Dans un mode de réalisation, on ne rompt aucun premier élément filaire de chaine dans chaque zone droite transversale du deuxième groupe de zone(s) droite(s) transversale(s).

Dans un mode de réalisation préféré, on ne rompt sensiblement aucun premier organe filaire et aucun deuxième organe filaire de chaque premier élément filaire de chaine de chaque zone droite transversale du deuxième groupe de zone(s) droite(s) transversale(s).

Par sensiblement aucun, on entend que l'on ne rompt et/ou que l'on n'allonge aucun organe filaire ou un nombre insuffisant d'organes filaires de chaine ou bien avec un allongement non significatif pour participer à la conformation du premier tissu.

Optionnellement, le premier tissu comprenant des premiers éléments filaires, dits de trame, sensiblement parallèles entre eux et s'entrecroisant avec les premiers éléments filaires de chaine, on écarte deux à deux selon la direction circonférentielle du cylindre de confection les premiers éléments filaires de trame de chaque zone droite transversale du premier groupe de zone(s) droite(s) transversale(s) et on maintient l'écart deux à deux selon la direction circonférentielle du cylindre de confection entre les premiers éléments filaire de trame de chaque zone droite transversale du deuxième groupe de zone(s) droite(s) transversale(s).

Avantageusement, chaque élément filaire porteur comprenant une première portion filaire d'ancrage de chaque élément filaire porteur dans le premier tissu prolongeant la portion filaire porteuse dans le premier tissu :
- chaque zone droite transversale du premier groupe de zone(s) droite(s) transversale(s) est dépourvue de toute première portion filaire d'ancrage sur toute la largeur du premier tissu,
- chaque zone droite transversale du deuxième groupe de zone(s) droite(s) transversale(s) comprend au moins une première portion filaire d'ancrage sur la largeur du premier tissu.

Avantageusement, on ne rompt sensiblement aucune première portion filaire d'ancrage.

Dans un mode de réalisation, on n'allonge selon la direction circonférentielle du cylindre de confection aucune première portion filaire d'ancrage.

Dans un autre mode de réalisation, on allonge selon la direction circonférentielle du cylindre de confection chaque première portion filaire d'ancrage.

Par sensiblement aucune, on entend que l'on ne rompt et/ou que l'on n'allonge aucune première portion filaire d'ancrage ou un nombre insuffisant de premières portions filaires d'ancrage ou bien avec un allongement non significatif pour participer à la conformation du premier tissu.

De préférence, chaque zone droite transversale du premier groupe de zone(s) droite(s) transversale(s) alterne, selon la direction circonférentielle, avec une zone droite transversale du deuxième groupe de zone(s) droite(s) transversale(s).

Dans un premier mode de réalisation, la première direction de chaine et la direction circonférentielle du cylindre de confection forment un angle sensiblement nul.

Dans ce premier mode de réalisation, avantageusement, on enroule l'assemblage circonférentiellement sur au plus un tour complet autour de l'axe principal de façon à ce que la première structure de révolution forme un enroulement hélicoïdal axialement continu de l'assemblage entre les deux flancs du pneumatique.

Dans un deuxième mode de réalisation, la première direction de chaine et la direction circonférentielle du cylindre de confection forment un angle sensiblement non nul inférieur à 10°, de préférence un angle sensiblement non nul inférieur ou égal à 5°.

Dans ce deuxième mode de réalisation, avantageusement, on enroule l'assemblage circonférentiellement sur plusieurs tours complets autour de l'axe principal de façon à ce que la première structure de révolution forme un enroulement cylindrique axialement discontinu de l'assemblage entre les deux flancs du pneumatique.

Dans une première variante du mode de réalisation utilisant les zones droites transversales du premier groupe dites déformables et les zones droites transversales du deuxième groupe dites non rompables, on enroule l'assemblage de sorte que chaque extrémité circonférentielle de chaque zone droite transversale du premier groupe de zone(s) droite(s) transversale(s) d'un tour est axialement sensiblement alignée avec chaque extrémité circonférentielle de chaque zone droite transversale du premier groupe de zone(s) droite(s) transversale(s) de chaque tour adjacent.

Dans une deuxième variante du mode de réalisation utilisant les zones droites transversales du premier groupe dites déformables et les zones droites transversales du deuxième groupe dites non rompables, on enroule l'assemblage de sorte que chaque extrémité circonférentielle de chaque zone droite transversale du premier groupe de zone(s) droite(s) transversale(s) d'un tour se situe entre les prolongements axiaux des deux extrémités circonférentielles de chaque zone droite transversale du premier groupe de zone(s) droite(s) transversale(s) de chaque tour adjacent.

Dans une troisième variante du mode de réalisation utilisant les zones droites transversales du premier groupe dites déformables et les zones droites transversales du deuxième groupe dites non rompables, on enroule l'assemblage de sorte que certaines extrémités circonférentielles de certaines zones droites transversales du premier groupe de zone(s) droite(s) transversale(s) d'un tour sont axialement sensiblement alignées avec des extrémités circonférentielles d'au moins une zone droite transversale du premier groupe de zone(s) droite(s) transversale(s) de chaque tour adjacent et de sorte que certaines extrémités circonférentielles de certaines zones droites transversales du premier groupe de zone(s) droite(s) transversale(s) d'un tour se situent entre les prolongements axiaux des deux extrémités circonférentielles de certaines zones droites transversales du premier groupe de zone(s) droite(s) transversale(s) de chaque tour adjacent.

Optionnellement :
- préalablement à l'étape d'enroulage de l'assemblage autour du cylindre de confection, on imprègne le premier tissu et le deuxième tissu ou tricot respectivement par une première couche d'une première composition polymérique et une deuxième couche d'une deuxième composition polymérique, de façon à former lors de l'étape d'enroulage de l'assemblage une première structure de révolution comprenant le premier tissu imprégné au moins en partie de la première composition polymérique et de façon à former une deuxième structure de révolution comprenant lequel le deuxième tissu ou tricot imprégné au moins en partie de la deuxième composition polymérique ;
- préalablement à l'étape de formation de l'espace annulaire intérieur, on relie entre elles chaque extrémité axiale de la première structure de révolution et chaque extrémité axiale de la deuxième structure de révolution par un flanc de façon à constituer l'espace annulaire intérieur, les deux flancs délimitant axialement l'espace annulaire intérieur.

Avantageusement, préalablement à l'étape de formation de l'espace annulaire intérieur, on enroule une structure de révolution de carcasse radialement à l'extérieur de la première structure de révolution.

De façon préférée, on relie continûment chaque extrémité axiale de la deuxième structure de révolution par la structure de révolution de carcasse s'étendant radialement au travers de chaque flanc et axialement sur toute la largeur axiale de la première structure de révolution.

De préférence, on forme l'espace annulaire intérieur par pressurisation par un gaz de gonflage de l'espace annulaire intérieur.

Avantageusement, après l'étape de formation de l'espace annulaire intérieur, on enroule une structure de révolution de sommet radialement à l'extérieur du premier tissu, et de préférence radialement à l'extérieur de la structure de révolution de carcasse.

Avantageusement, après l'étape de formation de l'espace annulaire intérieur, on enroule une bande de roulement radialement à l'extérieur du premier tissu, de préférence radialement à l'extérieur de la structure de révolution de sommet.

De préférence, on enroule simultanément radialement à l'extérieur du premier tissu, et de préférence radialement à l'extérieur de la structure de révolution de carcasse, la structure de révolution de sommet et la bande de roulement préalablement assemblées ensemble.

L'invention sera mieux comprise à la lecture de la description qui va suivre, donnée uniquement à titre d'exemple non limitatif et faite en se référant aux dessins dans lesquels:
- la figure 1 est une vue en perspective et en coupe partielle d'un pneumatique selon un premier mode de réalisation de l'invention représenté en l'absence de charge appliquée et de pression ;
- la figure 2 est une vue de détail de structures de révolution du pneumatique de la figure 1, notamment d'une structure porteuse comprenant des éléments filaires porteurs ;
- la figure 3 est une vue en coupe circonférentielle du pneumatique de la figure 1, représenté dans un état écrasé sous l'effet d'une charge et en présence de pression ;
- la figure 4 est une vue en coupe méridienne du pneumatique de la figure 3;
- la figure 5 est une vue en arraché du pneumatique de la figure 1 illustrant un premier tissu d'un l'assemblage selon l'invention intégré au pneumatique de la figure 1;
- la figure 6 est une vue analogue à celle de la figure 3 du pneumatique de la figure 1 sur laquelle chaque portion filaire porteuse de chaque élément filaire porteur est au repos ;
- la figure 7 est une vue analogue à celle de la figure 3 du pneumatique de la figure 1 en l'absence de charge appliquée et de pression ;
- la figure 8A est une vue d'un élément filaire porteur de la structure porteuse ;
- la figure 8B est une vue schématique d'un premier élément filaire de chaine du premier tissu présentant un allongement sensiblement nul et étant non rompu ;
- la figure 8C est une vue schématique du premier élément filaire de chaine de la figure 8B présentant un allongement non nul et étant partiellement rompu;
- la figure 9 est une de dessus de l'assemblage de la figure 5 avant son intégration au pneumatique ;
- la figure 10 est une vue en coupe de l'assemblage de la figure 9 selon le plan de coupe P-P' illustrant des éléments porteurs dans un état replié ;
- la figure 11 est une vue analogue à celle de la figure 10 illustrant des éléments porteurs dans un état au repos du pneumatique de la figure 6 ;
- la figure 12 est une vue analogue à celle de la figure 10 illustrant des éléments porteurs en l'absence de charge appliquée et de pression du pneumatique des figures 1 et 7;
- les figures 13 à 17 sont des vues schématiques des différentes étapes du procédé de fabrication du pneumatique de la figure 1 ;
- les figures 18 et 19 sont des vues schématiques du pneumatique respectivement avant et après la formation d'un espace annulaire intérieur ;
- la figure 20 est une vue analogue à celle de la figure 1 d'un pneumatique selon un deuxième mode de réalisation de l'invention ;
- la figure 21 est une vue analogue à celle de la figure 5 d'une première variante du pneumatique de la figure 20 ;
- la figure 22 est une vue analogue à celle de la figure 5 d'une deuxième variante du pneumatique de la figure 20.

Dans les figures, on a représenté un repère X, Y, Z correspondant aux orientations habituelles respectivement axiale (selon la direction YY'), radiale (selon la direction ZZ') et circonférentielle (selon la direction XX') d'un pneumatique. Sur les figures, les axes ZZ' et XX' définissent le plan circonférentiel médian du pneumatique.

### ENSEMBLE MONTE, PNEUMATIQUE, ASSEMBLAGE IMPREGNE ET ASSEMBLAGE SELON UN PREMIER MODE DE REALISATION DE L'INVENTION

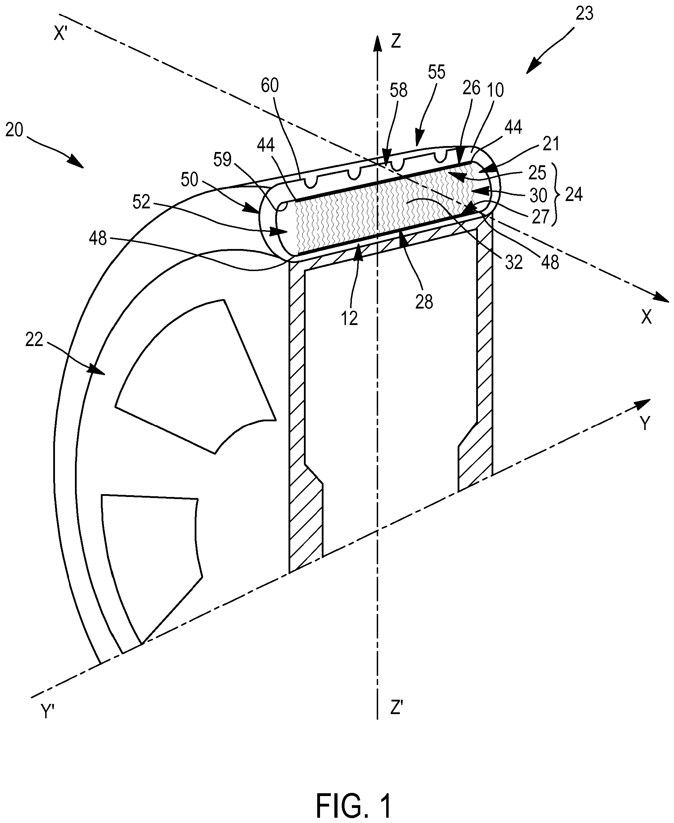

On a représenté sur la figure 1 un pneumatique conforme à un premier mode de réalisation de l'invention et désigné par la référence générale 20. Le pneumatique 20 est sensiblement de révolution autour d'un axe principal sensiblement parallèle à la direction axiale YY'. Le pneumatique 20 est ici destiné à un véhicule de tourisme. Sur la figure 1, le pneumatique 20 est monté sur un moyen de montage 22, ici une jante, formant ainsi un ensemble monté 23 selon l'invention pour véhicule.

Le pneumatique 20 comprend une première structure de révolution 25 et une deuxième structure de révolution 27. La deuxième structure de révolution 27 est agencée radialement à l'intérieur de la première structure de révolution 25. Ces première et deuxième structures de révolution 25, 27 forment une partie d'un assemblage imprégné 21 décrit plus en détails ci-dessous.

Comme illustré sur les figures 1, 2, 4 et 10 à 12, la première structure de révolution 25 comprend une première structure 10 d'éléments filaires, ici un premier tissu 26, et une première couche 33 d'une première composition polymérique 34, le premier tissu 26 étant imprégné au moins en partie de la première composition polymérique 34. La deuxième structure de révolution 27 comprend une deuxième structure 12 d'éléments filaires, ici un deuxième tissu ou tricot 28 et de préférence un tissu 28, et une deuxième couche 35 d'une deuxième composition polymérique 36, le deuxième tissu 28 étant imprégné au moins en partie de la deuxième composition polymérique 36. En variante, la deuxième structure 27 comprend un tricot imprégné au moins en partie par la deuxième composition polymérique 36.

Dans le pneumatique 20, le premier tissu 26 est agencé radialement à l'extérieur par rapport au deuxième tissu 28. Chaque première et deuxième composition polymérique 34, 36 comprend par exemple une composition élastomérique comprenant au moins un élastomère, de préférence diénique, par exemple du caoutchouc naturel.

L'assemblage imprégné 21 comprend un assemblage 24 comprenant les premier et deuxième tissus 26, 28 imprégnés, chaque premier et deuxième tissu 26, 28 imprégné formant respectivement chaque première et deuxième structures de révolution 25, 27. L'assemblage 24 comprend également une structure porteuse 30 comprenant des éléments filaires porteurs 32 reliant les premier et deuxième tissus 26, 28 entre eux. La structure porteuse 30 est ici constituée d'une pluralité d'éléments filaires porteurs 32 tous identiques.

Le pneumatique 20 comprend une structure de révolution de carcasse 51 et une structure de révolution de sommet 55. La structure de révolution de carcasse 51 est agencée radialement entre la première structure de révolution 25 et la structure de révolution de sommet 55.

La structure de révolution de carcasse 51 comprend une nappe de carcasse 53 comprenant des éléments de renfort de carcasse sensiblement parallèles les uns aux autres selon une direction faisant un angle supérieur ou égal à 65°, de préférence supérieur ou égal à 80° et ici plus préférentiellement sensiblement égal à 90° avec la direction circonférentielle XX' du pneumatique 20. En l'espèce, les éléments de renfort sont des éléments de renfort filaires textiles, par exemple comprenant deux brins de polyester de 144 tex enroulés à 290 tours ensemble.

La structure de révolution de sommet 55 agencée radialement à l'extérieur de la structure de révolution de carcasse 51 comprend deux nappes de travail 54, 56. Chaque nappe de travail 54, 56 comprend des éléments de renfort de travail sensiblement parallèles les uns aux autres selon une direction faisant un angle allant de 15° et 40°, de préférence allant de 20° à 30° avec la direction circonférentielle du pneumatique et ici égal à 26°. Les éléments de renfort de travail sont croisés d'une nappe de travail 54, 56 par rapport à l'autre. En l'espèce, les éléments de renfort de travail sont des éléments de renfort filaires métalliques, par exemple des câbles de structure 2x0.30 mm.

La structure de révolution de sommet 55 comprend également une nappe de frettage 57 agencée radialement à l'extérieur des nappes de travail 54, 56. La nappe de frettage 57 comprend des éléments de renfort filaires de frettage sensiblement parallèles les uns aux autres formant un angle au plus égal à 10°, de préférence allant de 5° à 10° avec la direction circonférentielle du pneumatique 10 et ici égal à 5°. En l'espèce, les éléments de renfort de frettage sont des éléments de renfort filaires textiles, par exemple comprenant deux brins d'aramide de 167 tex enroulés à 315 tours ensemble.

Le pneumatique 20 comprend également une bande de roulement 58 comme illustré sur les figures 1, 2 et 4 agencée radialement à l'extérieur de la structure de révolution de sommet 55.

La structure de révolution de carcasse 51 comprend une face radialement intérieure 59 et la bande de roulement 58 comprend une face radialement extérieure 60.

Chaque nappe de carcasse 53, de travail 54, 56 et de frettage 57 comprend une composition polymérique, par exemple une composition élastomérique comprenant au moins un élastomère, de préférence diénique, par exemple du caoutchouc naturel, dans laquelle sont noyés les éléments de renfort correspondants.

La bande de roulement 58 est destinée à entrer en contact avec un sol. La bande de roulement 58 est constituée d'une composition polymérique, par exemple une composition élastomérique comprenant au moins un élastomère, de préférence diénique, par exemple du caoutchouc naturel.

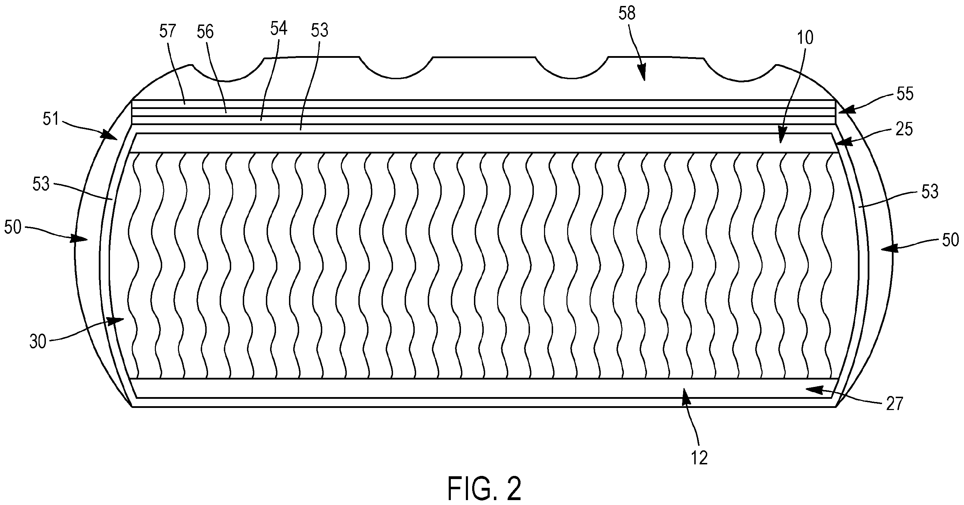

Comme illustré sur les figures 1 et 2, la première structure de révolution 25, la deuxième structure de révolution 27, la structure de carcasse 51, la structure de révolution de sommet 55 et la bande de roulement 58 présentent un axe de révolution commun, en l'espèce l'axe de rotation YY' du pneumatique 20.

En référence aux figures 1, 4 et 10 à 12, la première structure de révolution 25 présente une face interne 42 et une face externe 43 ainsi que deux extrémités axiales 44. La face interne 42 est une face interne du premier tissu 26 et la face externe 43 est une face externe de la première couche 33. Le premier tissu 26 comprend également une face externe 41 agencée radialement, au sein du pneumatique 20, à l'extérieur de la face interne 42. Au sein du pneumatique 20, la face interne 42 est agencée radialement à l'intérieur de la face externe 43 et la face externe 43 est au contact de la face 59 radialement intérieure de la structure de révolution de carcasse 51.

La deuxième structure de révolution 27 présente une face interne 46 et une face externe 47 ainsi que deux extrémités axiales 48. La face interne 46 est une face interne du deuxième tissu 28 et la face externe 47 est une face externe de la deuxième couche 35. Le deuxième tissu 28 comprend également une face externe 49 agencée radialement, au sein du pneumatique 20, à l'intérieur de la face interne 46. Au sein du pneumatique 20, la face interne 46 est agencée radialement à l'extérieur de la face externe 47.

Les deux faces 42 et 46 sont en regard l'une de l'autre et sensiblement parallèle l'une à l'autre. Au sein du pneumatique 20, chaque surface 42, 46 décrit un cylindre de révolution autour de l'axe YY' du pneumatique 20.

En référence à la figure 1, le pneumatique 20 comprend également deux flancs 50. Chaque flanc 50 relie entre elles chaque extrémité axiale 44 de la première structure de révolution 25 et chaque extrémité axiale 48 de la deuxième structure de révolution 27. La structure de révolution de carcasse 51 s'étend continûment entre chaque extrémité axiale 48 de la deuxième structure de révolution 27 radialement au travers de chaque flanc 50 et axialement sur toute la largeur axiale de la première structure de révolution 25.Le pneumatique 20 comprend également un espace annulaire intérieur 52 délimité d'une part radialement, par chaque face interne 42 et 46 et, d'autre part axialement, par les deux flancs 50. L'espace annulaire intérieur 52 forme une cavité fermée apte à être pressurisée par un gaz de gonflage, par exemple de l'air. Les éléments porteurs 32 sont deux à deux indépendants dans l'espace annulaire intérieur 52.

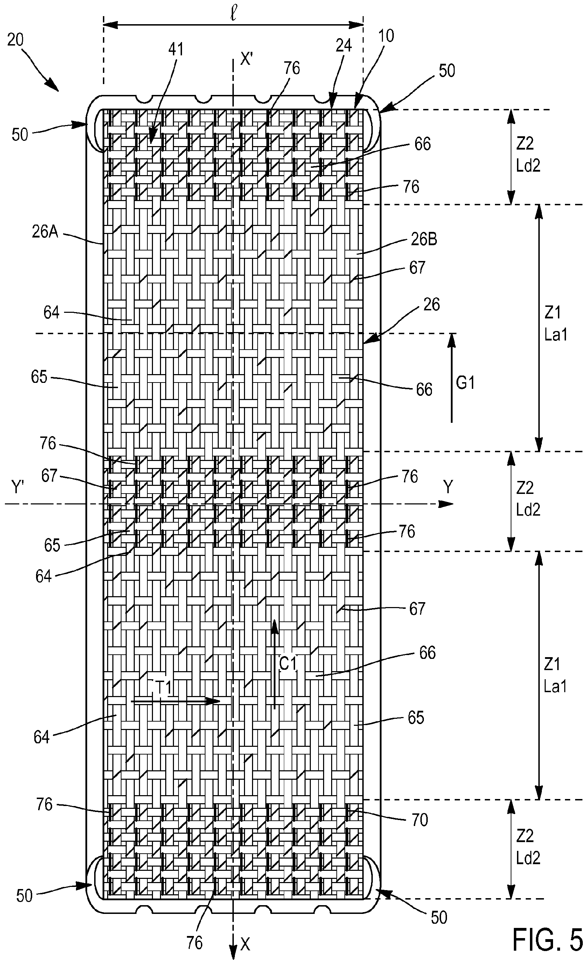

Dans ce premier mode de réalisation, l'assemblage 24 s'étend circonférentiellement sur au plus un tour complet autour de l'axe principal du pneumatique 20 de façon à ce que la première structure de révolution 25 forme un enroulement cylindrique axialement continu de l'assemblage 24 entre les deux flancs 50 du pneumatique 20 comme cela est illustré sur la figure 5.

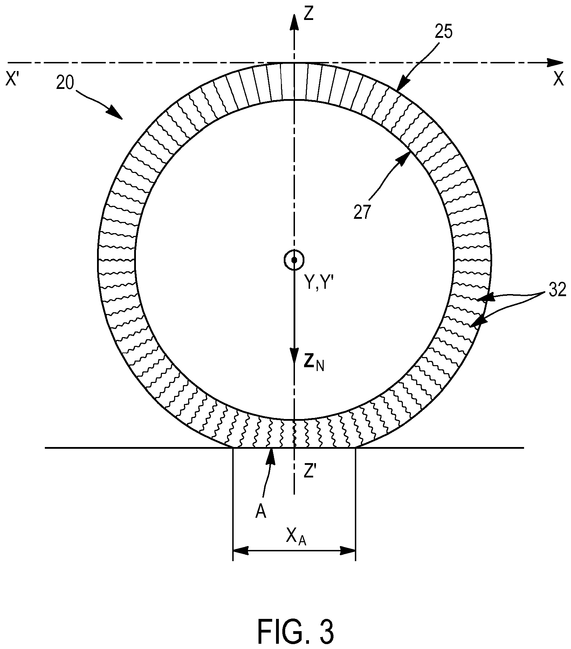

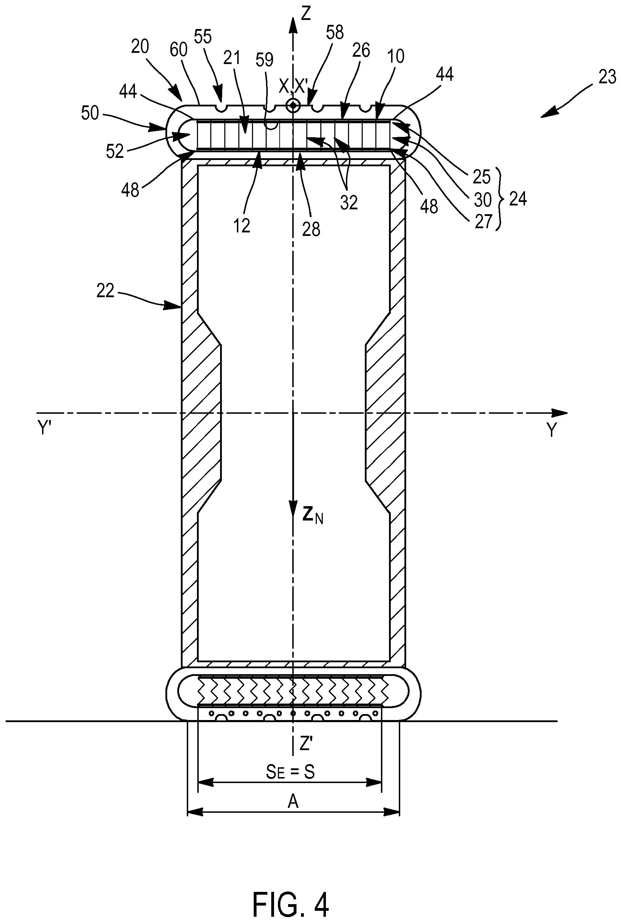

Sur les figures 3 et 4, le pneumatique 20 est représenté soumis à une charge radiale nominale Z_{N}. Le pneumatique 20 est en contact avec un sol plan par une surface de contact A, ayant une longueur circonférentielle X_{A}. Les éléments porteurs 32, reliés à la portion de la première structure de révolution 25 en contact avec le sol par l'intermédiaire de la bande de roulement, sont soumis à flambage en compression, alors qu'au moins une partie des éléments porteurs 32, reliés à la portion de la première structure de révolution 25 non en contact avec le sol, sont en tension. Le pneumatique 20 illustré sur la figure 3 est gonflé a une pression P comprise entre 1.5 bar et 2.5 bars et est soumis à une charge radiale Z_{N} égale à 600 daN.

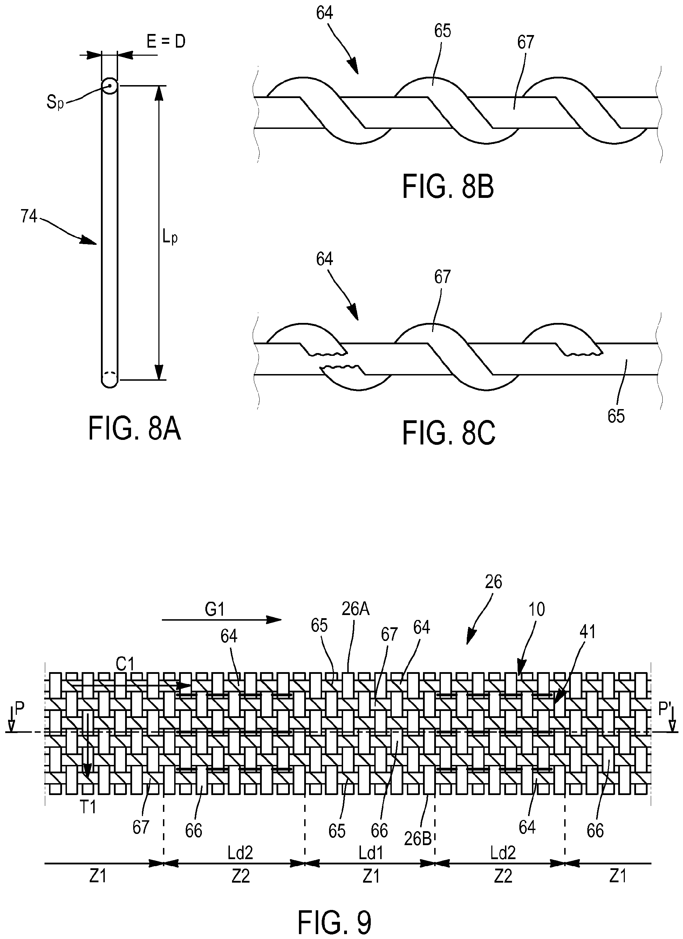

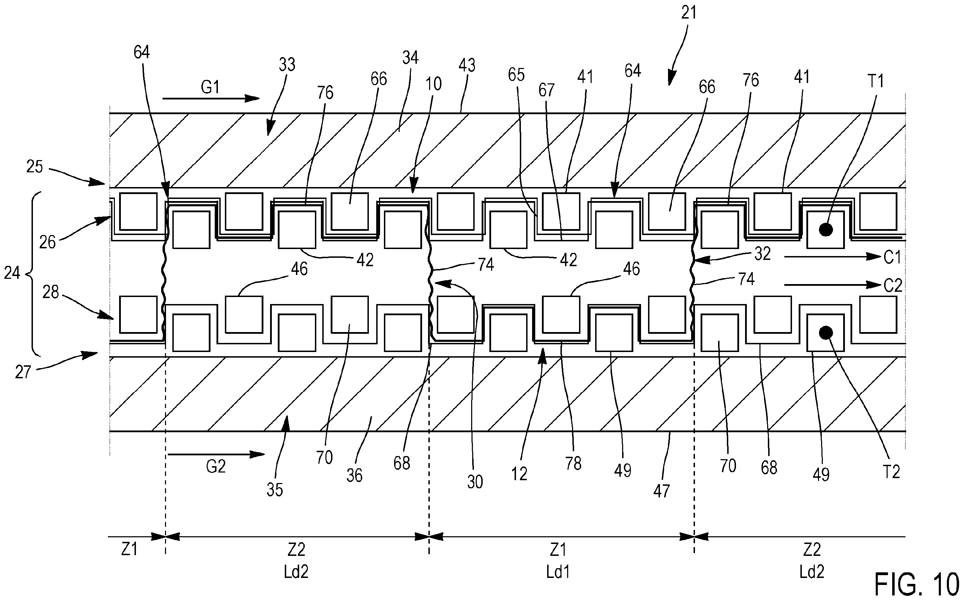

On a représenté sur la figure 5, la face externe 41 du premier tissu 26 intégré dans le pneumatique 20. On a volontairement omis de représenter la première couche 33 de composition polymérique 34 ainsi que les structures de révolution de carcasse 51, de sommet 55 et la bande de roulement 58 pour des raisons de clarté de l'exposé. On a représenté sur la figure 9 la même face 41 du premier tissu 26 avant son intégration dans la pneumatique 20. On a représenté sur les figures 10, 11 et 12 le premier tissu 26 dans différents états que nous allons décrire en détails ci-dessous.

En référence aux figures 5, 9 et 10 à 12, le premier tissu 26 comprend deux bords longitudinaux 26A et 26B. Le premier tissu 26 s'étend selon une première direction générale G1 sensiblement parallèle à chaque bord longitudinal 26A, 26B. Le premier tissu 26 comprend des premiers éléments filaires 64, appelés premiers éléments filaires de chaine, et des premiers éléments filaires 66, appelés premiers éléments filaires de trame. Les premiers éléments filaires de chaine 64 du premier tissu 26 sont sensiblement parallèles entre eux et s'étendent selon une première direction dite de chaine C1, sensiblement parallèle à la première direction générale G1. Les premiers éléments filaires de trame 66 du premier tissu 26 sont sensiblement parallèles entre eux et s'étendent selon une première direction dite de trame T1 et s'entrecroisent avec les premiers éléments filaires de chaine 64. Les premiers éléments filaires de chaine 64 s'étendent continûment sur toute la longueur du premier tissu 26.

De façon analogue au premier tissu 26, le deuxième tissu 28 comprend deux bords longitudinaux 28A et 28B. Le deuxième tissu 28 s'étend selon une deuxième direction générale G2 sensiblement parallèle à chaque bord longitudinal 28A, 28B. En l'espèce, la deuxième direction générale G2 est sensiblement parallèle à la première direction générale G1. Le deuxième tissu 28 comprend des deuxièmes éléments filaires 68, appelés deuxièmes éléments filaires de chaine, et des deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une deuxième direction dite de chaine C2, sensiblement parallèle à la deuxième direction générale G2. Les deuxièmes éléments filaires de trame 70 du deuxième tissu 28 sont sensiblement parallèles entre eux et s'étendent selon une deuxième direction dite de trame T2 et s'entrecroisent avec les deuxièmes éléments filaires de chaine 68. Les deuxièmes éléments filaires de chaine 68 s'étendent continûment sur toute la longueur du premier tissu 28.

Au sein de chaque premier et deuxième tissu 26, 28, les directions de chaine et de trame forment l'une avec l'autre un angle allant de 70° à 90°. En l'espèce, l'angle est sensiblement égal à 90°.

Au sein du pneumatique 20, chaque première et deuxième direction de chaine forme un angle inférieur ou égal à 10° avec la direction circonférentielle XX' du pneumatique 20. Dans le premier mode de réalisation, chaque première et deuxième direction de chaine forme un angle sensiblement nul avec la direction circonférentielle XX' du pneumatique 20.

Chaque élément filaire 64, 66, 68, 70 est un élément filaire textile.

Les éléments filaires 64 sont tous sensiblement identiques. Comme illustré sur les figures 8B et 8C, chaque premier élément filaire 64 de chaine comprend des premier et deuxième organes filaires 65, 67. Le deuxième organe filaire 67 est sensiblement rectiligne et le premier organe filaire 65 est enroulé en hélice autour du deuxième organe filaire 67. Chaque premier et deuxième organe filaire 65, 67 comprend, indépendamment l'une de l'autre, au moins un brin multifilamentaire comprenant plusieurs monofilaments chacun constitué d'un matériau choisi parmi un polyester, un polyamide, une polycétone, un polyuréthane , une fibre naturelle, une fibre minérale, de préférence choisi parmi un polyester, un polyamide, une polycétone, un polyuréthane, une fibre naturelle et un assemblage de ces matériaux, plus préférentiellement choisi parmi un polyester, une fibre naturelle et un assemblage de ces matériaux.

Le premier organe filaire 65 comprend au moins un brin multifilamentaire comprenant plusieurs monofilaments chacun constitué d'un matériau choisi parmi un polyester, un polyamide, une polycétone, un polyuréthane, une fibre naturelle, de préférence choisi parmi un polyester, un polyamide, une polycétone, un polyuréthane et un assemblage de ces matériaux, plus préférentiellement choisi parmi les polyesters et les assemblages de polyesters. Ici le premier organe filaire 65 est un brin multifilamentaire en PET présentant un titre égal à 110 tex.

Le deuxième organe filaire 67 comprend au moins un brin multifilamentaire comprenant plusieurs monofilaments chacun constitué d'un matériau choisi parmi un polyester, un polyamide, une polycétone, une fibre naturelle, une fibre minérale, de préférence choisi parmi un polyester, un polyamide, une polycétone et une fibre naturelle et un assemblage de ces matériaux, plus préférentiellement en rayonne. Ici le deuxième organe filaire 67 est assemblage de deux brins multifilamentaires de 11,5 tex chacun.

Les éléments filaires 66, 68, 70 sont tous sensiblement identiques, ici réalisés en polyéthylène téréphtalate (PET). En l'espèce, chaque élément filaire 66, 68, 70 est un élément filaire filé présentant une masse linéique égale à 170 tex et une ténacité égale à 66 cN/tex.

Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est un élément filaire porteur textile, ici réalisé en polyéthylène téréphtalate (PET). En l'espèce, chaque élément porteur 32 est un élément filaire filé présentant une masse linéique égale à 55 tex et une ténacité égale à 54 cN/tex.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portion filaire d'ancrage 76, 78 entre elles.

En l'espèce, chaque première portion filaire d'ancrage 76 est enroulée au moins en partie autour d'au moins un premier élément filaire de trame 66 du premier tissu 26 et ici, de préférence, autour d'au moins deux premiers éléments filaire de trame 66 adjacents selon la première direction générale G1. De façon analogue, chaque deuxième portion filaire d'ancrage 78 est enroulée au moins en partie autour d'au moins un deuxième élément filaire de trame 68 du deuxième tissu 28, de préférence autour d'au moins deux deuxièmes éléments filaire de trame 66 adjacents selon la deuxième direction générale G2.

Chaque première et deuxième portion filaire d'ancrage 76, 78 s'étend selon une direction sensiblement parallèle à respectivement la première et deuxième direction générale G1, G2.

Chaque première portion filaire d'ancrage 76 passe alternativement de la face 41 à la face 42 entre deux premiers éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux deuxièmes éléments filaires de trame 68 adjacents autour desquels la deuxième portion filaire d'ancrage 78 s'enroule.

En référence aux figures 5 et 9, le premier tissu 26 comprend des zones droites transversales Z1 d'un premier groupe de zones droites transversales, chaque zone droite transversale Z1 présentant une longueur au repos Ld1 selon la première direction générale G1 et s'étendant sur toute la largeur du premier tissu 26. Cette longueur Ld1 est la même pour toutes les zones droites transversales Z1 ici égale à 7,9 mm. Toutes les zones droites transversales Z1 du premier groupe de zones droites transversales sont identiques.

Le premier tissu 26 comprend également des zones droites transversales Z2 d'un deuxième groupe de zones droites transversales, chaque zone droite transversale Z2 présentant une longueur au repos Ld2 selon la première direction générale G1 et s'étendant sur toute la largeur du premier tissu 26. Cette longueur Ld2 est la même pour toutes les zones droites transversales Z2 est ici égale à 5,8 mm. Toutes les zones droites transversales Z2 du deuxième groupe de zones droites transversales sont identiques.

Chaque zone droite transversale Z1 du premier groupe de zones droites transversales alterne, selon la première direction générale ou selon la direction circonférentielle XX', avec une zone droite transversale Z2 du deuxième groupe de zones droites transversales.

Lorsque le premier tissu est au repos comme cela est représenté sur la figure 9, la somme des longueurs au repos Ld1 et Ld2 de toutes les zones droites transversales selon la première direction générale G1 est sensiblement égale à L. En l'espèce, pour une longueur L de l'assemblage 24 et donc une longueur L du premier tissu L=1692 mm présentant une largeur l=220 mm, la somme SLd1 des longueurs au repos Ld1 des zones droites transversales Z1 est égale à 975 mm et la somme des longueurs au repos Ld2 des zones droites transversales Z2 est égale à 717 mm. Le premier tissu comprend ainsi 123 zones droites transversales Z1 et Z2 entières ainsi qu'une zone droite transversale Z2 incomplète.

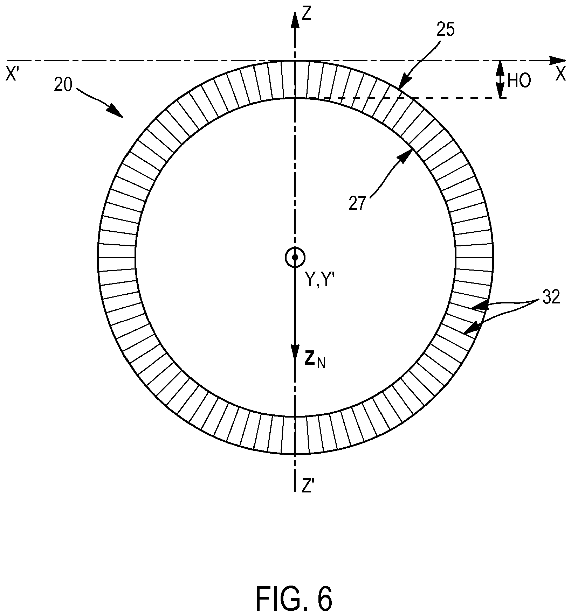

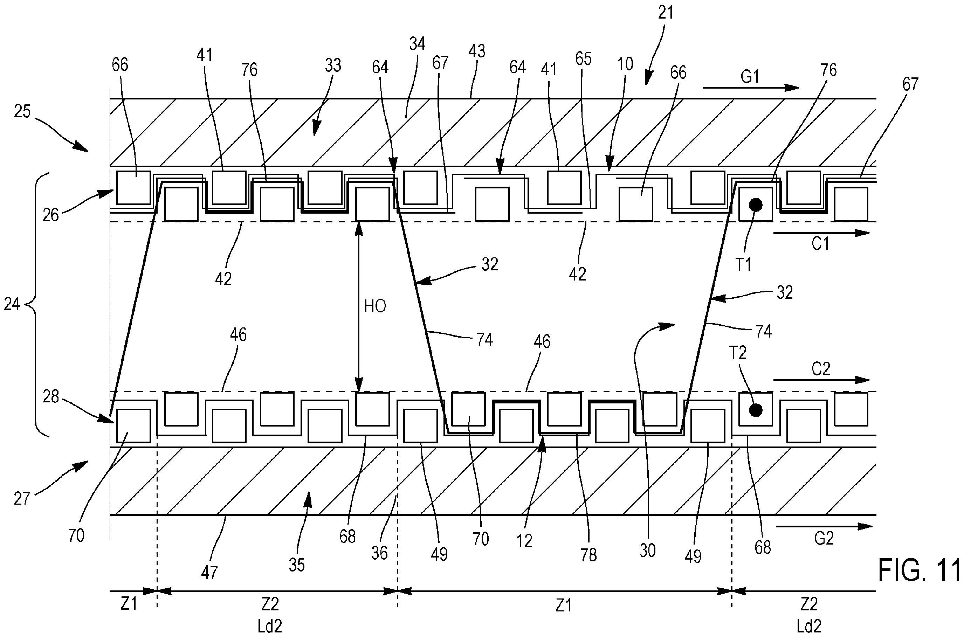

En référence aux figures 6 et 11, la face interne 42 du premier tissu 26 et la face interne 46 du deuxième tissu 28 sont distantes d'une distance droite H0 lorsque chaque portion filaire porteuse 74 est au repos. Ici, H0=47 mm.

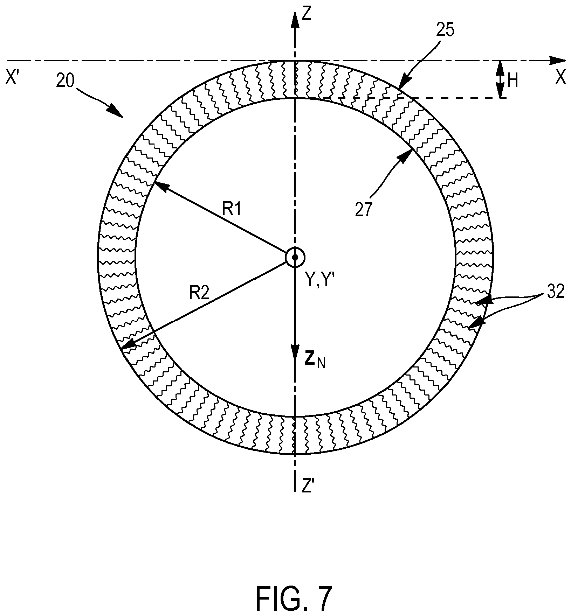

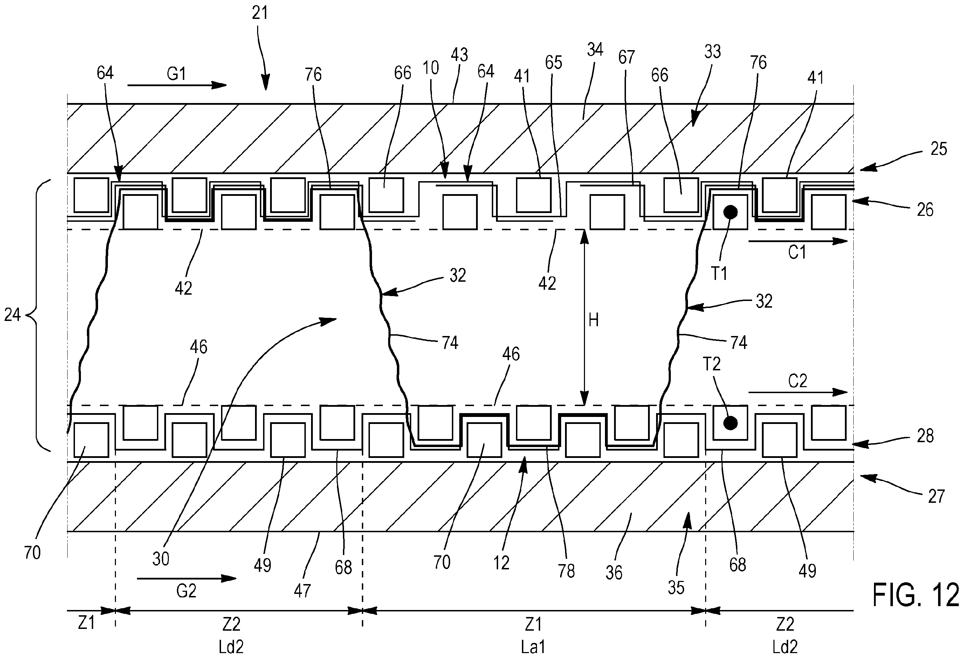

En référence aux figures 7 et 12 représentant un assemblage intégré dans le pneumatique 20 représenté à la figure 7, la face interne 42 du premier tissu 26 et la face interne 46 du deuxième tissu 28 sont distantes d'une distance droite moyenne H ici égale à 45 mm. Dans le pneumatique 20, H représente également la H la hauteur radiale moyenne de l'espace annulaire intérieur 52 en l'absence de charge appliquée au pneumatique 20 et en l'absence de pression dans le pneumatique 20.

En référence à la figure 7 sur laquelle le pneumatique 20 est représenté en l'absence de charge appliquée et en l'absence de pression, la première structure de révolution radialement extérieure 25 a un rayon moyen R1 égal à 313 mm et la deuxième structure de révolution radialement intérieure 27 a un rayon moyen R2 égal à 268 mm.

H et H0 sont telles que H0 x K ≤ H avec K=0,50. Avantageusement K=0,75, de préférence de K=0,80 et plus préférentiellement ici K=0,90. De plus, on a préférentiellement ici H < H0. En effet, ici H/H0=45/47=0,96.

On a représenté sur la figure 8A une portion filaire porteuse 74 d'un élément filaire porteur 32. La portion filaire porteuse 74 présente une section moyenne S_{P} circulaire, définie par une plus petite dimension caractéristique E et une plus grande dimension caractéristique D toutes deux égales, dans l'exemple présenté, au diamètre du cercle, et caractérisée par son rapport de forme R égal à D/E, donc égal à 1 dans le cas présent. En outre, la plus petite dimension caractéristique E de la section moyenne S_{P} de la portion filaire porteuse 74, c'est-à-dire, dans le cas présent, son diamètre, est au plus égale à 0.02 fois la hauteur radiale moyenne H de l'espace annulaire intérieur 52. La portion porteuse 74 a une longueur au repos L_{P} au moins égale à la hauteur moyenne H de l'espace annulaire intérieur 52. Les portions filaires d'ancrage 76, 78 présentent la même section moyenne S_{P} circulaire et la même plus petite dimension caractéristique E de la section moyenne S_{P}.

Chaque élément filaire porteur 32 présente une section moyenne S_{P} égale à 7*10⁻⁸ m² et une contrainte à rupture Fᵣ/S_{P} égale à 470 MPa. La densité surfacique moyenne D des portions filaires porteuses 74 par unité de surface de la première structure de révolution 25 et par unité de surface de la deuxième structure de révolution 27 est égale à 85000 fils/m². La force à rupture Fr est ici égale à 33 N.

Le premier tissu 26 est agencé de sorte que, pour toute contrainte non nulle, exprimée en N, inférieure ou égale à (P0 x (L/2π + H) x l) / 2 exercée sur le premier tissu 26 selon la première direction générale G1, le premier tissu 26 présente un allongement non nul selon la première direction générale G1 avec l étant la largeur du premier tissu 26 exprimée en m et P0=100000.

Le premier tissu 26 est agencé de sorte que, pour toute contrainte non nulle, exprimée en N, inférieure ou égale à (P0 x (L/2π + H) x l) / 2 exercée sur le premier tissu 26 selon la première direction générale G1, le premier organe filaire 65 de chaque premier élément filaire 64 de chaine présente un allongement non nul selon la première direction générale G1 sur au moins une partie de sa longueur et est non rompu.

Le premier tissu 26 est également agencé de sorte que, la contrainte exercée sur le premier tissu 26 selon la première direction générale G1 nécessaire, exprimée en N, pour entrainer au moins une rupture du deuxième organe filaire 67 de chaque premier élément filaire 64 de chaine est inférieure ou égale à (P0 x (L/2π + H) x l) / 2.

De plus, le premier tissu 26 est agencé de sorte que, pour tout allongement du premier tissu 26 selon la première direction générale G1 inférieur ou égal à (2π x H) / L, le premier tissu 26 développe une force, exprimée en N, selon la première direction générale G1 inférieure ou égale à (P0 x (L/2π + H) x l) / 2.

Ici, pour tout allongement inférieur ou égal à 2π x H / L= 2π x 0,045 / 1,692 = 16,7 %, la force maximale développée par le premier tissu 26 selon la première direction générale G1 est égale à 1232 N, valeur bien inférieure à (P0 x (L/2π + H) x l) / 2= 100000 x ((1,692/2π + 0,045)) x 0,22=3460 N. Cette valeur de contrainte, ici 1232 N, représente la contrainte en dessous de laquelle le premier tissu s'allonge sans rompre selon la première direction générale G1 pour permettre la conformation. La contrainte nécessaire pour rompre le deuxième organe filaire 67 de chaque premier élément filaire 64 de chaine est déterminée dans les conditions de la norme NF EN ISO 13934-1 de juillet 2013. Sur une courbe force-allongement, cette contrainte est la force correspondante à la première chute de la courbe force-allongement et ici égale à 1408 N et donc bien inférieure ou égale à 3460 N. Sur cette même courbe force-allongement, la contrainte nécessaire pour rompre le premier organe filaire de chaque premier élément filaire de chaine est la force correspondante à la deuxième chute de la courbe force-allongement et ici égale à 11000 N et donc bien supérieure à 3460 N.

En revenant aux figures 5 et 9, chaque zone droite transversale Z1 est dépourvue de toute première portion filaire d'ancrage 76 sur toute la largeur l du premier tissu 26. Ainsi, chaque zone droite transversale Z1 est agencée de façon à, pour toute contrainte non nulle inférieure ou égale à (P0 x (L/2π + H) x l) / 2 exercée sur le premier tissu 26 selon la première direction générale G1, et pour tout allongement du premier tissu 26 selon la première direction générale G1 inférieur ou égal à (2π x H) / L, permettre un allongement avec rupture partielle de chaque zone droite transversale Z1 selon la première direction générale G1. En l'espèce, chaque zone droite transversale Z1 est agencée de façon à, dans chaque zone droite transversale Z1, d'une part permettre un écartement des éléments filaire de trame 66 les uns par rapport aux autres selon la première direction générale G1, d'autre part, permettre un allongement sans rupture du premier organe filaire 65 de chaque premier élément filaire de chaine 64 selon la première direction générale G1 et enfin entrainer au moins une rupture du deuxième organe filaire 67 de chaque premier élément filaire de chaine 64 dans chaque zone droite transversale Z1, c'est-à-dire une rupture partielle de chaque premier élément filaire de chaine 64 dans chaque zone droite transversale Z1, et ce, pour toute contrainte non nulle inférieure ou égale à (PO x (L/2π + H) x I) / 2 exercée sur le premier tissu 26 selon la première direction générale G1 et pour tout allongement du premier tissu 26 selon la première direction générale G1 inférieur ou égal à (2π x H) / L. Ainsi, chaque zone droite transversale Z1 est dite déformable.

Contrairement aux zones droites transversales Z1, chaque zone droite transversale Z2 comprend au moins une première portion filaire d'ancrage 76 sur la largeur du premier tissu 26. Ainsi, chaque zone droite transversale Z2 est agencée de façon à, pour toute contrainte non nulle inférieure ou égale à (PO x (L/2π + H) x I) / 2 exercée sur le premier tissu 26 selon la première direction générale G1, et pour tout allongement du premier tissu 26 selon la première direction générale G1 inférieur ou égal à (2π x H) / L, empêcher un allongement de chaque zone droite transversale Z2 selon la première direction générale G1 et une rupture de chaque zone droite transversale Z2. En l'espèce, chaque zone droite transversale Z2 est agencée de façon à empêcher, dans chaque zone droite transversale Z2, d'une part un allongement de chaque premier élément filaire de chaine 64 selon la première direction générale G1, d'autre part, une rupture du premier organe filaire 65 de chaque premier élément filaire de chaine 64, une rupture du deuxième organe filaire 67 de chaque premier élément filaire de chaine 64, c'est-à-dire une rupture de chaque premier élément filaire de chaine 64, et enfin, un écartement des premiers éléments filaire de trame 66 les uns par rapport aux autres selon la première direction générale G1, et ce, pour toute contrainte non nulle inférieure ou égale à (PO x (L/2π + H) x I) / 2 exercée sur le premier tissu 26 selon la première direction générale G1 et pour tout allongement du premier tissu 26 selon la première direction générale G1 inférieur ou égal à (2π x H) / L. Ainsi, par opposition à chaque zone droite transversale Z1, chaque zone droite transversale Z2 est dite indéformable et est également ici non rompable.

Chaque zone droite transversale Z2 est également agencée de façon à empêcher d'une part un allongement de chaque première portion filaire d'ancrage 76 selon la première direction générale G1 et, d'autre part, une rupture de chaque première portion filaire d'ancrage 76, et ce, sous une contrainte au plus égale à (PO x (L/2π + H) x I) / 2 exercée sur le premier tissu 26 selon la première direction générale G1 et pour tout allongement du premier tissu 26 selon la première direction générale G1 inférieur ou égal à (2π x H) / L.

Comme illustré sur la figure 5, les premiers éléments filaire de trame 66 de chaque zone droite transversale Z1 présentent un écartement deux à deux selon la direction circonférentielle XX' supérieur à l'écartement deux à deux selon la direction circonférentielle XX' entre les premiers éléments filaire de trame 66 de chaque zone droite transversale Z2.

Dans le mode de réalisation illustré, on a (PO x (L/2π + H) x I) / 2=3460 N. Cette valeur de contrainte représente la contrainte en dessous de laquelle chaque zone droite transversale Z1 dite déformable peut s'allonger selon la première direction générale G1 sans rompre totalement mais en rompant partiellement et en dessous de laquelle chaque zone droite transversale Z2 dite indéformable et non rompable présente un allongement sensiblement nul et est non rompue.

En référence à la figure 9, le premier tissu 26 est agencé de sorte que, pour une longueur au repos L du premier tissu 26 selon la première direction générale G1, exprimée en m, pour tout allongement du premier tissu 26 selon la première direction générale G1 inférieur ou égal à (2π x H) / L, le premier organe filaire 65 présente un allongement non nul et est non rompu. Le premier tissu 26 est agencé de sorte qu'il existe un allongement du premier tissu 26 selon la première direction générale G1 inférieur ou égal à (2π x H) / L à partir duquel le deuxième organe filaire 67 est rompu. Dans le mode de réalisation représenté et conformément à l'invention, pour tout allongement du premier tissu 26 inférieur à 16,7 % qui est l'allongement selon la première direction générale G1 que présente le premier tissu 26 une fois intégré dans le pneumatique 20 conformé, le premier organe 65 présente un allongement non nul et est non rompu comme illustré sur la figure 8C. Toujours dans le mode de réalisation représenté et conformément à l'invention, le deuxième organe filaire rompt pour un allongement du premier élément filaire de chaine égal à 13,8 % correspondant à un allongement du premier tissu 26 égal à 8 %, allongement du premier tissu 26 bien inférieur ou égal à (2π x H) / L. Pour tout allongement du tissu 26 supérieur à 8 %, le deuxième organe filaire 67 est rompu comme illustré sur la figure 8C.

Ainsi, comme représenté sur la figure 5, le premier organe filaire 65 de chaque premier élément filaire 64 de chaine présente, au moins sur une partie de sa longueur, un allongement non nul selon la première direction de chaine C1 et est non rompu. Le deuxième organe filaire 67 de chaque premier élément filaire 64 de chaine est rompu en au moins un point de sa longueur.

Au sein du pneumatique 20, chaque zone droite transversale Z1 présente un allongement non nul selon la direction circonférentielle XX' et est partiellement rompue alors que chaque zone droite transversale Z2 présente un allongement sensiblement nul selon la direction circonférentielle et est non rompue.

En l'espèce, au sein du pneumatique 20, le premier organe filaire 65 de chaque premier élément filaire 64de chaine de chaque zone droite transversale Z1 présente un allongement non nul selon la première direction de chaine C1 et est non rompu. Toujours au sein du pneumatique 20, le deuxième organe filaire 67 de chaque premier élément filaire 64 de chaine de chaque zone droite transversale Z1 est rompu en au moins un point de sa longueur dans au moins une zone droite transversale Z1. Ainsi, chaque premier élément filaire 64de chaine de chaque zone droite transversale Z1 est partiellement rompu. Dans chaque zone droite transversale Z2 dite indéformable et non rompable, le premier organe filaire 65 et le deuxième organe filaire 67 de chaque premier élément filaire 64 de chaine de chaque zone droite transversale Z2 présentent un allongement sensiblement nul selon la première direction de chaine C1, c'est-à-dire que chaque premier élément filaire 64 de chaine de chaque zone droite transversale Z2 présente un allongement sensiblement nul, et sont non rompus. Par ailleurs, dans chaque zone droite transversale Z2 dite indéformable et non rompable, chaque portion filaire d'ancrage 76 présente un allongement sensiblement nul selon la direction circonférentielle XX' et est non rompue.

En l'espèce et en revenant à la figure 9, chaque zone droite transversale Z1 dite déformable devant compenser l'allongement sensiblement nul de chaque zone droite transversale Z2 dite indéformable et non rompable, l'allongement à force maximale de chaque zone droites transversales Z1 du premier groupe de zone(s) droite(s) transversale(s) selon la première direction générale vérifie Art1 > (2π x H) / SLd1 avec SLd1 étant la somme des longueurs au repos de toutes les zones droites transversales Z1 dites déformables.

Ici, chaque zone droite transversale Z1 dite déformable présente une longueur allongée La1 sensiblement égale à ((2π x H) + SLd1)/N avec N étant le nombre de zones droite transversale Z1 dite déformables sur la circonférence du pneumatique et par enroulement circonférentiel du premier tissu autour de l'axe principal YY' de révolution du pneumatique 20, ici égale à 10,22 mm. La somme des longueurs allongées La1 de chaque zone droite transversale Z1 selon la première direction générale est sensiblement égale à ((2π x H) + SLd1)= 1257 mm.

Chaque zone droite transversale Z1 dite déformable présente donc un allongement selon la première direction générale G1 égal à 29 %, bien inférieur à l'allongement à force maximale Art1 mesuré, selon la norme EN ISO 13934-1 de juillet 2013, à 60% (A vérifier). L'allongement à rupture Arc de chaque premier élément filaire 64 de chaine vérifie Arc > (2π x H) / SLd1. L'allongement à rupture Arc mesuré selon la norme ASTM D885/D885 MA de janvier 2010 est ici égal à 60 %, valeur bien supérieure à 29 %.

De plus, pour tout allongement de chaque zone droite transversale Z1 dite déformable selon la première direction générale G1 inférieur ou égal à (2π x H) / SLd1, chaque zone droite transversale Z1 dite déformable développe une force, exprimée en N, selon la première direction générale inférieure ou égale à (PO x (L/2π + H) x I) / 2=3460 N.

### PROCEDE SELON UN PREMIER MODE DE REALISATION DE L'INVENTION

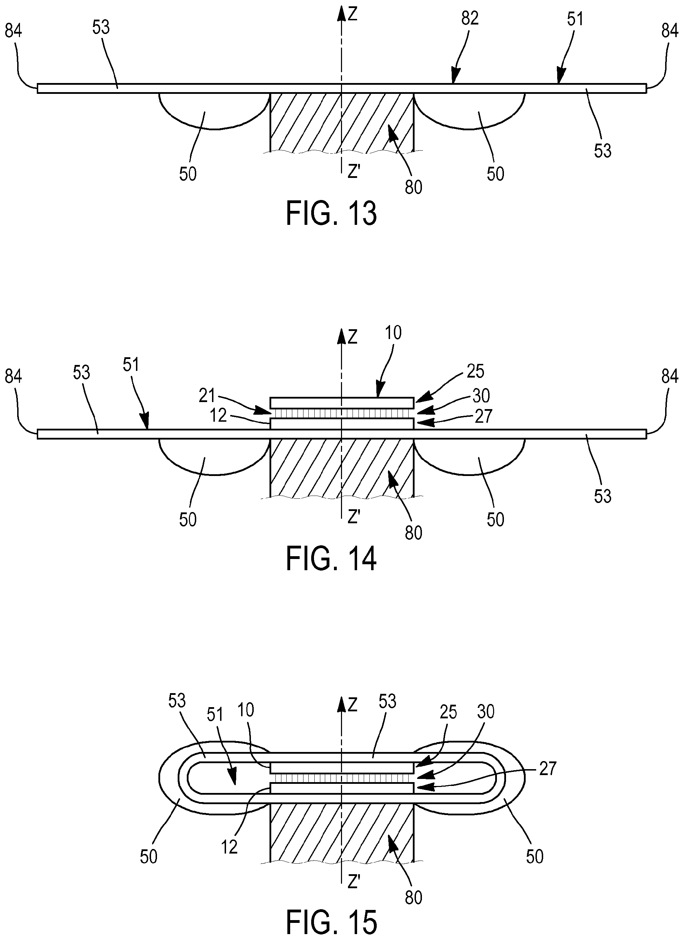

On va maintenant décrire, en référence aux figures 13 à 19, un procédé selon un premier mode de réalisation de l'invention permettant de fabriquer le pneumatique 20 selon le premier mode de réalisation décrit ci-dessus.

Dans une étape de préparation de l'assemblage imprégné 21, on maintien la face interne 42 du premier tissu 26 au contact de la face interne 46 du deuxième tissu 28. Puis, dans une étape d'imprégnation des premier et deuxième tissus 26, 28, on imprègne chaque premier et deuxième tissu 26, 28 respectivement avec les première et deuxième compositions polymériques 34, 36 de façon à former, lors d'une étape d'enroulage de l'assemblage 21 (décrite ci-après) la première structure de révolution 25 et la deuxième structure de révolution 27.

On obtient alors l'assemblage imprégné 21 représenté sur la figure 10. Sur cette figure 10, chaque portion filaire porteuse 74 est dans un état replié ou fléchi.

Comme illustré sur les figures 13 à 19, on dispose d'un cylindre de confection 80 dont le diamètre est égal à celui du moyen de montage sur lequel est destiné à être monté le pneumatique 20. Le cylindre de confection 80 est sensiblement de révolution autour d'un axe de révolution coaxial à l'axe de révolution YY' du pneumatique 20.

Tout d'abord, comme illustré sur la figure 13, on pose sur le cylindre de confection 80 un ensemble 82 comprenant la structure de révolution de carcasse 51 et les flancs 50.

Puis, comme illustré sur la figure 14, on enroule l'assemblage imprégné 21 de la figure 11 de sorte que la première direction de chaine C1 et la direction circonférentielle du cylindre de confection 80, ici sensiblement confondue avec la direction circonférentielle XX' du pneumatique 20, forment un angle inférieur ou égal à 10° et, dans ce premier mode de réalisation, un angle sensiblement nul. On agence l'assemblage imprégné 21 radialement à l'extérieur de l'ensemble préalablement posé.

Dans le premier mode de réalisation, on enroule l'assemblage imprégné 21 circonférentiellement sur au plus un tour complet autour de l'axe principal de façon à ce que la première structure de révolution 25 forme un enroulement cylindrique axialement continu de l'assemblage imprégné 21 entre les deux flancs du pneumatique 20. L'enroulement cylindrique axialement continu présente une largeur axiale supérieure ou égale à 50%, de préférence à 75% à la largeur axiale de la bande de roulement 58. Dans ce mode de réalisation, l'assemblage imprégné 21 est déposé selon un seul tour d'enroulement cylindrique. On parle alors de pose en pleine largeur, puisque la largeur axiale visée l'assemblage imprégné 21 est obtenue en un seul tour d'enroulement cylindrique. L'avantage d'une pose en pleine largeur est la productivité de fabrication. En revanche, une pose en pleine largeur implique nécessairement l'existence d'au moins une zone de recouvrement, ou soudure, selon la direction circonférentielle, entre les extrémités circonférentielles l'assemblage imprégné 21, en particulier en fin d'enroulement.

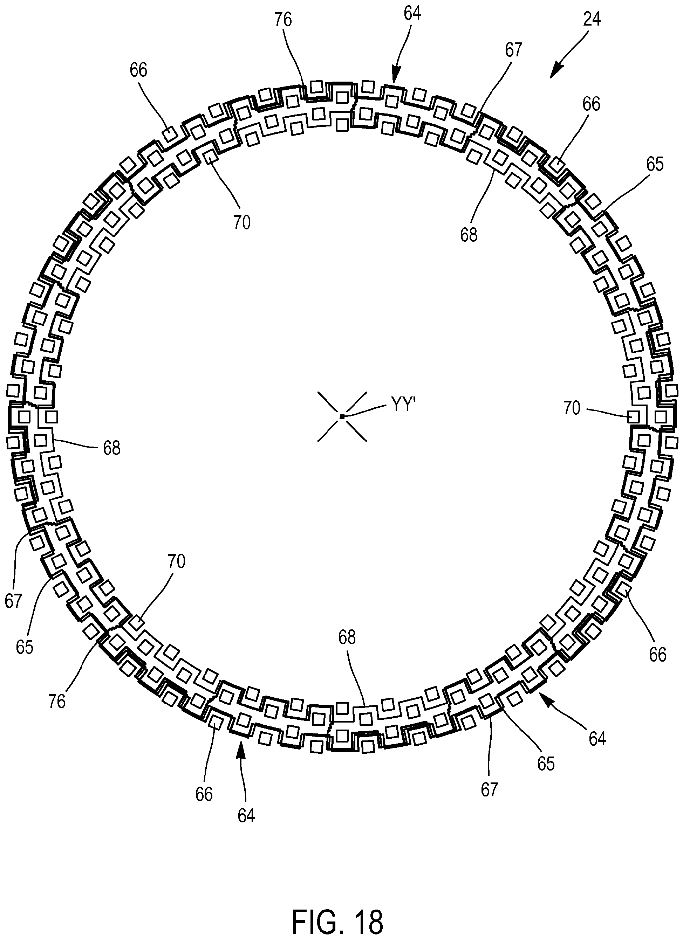

Puis, comme illustré sur la figure 15, préalablement à l'étape de formation de l'espace annulaire intérieur 52, dans le mode de réalisation décrit, on relie entre elles chaque extrémité axiale 44 de la première structure de révolution 25 et chaque extrémité axiale 48 de la deuxième structure de révolution 27 par un des flancs 50 de façon à constituer l'espace annulaire intérieur 52. On dispose également la structure de révolution de carcasse 51 radialement à l'extérieur de la première structure de révolution 25 en rabattant les deux extrémités axiales 84 de l'ensemble 82. On relie alors continûment chaque extrémité axiale 48 de la deuxième structure de révolution 27 par la structure de révolution de carcasse 51 qui s'étend radialement au travers de chaque flanc 50 et axialement sur toute la largeur axiale de la première structure de révolution 25. On obtient alors l'assemblage selon l'invention représenté sur la figure 18.

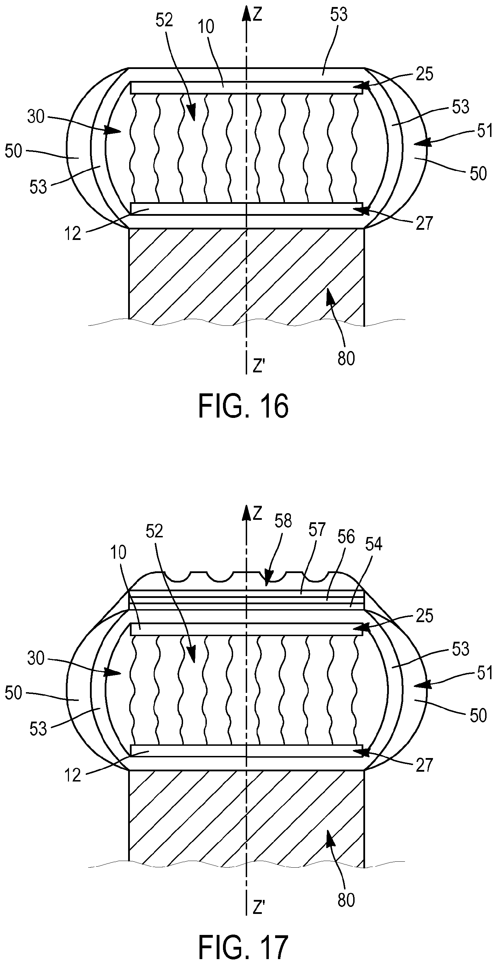

Puis, en référence à la figure 16, on écarte radialement par rapport à l'axe de révolution du pneumatique 20 le premier tissu 26 de façon à former l'espace annulaire intérieur 52 délimité radialement par la face interne 42 du premier tissu 26 et par la face interne 46 du deuxième tissu 28 et distante l'une de l'autre d'une distance radiale moyenne H telle que H0 x K ≤ H avec K=0,50 et de façon à ce que le premier organe filaire 65 de chaque premier élément filaire 64 de chaine s'allonge selon la première direction de chaine C1 sur au moins une partie de sa longueur sans rompre, et à ce que le deuxième organe filaire 67 de chaque premier élément filaire 64 de chaine rompe totalement en au moins un point de sa longueur.

Ici, on allonge chaque zone droite transversale Z1 selon la direction circonférentielle XX' du cylindre de confection 80 et on rompt partiellement chaque zone droite transversale Z1, ici on rompt partiellement chaque premier élément filaire 64 de chaine selon la première direction de chaine C1 de chaque zone droite transversale Z1. En l'espèce, on allonge sans rompre le premier organe filaire 65 de chaque premier élément filaire 64 de chaine selon la première direction de chaine C1 de chaque zone droite transversale Z1 et on rompt totalement le deuxième organe filaire 65 de chaque premier élément filaire 64 de chaine de chaque zone droite transversale Z1 en au moins un point de sa longueur sur la zone droite transversale Z1.

De plus, on n'allonge selon la direction circonférentielle XX' du cylindre de confection 80 et on ne rompt sensiblement aucune zone droite transversale Z2, en l'espèce on n'allonge ni on ne rompt aucun premier élément filaire 64 de chaine d'aucune zone droite transversale Z2. En l'espèce, on n'allonge selon la première direction de chaine et on ne rompt sensiblement aucun premier organe filaire 65 et aucun deuxième organe filaire 67 de chaque premier élément filaire 64 de chaine de chaque zone droite transversale Z2.

Par ailleurs, on n'allonge selon la direction circonférentielle XX' du cylindre de confection 80 et on ne rompt sensiblement aucune portion filaire d'ancrage 76 de chaque zone droite transversale Z2 dite indéformable et non rompable.

Lors de l'étape d'écartement du premier tissu 26 par rapport à l'axe de révolution YY', on écarte deux à deux selon la direction circonférentielle XX' les premiers éléments filaires de trame 66 de chaque zone droite transversale Z1 et on maintient l'écart deux à deux selon la direction circonférentielle XX' les premiers éléments filaires de trame 66 de chaque zone droite transversale Z2.

On forme l'espace annulaire intérieur 52 par déploiement de l'espace annulaire intérieur 52 par pressurisation par un gaz de gonflage de l'espace annulaire intérieur 52, par exemple de l'air.

Lors de l'étape d'écartement du premier tissu par rapport à l'axe de révolution, on exerce sur le premier tissu 26 une force égale à 2076 N inférieure à la force maximale permettant de rompre le premier tissu 26 ici égale à 11000 N et, inférieure ou égale à (PO x (L/2π + H) x I) / 2=3460 N.

Par ailleurs, lors de l'étape d'écartement du premier tissu 26 par rapport à l'axe de révolution, on exerce sur le premier tissu 26 une force, selon la direction circonférentielle XX', égale à 2076 N et donc inférieure à la force nécessaire pour rompre le premier organe filaire 65 de chaque premier élément filaire 64 de chaine, ici égale à 11000 N.

Enfin, lors de l'étape d'écartement du premier tissu 26 par rapport à l'axe de révolution, on exerce sur le premier tissu 26 une force, selon la direction circonférentielle XX', égale à 2076 N et donc supérieure ou égale à la force nécessaire pour entrainer au moins une rupture du deuxième organe filaire 67 de chaque premier élément filaire 64 de chaine, ici égale à 1408 N.

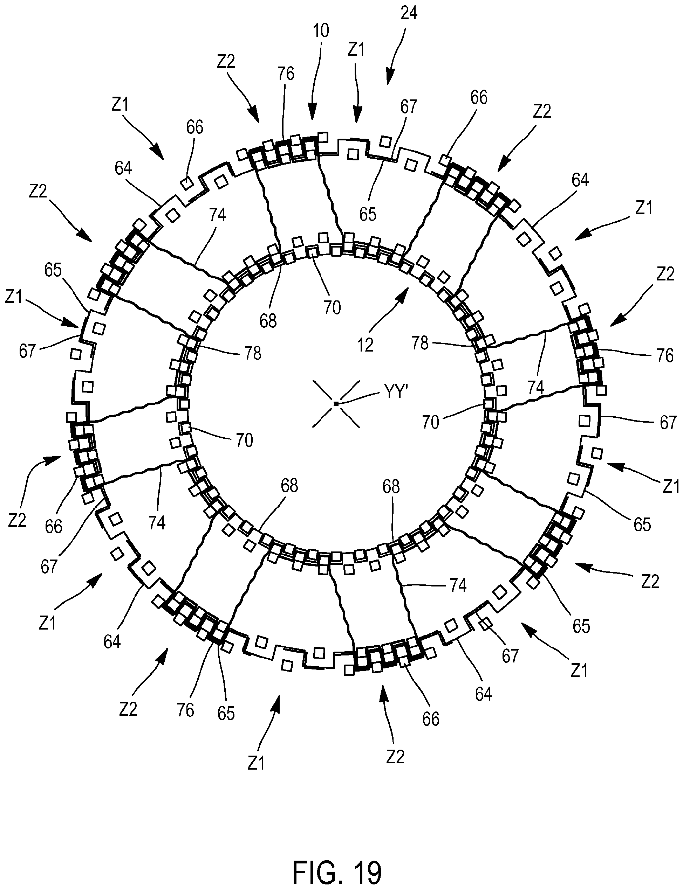

Lors de l'écartement radial du premier tissu 26 par rapport à l'axe de révolution YY' du pneumatique 20, généralement appelé conformation, le diamètre du premier tissu 26 et de la première structure de révolution 25 du pneumatique 20, augmente alors que le diamètre de la deuxième structure de révolution radialement 27 du pneumatique 20, et donc du deuxième tissu 28, reste sensiblement constant. La distance radiale par rapport à l'axe de révolution YY' du pneumatique 20 du premier tissu 26 augmente de façon significative au cours de la conformation ainsi que sa longueur circonférentielle, augmentation absorbée par l'allongement du premier tissu 26 conformément à l'invention. La distance radiale par rapport à l'axe de révolution YY' du pneumatique 20 du deuxième tissu 28 reste sensiblement constante au cours de la conformation et sa longueur circonférentielle ne varie sensiblement pas. On obtient alors l'assemblage selon l'invention représenté sur la figure 19.

Puis, après l'étape de formation de l'espace annulaire intérieur 52, on enroule simultanément radialement à l'extérieur du premier tissu 25 et de la structure de révolution de carcasse 51 la structure de révolution de sommet 55 et la bande de roulement 58 préalablement assemblées ensemble. On obtient alors le pneumatique 20 illustré sur la figure 17.

Ensuite, on dépressurise l'espace annulaire intérieur 52 jusqu'à la pression atmosphérique ambiante. On obtient alors le pneumatique 20 à l'état cru schématisé sur la figure 14 comprenant l'assemblage imprégné illustré sur la figure 12.

Enfin, on réticule le pneumatique 20, par exemple par vulcanisation, afin d'obtenir le pneumatique 20 à l'état cuit.

### ENSEMBLE MONTE, PNEUMATIQUE, ASSEMBLAGE IMPREGNE, ASSEMBLAGE ET PROCEDE SELON UN DEUXIEME MODE DE REALISATION DE L'INVENTION

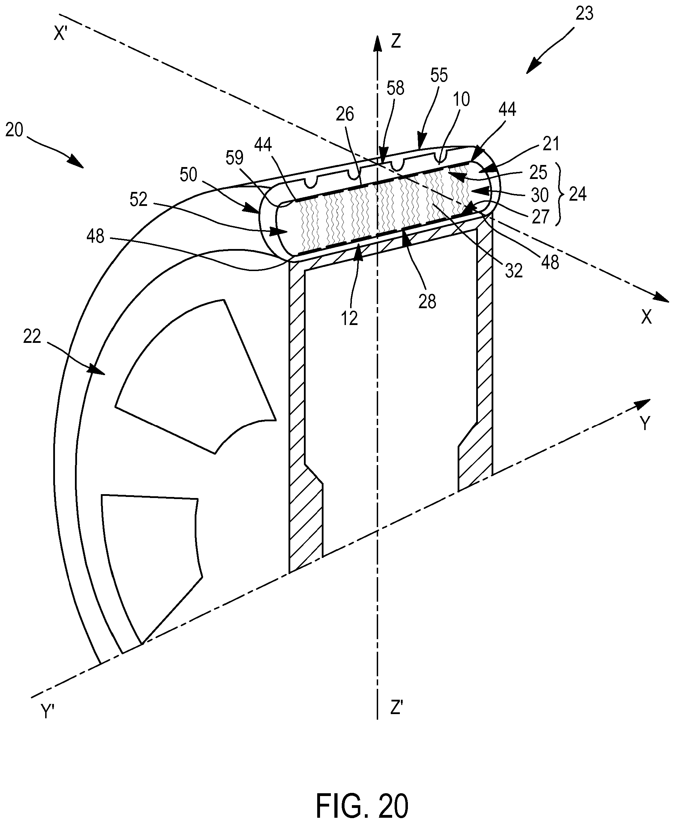

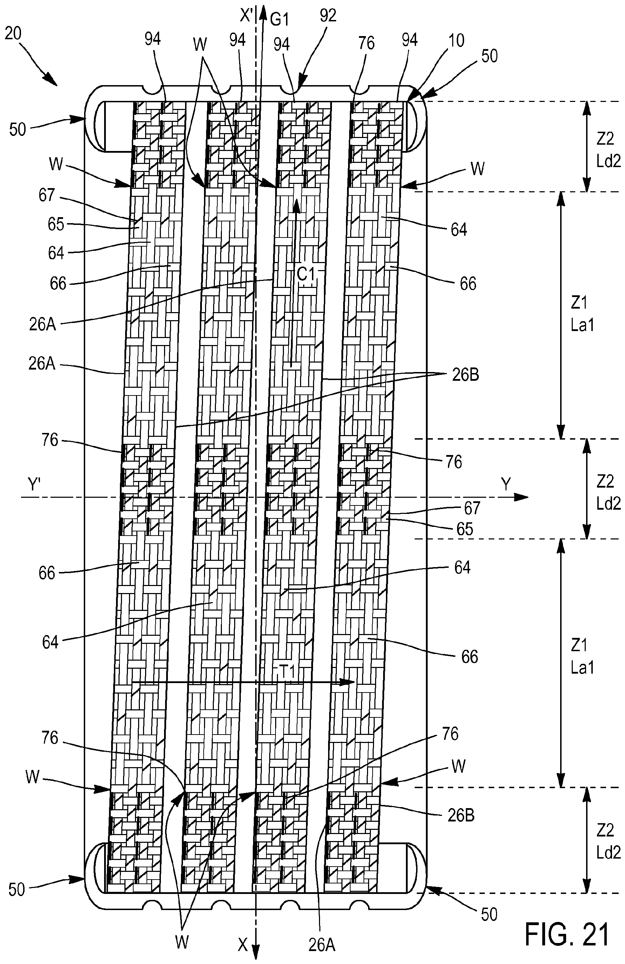

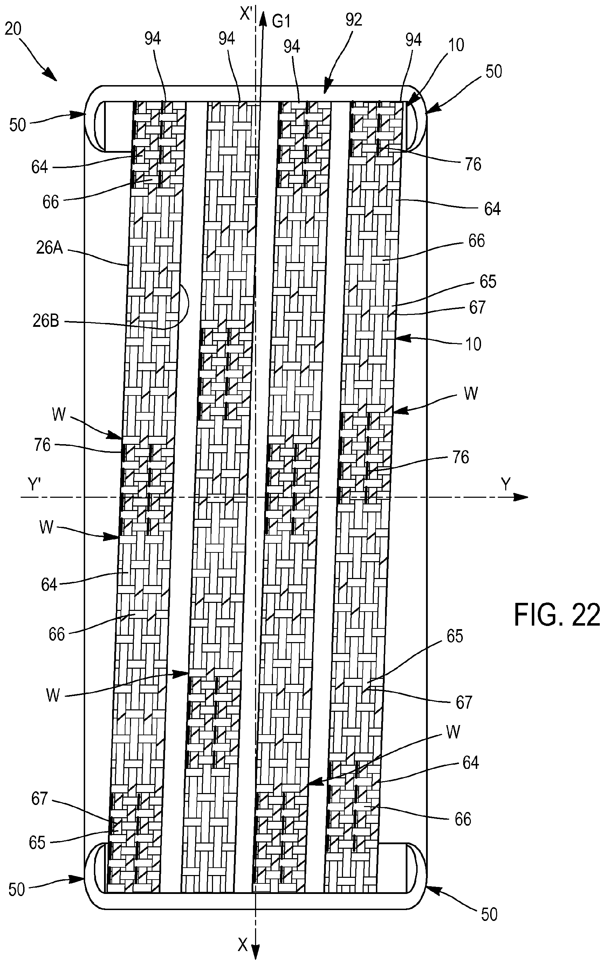

On a représenté sur les figures 20, 21 et 22 un pneumatique 20 selon un deuxième mode de réalisation selon des première et deuxième variantes représentées respectivement sur les figures 21 et 22. Les éléments analogues à ceux représentées sur les figures précédentes sont désignés par des références identiques.

A la différence du pneumatique selon le premier mode de réalisation, dans le pneumatique 20 selon le deuxième mode de réalisation, la première direction de chaine et la direction circonférentielle XX' du pneumatique 20 forment un angle sensiblement non nul inférieur à 10°, de préférence un angle sensiblement non nul inférieur ou égal à 5° et ici égal à 5°.

L'assemblage 24 s'étend circonférentiellement sur plusieurs tours complets autour de l'axe principal de façon à ce que la première structure de révolution 25 forme un enroulement hélicoïdal axialement discontinu de l'assemblage 24 entre les deux flancs 50 du pneumatique 20.

Dans ce mode de réalisation, l'assemblage imprégné 21 est enroulé autour de l'axe du pneumatique 20 de façon à former l'enroulement hélicoïdal d'une bandelette d'assemblage 92, les portions axiales 94 de la bandelette 92 étant axialement juxtaposées. Par bandelette, on entend un assemblage imprégné 21 ayant une largeur axiale limitée, au plus égale à 30% de la largeur axiale de la bande de roulement 58, et de grande longueur au moins égale à deux fois la circonférence de la bande de roulement 58, de façon à ce que la bandelette à poser puisse être stockée sous forme de rouleau. Une telle bandelette est ainsi déroulée selon une hélice, ayant pour axe de révolution l'axe de révolution du pneumatique 20. Le nombre de tours d'enroulement hélicoïdal de la bandelette est déterminé par la largeur axiale totale de l'enroulement hélicoïdal visée et par la densité d'éléments porteurs 32. La pose de la bandelette peut être jointive, c'est-dire que les portions de bandelette sont en contact deux à deux par leurs bords axiaux, ou non jointives, c'est-à-dire que les bords axiaux des portions axiales 94 de bandelette sont espacées d'un espace sensiblement non nul. L'avantage d'une pose en bandelette est l'absence de zones de recouvrement, ou soudures, selon la direction circonférentielle, entre des portions axiales de bandelette, en fin d'enroulement.

Dans une conception de type bandelette, la surface de liaison S_{E} de la face externe 43 de la première structure de révolution 25 avec la face radialement intérieure 59 de la structure de révolution de sommet 55 est la somme des surfaces de liaison des portions axiales 94 de bandelette 92 juxtaposés.

L'assemblage imprégné 21 est enroulé hélicoïdalement autour de l'axe de révolution du pneumatique 20 de sorte que, avant conformation, la première direction de chaine et la direction circonférentielle du cylindre de confection forment un angle sensiblement non nul inférieur à 10°, de préférence un angle sensiblement non nul inférieur à 5°.

Dans la première variante de ce deuxième mode de réalisation représentée sur la figure 21, on enroule l'assemblage imprégné 21 de sorte que chaque extrémité W circonférentielle de chaque zone droite transversale Z1 d'un tour est axialement sensiblement alignée avec chaque extrémité W circonférentielle de chaque zone droite transversale Z1 de chaque tour adjacent. Ainsi, tout comme dans le premier mode de réalisation, chaque zone droite transversale Z1 dite déformable présente une longueur allongée La1 sensiblement égale à ((2π x H) + SLd1)/N avec N étant le nombre de zones droite transversale Z1 dite déformables sur la circonférence du pneumatique et par enroulement circonférentiel du premier tissu autour de l'axe principal YY' de révolution du pneumatique 20, ici égale à 10,22 mm. Chaque zone droite transversale Z1 dite déformable présente donc un allongement selon la première direction générale G1 égal à 29 %.

Dans la deuxième variante de deuxième mode de réalisation représentée sur la figure 22, on enroule l'assemblage imprégné 21 de sorte que chaque extrémité circonférentielle W de chaque zone droite transversale Z1 du premier groupe de zone(s) droite(s) transversale(s) d'un tour se situe entre les prolongements axiaux des deux extrémités circonférentielles W de chaque zone droite transversale Z1 de chaque tour adjacent.

L'invention ne se limite pas aux modes de réalisation décrits ci-dessus, mais est défini par les revendications annexées.

En effet, dans un mode de réalisation non décrit précédemment, on peut mettre en oeuvre un procédé avec un assemblage non imprégné, la jante 22 et la structure de révolution de sommet 55 assurant l'étanchéité radiale de l'espace annulaire intérieur 52.

On pourra également envisager d'utiliser des premières structures de premiers éléments filaires permettant la conformation dans les conditions encore plus avantageuses que celles décrites précédemment, et pour lesquels P0=80000, de préférence P0=60000, plus préférentiellement P0=40000.

On pourra également envisager d'exploiter le mode de réalisation dans lequel les zones droites transversales Z2 sont déformables. De telles zones droites transversales Z2 seraient agencées de façon à permettre un allongement de chaque zone droite transversale Z2, de préférence au plus égal à 20%, de préférence à 15%, et plus préférentiellement à 10% de l'allongement de chaque zone droite transversale Z1 du premier groupe de zone(s) droite(s) transversale(s) selon la première direction générale G1, par exemple en permettant un allongement de chaque premier élément filaire de chaine 64 selon la première direction générale G1 dans chaque zone droite transversale Z2, de préférence de façon à permettre un allongement de chaque premier élément filaire de chaine 64 selon la première direction générale G1 dans chaque zone droite transversale Z2 au plus égal à 20%, de préférence à 15%, et plus préférentiellement à 10% de l'allongement de chaque premier élément filaire de chaine 64 selon la première direction générale G1 dans chaque zone droite transversale Z1. En outre, dans ce mode de réalisation, chaque zone droite transversale Z2 serait agencée de façon à permettre un allongement de chaque première portion filaire d'ancrage 76 selon la première direction générale G1. Dans ce mode de réalisation, chaque zone droite transversale Z2 est agencée de façon à permettre un écartement des premiers éléments filaire de trame les uns par rapport aux autres selon la première direction générale G1 dans chaque zone droite transversale Z2.

Toujours dans ce mode de réalisation utilisant des zones droites transversales Z2 déformables, le pneumatique 20 serait tel que chaque zone droite transversale Z2 présente un allongement non nul selon la direction circonférentielle XX' du pneumatique 20, de préférence un allongement non nul au plus égal à 20%, de préférence à 15%, et plus préférentiellement à 10%, de l'allongement de chaque zone droite transversale Z1 selon la direction circonférentielle XX' du pneumatique 20, par exemple car chaque premier élément filaire de chaine 64 de chaque zone droite transversale Z2 présente un allongement non nul selon la direction circonférentielle XX' du pneumatique 20, de préférence car chaque premier élément filaire 64 de chaine de chaque zone droite transversale Z2 présente un allongement selon la direction circonférentielle XX' au plus égal à 20%, de préférence à 15%, et plus préférentiellement à 10% de l'allongement de chaque premier élément filaire de chaine 64 selon la première direction générale G1 dans chaque zone droite transversale Z1. En outre, dans ce mode de réalisation, chaque première portion filaire d'ancrage 76présente un allongement non nul selon la direction circonférentielle XX' du pneumatique 20.

Enfin, toujours dans ce mode de réalisation utilisant des zones droites transversales Z2 déformables, le procédé serait tel qu'on allonge selon la direction circonférentielle XX' du cylindre de confection chaque zone droite transversale Z2, par exemple en allongeant selon la direction circonférentielle XX' du cylindre de confection chaque premier élément filaire de chaine 64 dans chaque zone droite transversale Z2. En outre, dans ce mode de réalisation, on allonge selon la direction circonférentielle XX' du cylindre de confection chaque première portion filaire d'ancrage 76.

## Revendications

1. Assemblage (24), qui comprend:
- un premier tissu (26) s'étendant selon une première direction générale (G1), le premier tissu (26) comprenant des premiers éléments filaires (64), dits de chaine, sensiblement parallèles entre eux et s'étendant selon une première direction (C1), dite de chaine, sensiblement parallèle à la première direction générale (G1), chaque premier élément filaire de chaine (64) comprenant des premier et deuxième organes filaires (65, 67),
- un deuxième tissu ou tricot (28),
- une structure porteuse (30) comprenant des éléments filaires porteurs (32) reliant le premier tissu (26) et le deuxième tissu ou tricot (28) entre eux, chaque élément filaire porteur (32) comprenant au moins une portion filaire porteuse (74) s'étendant entre le premier tissu (26) et le deuxième tissu ou tricot (28), **caractérisé en ce que**
le premier tissu (26) étant agencé de sorte que, pour une longueur au repos L du premier tissu (26) selon la première direction générale (G1), exprimée en m :
- pour tout allongement du premier tissu (26) selon la première direction générale (G1) inférieur ou égal à (2π x H) / L, le premier organe filaire (65) présente un allongement non nul et est non rompu,
- il existe un allongement du premier tissu (26) selon la première direction générale (G1) inférieur ou égal à (2π x H) / L à partir duquel le deuxième organe filaire (67) est rompu,
dans lequel H0 x K ≤ H avec H0 la distance droite moyenne entre une face interne (42) du premier tissu (26) et une face interne (46) du deuxième tissu ou tricot (28) lorsque chaque portion filaire porteuse (74) est au repos, H et H0 étant exprimées en m, et K=0,50.

2. Assemblage (24) selon la revendication précédente, dans lequel le deuxième organe filaire (67) est sensiblement rectiligne et le premier organe filaire (65) est enroulé en hélice autour du deuxième organe filaire (67).

3. Assemblage (24) selon l'une quelconque des revendications précédentes, dans lequel le premier tissu (26) comprend :
- au moins une zone droite transversale (Z1) d'un premier groupe de zone(s) droite(s) transversale(s), chaque zone droite transversale (Z1) du premier groupe de zone(s) droite(s) transversale(s) étant agencée de façon à permettre un allongement avec rupture partielle d'au moins une zone droite transversale (Z1) du premier groupe de zone(s) droite(s) transversale(s) selon la première direction générale (G1),
- au moins une zone droite transversale (Z2) d'un deuxième groupe de zone (s) droite(s) transversale(s), chaque zone droite transversale (Z2) du deuxième groupe de zone(s) droite(s) transversale(s) étant agencée de façon à empêcher une rupture de chaque zone droite transversale (Z2) du deuxième groupe de zone(s) droite(s) transversale(s).
chaque zone droite transversale (Z1, Z2) de chaque premier et deuxième groupe de zone(s) droite(s) transversale(s) s'étendant sur toute la largeur du premier tissu (26).

4. Assemblage (24) selon la revendication 3, dans lequel, le premier tissu (26) comprenant des premiers éléments filaires (66), dits de trame, sensiblement parallèles entre eux et s'entrecroisant avec les premiers éléments filaires de chaine (64), chaque zone droite transversale (Z1) du premier groupe de zone(s) droite(s) transversale(s) est agencée de façon à permettre un écartement des éléments filaire de trame (66) les uns par rapport aux autres selon la première direction générale (G1) dans chaque zone droite transversale (Z1) du premier groupe de zone(s) droite(s) transversale(s).

5. Assemblage (24) selon l'une quelconque des revendications 3 à 4, dans lequel chaque zone droite transversale (Z2) du deuxième groupe de zone(s) droite(s) transversale(s) est agencée de façon à empêcher :
- une rupture du premier organe filaire (65) de chaque premier élément filaire de chaine (64) dans chaque zone droite transversale (Z2) du deuxième groupe de zone(s) droite(s) transversale(s), et
- une rupture du deuxième organe filaire (67) de chaque premier élément filaire de chaine (64) dans chaque zone droite transversale (Z2) du deuxième groupe de zone(s) droite(s) transversale(s).

6. Assemblage (24) selon l'une quelconque des revendications 3 à 5, dans lequel, le premier tissu (26) comprenant des premiers éléments filaires (66), dits de trame, sensiblement parallèles entre eux et s'entrecroisant avec les premiers éléments filaires de chaine (64), chaque zone droite transversale (Z2) du deuxième groupe de zone(s) droite(s) transversale(s) est agencée de façon à empêcher un écartement des premiers éléments filaire de trame (66) les uns par rapport aux autres selon la première direction générale (G1) dans chaque zone droite transversale (Z2) du deuxième groupe de zone(s) droite(s) transversale(s).

7. Assemblage (24) selon l'une quelconque des revendications 3 à 5, dans lequel, le premier tissu (26) comprenant des premiers éléments filaires (66), dits de trame, sensiblement parallèles entre eux et s'entrecroisant avec les premiers éléments filaires de chaine (64), chaque zone droite transversale (Z2) du deuxième groupe de zone(s) droite(s) transversale(s) est agencée de façon à permettre un écartement des premiers éléments filaire de trame (66) les uns par rapport aux autres selon la première direction générale (G1) dans chaque zone droite transversale (Z2) du deuxième groupe de zone(s) droite(s) transversale(s).

8. Assemblage (24) selon l'une quelconque des revendications 3 à 7, dans lequel chaque élément filaire porteur (32) comprenant une première portion filaire d'ancrage (76) de chaque élément filaire porteur (32) dans le premier tissu (26) prolongeant la portion filaire porteuse (74) dans le premier tissu (26):
- chaque zone droite transversale (Z1) du premier groupe de zone(s) droite(s) transversale(s) est dépourvue de toute première portion filaire d'ancrage (76) sur toute la largeur du premier tissu (26),
- chaque zone droite transversale (Z2) du deuxième groupe de zone(s) droite(s) transversale(s) comprend au moins une première portion filaire d'ancrage (76) sur la largeur du premier tissu (26).

9. Assemblage imprégné (21), **caractérisé en ce qu'**il comprend :
- des première et deuxième couches (33, 35) respectivement de première et deuxième compositions polymériques (34, 36) ;
- un assemblage (24) selon l'une quelconque des revendications précédentes dans lequel :
- le premier tissu (26) est imprégné au moins en partie de la première composition polymérique (34);
- le deuxième tissu ou tricot (28) est imprégné au moins en partie de la deuxième composition polymérique (36).

10. Pneumatique (20) de révolution autour d'un axe principal (YY'), qui comprend :
- une première structure de révolution (25) comprenant un premier tissu (26) comprenant des premiers éléments filaires (64), dits de chaine, sensiblement parallèles entre eux et s'étendant selon une première direction (C1), dite de chaine, la direction circonférentielle (XX') du pneumatique (20) formant un angle inférieur ou égal à 10° avec la première direction de chaine (C1), chaque premier élément filaire de chaine (64) comprenant des premier et deuxième organes filaires (65, 67),
- une deuxième structure de révolution (27) comprenant un deuxième tissu ou tricot (28), la deuxième structure de révolution étant agencée radialement à l'intérieur de la première structure de révolution (25),
- une structure porteuse (30) comprenant des éléments filaires porteurs (32) reliant le premier tissu (26) et le deuxième tissu ou tricot (28) entre eux, chaque élément filaire porteur (32) comprenant au moins une portion filaire porteuse (74) s'étendant entre le premier tissu (26) et le deuxième tissu ou tricot (28), **caractérisé par**
- un espace annulaire intérieur (52) délimité radialement par une face interne (42) du premier tissu (26) et une face interne (46) du deuxième tissu ou tricot (28), avec :
∘ H0 étant la hauteur radiale moyenne de l'espace annulaire intérieur (52) lorsque chaque portion filaire porteuse (74) est au repos,
∘ H étant la hauteur radiale moyenne de l'espace annulaire intérieur (52) en l'absence de charge appliquée au pneumatique (20) et en l'absence de pression dans le pneumatique (20), tel que H0 x K ≤ H avec K=0,50,
pneumatique dans lequel :
- le premier organe filaire (65) de chaque premier élément filaire (64) de chaine présente, au moins sur une partie de sa longueur, un allongement non nul selon la première direction de chaine (C1) et est non rompu, et
- le deuxième organe filaire (67) de chaque premier élément filaire (64) de chaine est rompu en au moins un point de sa longueur.

11. Pneumatique (20) selon la revendication précédente, dans lequel le premier tissu (26) comprend :
- au moins une zone droite transversale (Z1) d'un premier groupe de zone(s) droite(s) transversale(s), chaque zone droite transversale (Z1) du premier groupe de zone(s) droite(s) transversale(s) présentant un allongement non nul selon la direction circonférentielle (XX') du pneumatique (20) et étant partiellement rompue,
- au moins une zone droite transversale (Z2) d'un deuxième groupe de zone (s) droite(s) transversale(s), chaque zone droite transversale (Z2) du deuxième groupe de zone(s) droite(s) transversale(s) étant non rompue,
chaque zone droite transversale (Z1, Z2) de chaque premier et deuxième groupe de zone(s) droite(s) transversale(s) s'étendant sur toute la largeur du premier tissu (26).

12. Pneumatique (20) selon l'une quelconque des revendications 10 à 11, dans lequel :
- le premier organe filaire (65) de chaque premier élément filaire (64) de chaine de chaque zone droite transversale (Z1) du premier groupe de zone(s) droite(s) transversale(s) présente un allongement non nul selon la première direction de chaine (C1) et est non rompu, et
- le deuxième organe filaire (67) de chaque premier élément filaire (64) de chaine de chaque zone droite transversale (Z1) du premier groupe de zone(s) droite(s) transversale(s) est rompu en au moins un point de sa longueur dans au moins une zone droite transversale (Z1) du premier groupe de zone(s) droite(s) transversale(s).

13. Pneumatique (20) selon l'une quelconque des revendications 10 à 12, dans lequel, le premier tissu (26) comprenant des premiers éléments filaires (66), dits de trame, sensiblement parallèles entre eux et s'entrecroisant avec les premiers éléments filaires de chaine (64), les premiers éléments filaire de trame (66) de chaque zone droite transversale (Z1) du premier groupe de zone(s) droite(s) transversale(s) présentent un écartement deux à deux selon la direction circonférentielle (XX') du pneumatique (20) supérieur à l'écartement deux à deux selon la direction circonférentielle (XX') du pneumatique (20) entre les premiers éléments filaire de trame (66) de chaque zone droite transversale (Z2) du deuxième groupe de zone(s) droite(s) transversale(s).

14. Ensemble monté (23), **caractérisé en ce qu'il** comprend un pneumatique (20) selon l'une quelconque des revendications 10 à 13 monté sur un moyen de montage (22) de l'ensemble monté (23) sur un véhicule.

15. Procédé de fabrication d'un pneumatique (20), comprenant
- on enroule, autour d'un cylindre de confection (80) sensiblement de révolution autour d'un axe de révolution (YY'), un assemblage (24) comprenant :
- un premier tissu (26) comprenant des premiers éléments filaires (64), dits de chaine, sensiblement parallèles entre eux et s'étendant selon une première direction (C1), dite de chaine, chaque premier élément filaire de chaine (64) comprenant des premier et deuxième organes filaires (65, 67),
- un deuxième tissu ou tricot (28),
- une structure porteuse (30) comprenant des éléments filaires porteurs (32) reliant le premier tissu (26) et le deuxième tissu ou tricot (28) entre eux, chaque élément filaire porteur (32) comprenant au moins une portion filaire porteuse (74) s'étendant entre le premier tissu (26) et le deuxième tissu ou tricot (28), de sorte que la première direction de chaine (C1) et la direction circonférentielle (XX') du cylindre de confection (80) forment un angle inférieur ou égal à 10°, **caractérisé en ce que**
- on écarte radialement par rapport à l'axe de révolution le premier tissu (26) de façon à :
- former un espace annulaire intérieur (52) délimité radialement par une face interne (42) du premier tissu (26) et une face interne (46) du deuxième tissu ou tricot (28) et distante l'une de l'autre d'une distance radiale moyenne H telle que H0 x K ≤ H avec K=0,50 et H0 étant la hauteur radiale moyenne entre la face interne (42) du premier tissu (26) et la face interne (46) du deuxième tissu ou tricot (28) lorsque chaque portion filaire porteuse (74) est au repos,
- ce que le premier organe filaire (65) de chaque premier élément filaire (64) de chaine s'allonge selon la première direction de chaine (C1) sur au moins une partie de sa longueur sans rompre, et
- ce que le deuxième organe filaire (67) de chaque premier élément filaire (64) de chaine rompe en au moins un point de sa longueur.

## Patentansprüche

1. Anordnung (24), die enthält:
- ein erstes Gewebe (26), das sich gemäß einer ersten allgemeinen Richtung (G1) erstreckt, wobei das erste Gewebe (26) erste so genannte Kettfadenelemente (64) im Wesentlichen parallel zueinander und sich gemäß einer ersten so genannten Kettrichtung (C1) im Wesentlichen parallel zur ersten allgemeinen Richtung (G1) erstreckend enthält, wobei jedes erste Kettfadenelement (64) erste und zweite Fadenorgane (65, 67) enthält,
- ein zweites Gewebe oder Gewirk (28),
- eine Trägerstruktur (30), die Trägerfadenelemente (32) enthält, die das erste Gewebe (26) und das zweite Gewebe oder Gewirk (28) miteinander verbinden, wobei jedes Trägerfadenelement (32) mindestens einen Trägerfadenabschnitt (74) enthält, der sich zwischen dem ersten Gewebe (26) und dem zweiten Gewebe oder Gewirk (28) erstreckt,
**dadurch gekennzeichnet, dass** das erste Gewebe (26) so eingerichtet ist, dass für eine Ruhelänge L des ersten Gewebes (26) gemäß der ersten allgemeinen Richtung (G1), ausgedrückt in m:
- für jede Dehnung des ersten Gewebes (26) gemäß der ersten allgemeinen Richtung (G1) geringer als oder gleich (2π x H)/L das erste Fadenorgan (65) eine Dehnung ungleich Null aufweist und nicht gebrochen ist,
- es eine Dehnung des ersten Gewebes (26) gemäß der ersten allgemeinen Richtung (G1) geringer als oder gleich (2π x H)/L gibt, ab der das zweite Fadenorgan (67) gebrochen wird,
wobei gilt H0 x K ≤ H, mit H0 dem mittleren geraden Abstand zwischen einer Innenseite (42) des ersten Gewebes (26) und einer Innenseite (46) des zweiten Gewebes oder Gewirks (28), wenn jeder Trägerfadenabschnitt (74) in Ruhestellung ist, wobei H und H0 in m ausgedrückt sind und K=0,50.

2. Anordnung (24) nach dem vorhergehenden Anspruch, wobei das zweite Fadenorgan (67) im Wesentlichen geradlinig und das erste Fadenorgan (65) schraubenförmig um das zweite Fadenorgan (67) gewickelt ist.

3. Anordnung (24) nach einem der vorhergehenden Ansprüche, wobei das erste Gewebe (26) enthält:
- mindestens eine gerade Querzone (Z1) einer ersten Gruppe von gerade(n) Querzone(n), wobei jede gerade Querzone (Z1) der ersten Gruppe von gerade(n) Querzone(n) so angeordnet ist, dass sie eine Dehnung mit teilweisem Bruch mindestens einer geraden Querzone (Z1) der ersten Gruppe von gerade(n) Querzone(n) gemäß der ersten allgemeinen Richtung (G1) erlaubt,
- mindestens eine gerade Querzone (Z2) einer zweiten Gruppe von gerade(n) Querzone(n), wobei jede gerade Querzone (Z2) der zweiten Gruppe von gerade(n) Querzone(n) so angeordnet ist, dass sie einen Bruch jeder geraden Querzone (Z2) der zweiten Gruppe von gerade(n) Querzone(n) verhindert,
wobei jede gerade Querzone (Z1, Z2) jeder ersten und zweiten Gruppe von gerade(n) Querzone(n) sich über die ganze Breite des ersten Gewebes (26) erstreckt.

4. Anordnung (24) nach Anspruch 3, wobei, da das erste Gewebe (26) erste so genannte Schussfadenelemente (66) im Wesentlichen parallel zueinander und sich mit den ersten Kettfadenelementen (64) kreuzend enthält, jede gerade Querzone (Z1) der ersten Gruppe von gerade(n) Querzone(n) so angeordnet ist, dass sie ein voneinander Wegspreizen der Schussfadenelemente (66) gemäß der ersten allgemeinen Richtung (G1) in jeder geraden Querzone (Z1) der ersten Gruppe von gerade(n) Querzone(n) erlaubt.

5. Anordnung (24) nach einem der Ansprüche 3 bis 4, wobei jede gerade Querzone (Z2) der zweiten Gruppe von gerade(n) Querzone(n) angeordnet ist, um zu verhindern:
- einen Bruch des ersten Fadenorgans (65) jedes ersten Kettfadenelements (64) in jeder geraden Querzone (Z2) der zweiten Gruppe von gerade(n) Querzone(n), und
-- einen Bruch des zweiten Fadenorgans (67) jedes ersten Kettfadenelements (64) in jeder gerade Querzone (Z2) der zweiten Gruppe von gerade(n) Querzone(n) .

6. Anordnung (24) nach einem der Ansprüche 3 bis 5, wobei, da das erste Gewebe (26) erste so genannte Schussfadenelemente (66) im Wesentlichen parallel zueinander und sich mit den ersten Kettfadenelementen (64) kreuzend enthält, jede gerade Querzone (Z2) der zweiten Gruppe von gerade(n) Querzone(n) angeordnet ist, um ein voneinander Wegspreizen der ersten Schussfadenelemente (66) gemäß der ersten allgemeinen Richtung (G1) in jeder geraden Querzone (Z2) der zweiten Gruppe von gerade(n) Querzone(n) zu verhindern.

7. Anordnung (24) nach einem der Ansprüche 3 bis 5, wobei, da das erste Gewebe (26) erste so genannte Schussfadenelemente (66) im Wesentlichen parallel zueinander und sich mit den ersten Kettfadenelementen (64) kreuzend enthält, jede gerade Querzone (Z2) der zweiten Gruppe von gerade(n) Querzone(n) angeordnet ist, um ein voneinander Wegspreizen der ersten Schussfadenelemente (66) gemäß der ersten allgemeinen Richtung (G1) in jeder geraden Querzone (Z2) der zweiten Gruppe von gerade(n) Querzone(n) zu erlauben.

8. Anordnung (24) nach einem der Ansprüche 3 bis 7, wobei, da jedes Trägerfadenelement (32) einen ersten Verankerungsfadenabschnitt (76) jedes Trägerfadenelements (32) im ersten Gewebe (26) enthält, der den Trägerfadenabschnitt (74) im ersten Gewebe (26) verlängert:
- jede gerade Querzone (Z1) der ersten Gruppe von gerade(n) Querzone(n) über die ganze Breite des ersten Gewebes (26) keinen ersten Verankerungsfadenabschnitt (76) aufweist,
- jede gerade Querzone (Z2) der zweiten Gruppe von gerade(n) Querzone(n) mindestens einen ersten Verankerungsfadenabschnitt (76) über die Breite des ersten Gewebes (26) enthält.

9. Imprägnierte Anordnung (21), **dadurch gekennzeichnet, dass** sie enthält:
- erste und zweite Schichten (33, 35) von ersten bzw. zweiten Polymerzusammensetzungen (34, 36);
- eine Anordnung (24) nach einem der vorhergehenden Ansprüche, wobei:
- das erste Gewebe (26) zumindest zum Teil mit der ersten Polymerzusammensetzung (34) imprägniert ist;
- das zweite Gewebe oder Gewirk (28) zumindest zum Teil mit der zweiten Polymerzusammensetzung (36) imprägniert ist.

10. Luftreifen (20), der um eine Hauptachse (YY') drehsymmetrisch ist, der enthält:
- eine erste drehsymmetrische Struktur (25), die ein erstes Gewebe (26) enthält, das erste so genannte Kettfadenelemente (64) im Wesentlichen parallel zueinander und sich in einer ersten so genannten Kettrichtung (C1) erstreckend enthält, wobei die Umfangsrichtung (XX') des Luftreifens (20) einen Winkel kleiner als oder gleich 10° mit der ersten Kettrichtung (C1) bildet, wobei jedes erste Kettfadenelement (64) erste und zweite Fadenorgane (65, 67) enthält,
- eine zweite drehsymmetrische Struktur (27), die ein zweites Gewebe oder Gewirk (28) enthält, wobei die zweite drehsymmetrische Struktur radial innerhalb der ersten drehsymmetrischen Struktur (25) angeordnet ist,
- eine Trägerstruktur (30), die Trägerfadenelemente (32) enthält, die das erste Gewebe (26) und das zweite Gewebe oder Gewirk (28) miteinander verbinden, wobei jedes Trägerfadenelement (32) mindestens einen Trägerfadenabschnitt (74) enthält, der sich zwischen dem ersten Gewebe (26) und dem zweiten Gewebe oder Gewirk (28) erstreckt,
**gekennzeichnet durch**
- einen inneren ringförmigen Raum (52), der radial durch eine Innenseite (42) des ersten Gewebes (26) und eine Innenseite (46) des zweiten Gewebes oder Gewirks (28) begrenzt wird, mit:
∘ H0 der mittleren radialen Höhe des inneren ringförmigen Raums (52), wenn jeder Trägerfadenabschnitt (74) in der Ruhestellung ist,
o H der mittleren radialen Höhe des inneren ringförmigen Raums (52) in Abwesenheit einer auf den Luftreifen (20) angewendeten Last und in Abwesenheit von Druck im Luftreifen (20), derart, dass gilt H0 x K ≤ H mit K=0,50,
Luftreifen, bei dem:
- das erste Fadenorgan (65) jedes ersten Kettfadenelements (64) mindestens über einen Teil seiner Länge eine Dehnung ungleich Null gemäß der ersten Kettrichtung (C1) aufweist und nicht gebrochen ist, und
- das zweite Fadenorgan (67) jedes ersten Kettfadenelements (64) an mindestens einem Punkt seiner Länge gebrochen ist.

11. Luftreifen (20) nach dem vorhergehenden Anspruch, wobei das erste Gewebe (26) enthält:
- mindestens eine gerade Querzone (Z1) einer ersten Gruppe von gerade(n) Querzone(n), wobei jede gerade Querzone (Z1) der ersten Gruppe von gerade(n) Querzone(n) eine Dehnung ungleich Null gemäß der Umfangsrichtung (XX') des Luftreifens (20) aufweist und teilweise gebrochen ist,
- mindestens eine gerade Querzone (Z2) einer zweiten Gruppe von gerade(n) Querzone(n), wobei jede gerade Querzone (Z2) der zweiten Gruppe von gerade(n) Querzone(n) nicht gebrochen ist,
wobei jede gerade Querzone (Z1, Z2) jeder ersten und zweiten Gruppe von gerade(n) Querzone(n) sich über die ganze Breite des ersten Gewebes (26) erstreckt.

12. Luftreifen (20) nach einem der Ansprüche 10 bis 11, wobei:
- das erste Fadenorgan (65) jedes ersten Kettfadenelements (64) jeder geraden Querzone (Z1) der ersten Gruppe von gerade(n) Querzone(n) eine Dehnung ungleich Null gemäß der ersten Kettrichtung (C1) aufweist und nicht gebrochen ist, und
- das zweite Fadenorgan (67) jedes ersten Kettfadenelements (64) jeder geraden Querzone (Z1) der ersten Gruppe von gerade(n) Querzone(n) an mindestens einem Punkt seiner Länge in mindestens einer geraden Querzone (Z1) der ersten Gruppe von gerade(n) Querzone(n) gebrochen ist.

13. Luftreifen (20) nach einem der Ansprüche 10 bis 12, wobei, da das erste Gewebe (26) erste so genannte Schussfadenelemente (66) im Wesentlichen parallel zueinander und sich mit den ersten Kettfadenelementen (64) kreuzend enthält, die ersten Schussfadenelemente (66) jeder geraden Querzone (Z1) der ersten Gruppe von gerade(n) Querzone(n) ein paarweises Wegspreizen gemäß der Umfangsrichtung (XX') des Luftreifens (20) größer als das paarweise Wegspreizen gemäß der Umfangsrichtung (XX') des Luftreifens (20) zwischen den ersten Schussfadenelementen (66) jeder geraden Querzone (Z2) der zweiten Gruppe von gerade(n) Querzone(n) aufweisen.

14. Montierte Einheit (23), **dadurch gekennzeichnet, dass** sie einen Luftreifen (20) nach einem der Ansprüche 10 bis 13 montiert auf eine Montageeinrichtung (22) der montierten Einheit (23) auf ein Fahrzeug enthält.

15. Verfahren zur Herstellung eines Luftreifens (20), das enthält:
- Aufwickeln, um einen Aufbauzylinder (80) im Wesentlichen drehsymmetrisch um eine Drehsymmetrieachse (YY'), einer Anordnung (24), die enthält:
- ein erstes Gewebe (26), das erste so genannte Kettfadenelemente (64) im Wesentlichen parallel zueinander und sich gemäß einer ersten so genannten Kettrichtung (C1) erstreckend enthält, wobei jedes erste Kettfadenelement (64) erste und zweite Fadenorgane (65, 67) enthält,
- ein zweites Gewebe oder Gewirk (28),
- eine Trägerstruktur (30), die Trägerfadenelemente (32) enthält, die das erste Gewebe (26) und das zweite Gewebe oder Gewirk (28) miteinander verbinden, wobei jedes Trägerfadenelement (32) mindestens einen Trägerfadenabschnitt (74) enthält, der sich zwischen dem ersten Gewebe (26) und dem zweiten Gewebe oder Gewirk (28) erstreckt,
so dass die erste Kettrichtung (C1) und die Umfangsrichtung (XX') des Aufbauzylinders (80) einen Winkel von weniger als oder gleich 10° bilden, **dadurch gekennzeichnet, dass**
- das erste Gewebe (26) bezüglich der Drehsymmetrieachse radial weggespreizt wird, damit:
- ein innerer ringförmiger Raum (52) gebildet wird, der radial von einer Innenseite (42) des ersten Gewebes (26) und einer Innenseite (46) des zweiten Gewebes oder Gewirks (28) begrenzt wird, die einen mittleren radialen Abstand H voneinander haben, derart, dass gilt H0 x K ≤ H mit K=0,50, und H0 die mittlere radiale Höhe zwischen der Innenseite (42) des ersten Gewebes (26) und der Innenseite (46) des zweiten Gewebes oder Gewirks (28) ist, wenn jedes Trägerfadenabschnitt (74) in der Ruhestellung ist,
- das erste Fadenorgan (65) jedes ersten Kettfadenelements (64) sich gemäß der ersten Kettrichtung (C1) über mindestens einen Teil seiner Länge dehnt, ohne zu brechen, und
- das zweite Fadenorgan (67) jedes ersten Kettfadenelements (64) an mindestens einem Punkt seiner Länge bricht.

## Claims

1. Assembly (24), that comprises:
- a woven first fabric (26) extending in a first overall direction (G1), the woven first fabric (26) comprising first filamentary elements (64), referred to as warp elements, which are substantially parallel to one another and extending in a first direction (C1), referred to as the warp direction, substantially parallel to the first overall direction (G1), each first filamentary warp element (64) comprising first and second filamentary members (65, 67),
- a woven or knitted second fabric (28),
- a bearing structure (30) comprising filamentary bearing elements (32) connecting the woven first fabric (26) and the woven or knitted second fabric (28) together, each filamentary bearing element (32) comprising at least one filamentary bearing portion (74) extending between the woven first fabric (26) and the woven or knitted second fabric (28), **characterized in that**
the woven first fabric (26) being arranged in such a way that, for an at-rest length L of the woven first fabric (26) in the first overall direction (G1), expressed in m:
- for any elongation of the woven first fabric (26) in the first overall direction (G1) less than or equal to (2π x H) / L, the first filamentary member (65) has a non-zero elongation and is not broken,
- there is an elongation of the woven first fabric (26) in the first overall direction (G1) less than or equal to (2π x H) / L, beyond which the second filamentary member (67) is broken,
in which H0 x K ≤ H where H0 is the mean straight-line distance between an internal face (42) of the woven first fabric (26) and an internal face (46) of the woven or knitted second fabric (28) when each filamentary bearing portion (74) is at rest, H and H0 being expressed in m, and K=0.50.

2. Assembly (24) according to the preceding claim, in which the second filamentary member (67) is substantially rectilinear and the first filamentary member (65) is wound in a helix around the second filamentary member (67).

3. Assembly (24) according to any one of the preceding claims, in which the woven first fabric (26) comprises:
- at least one transverse straight zone (Z1) of a first transverse straight zone(s) group, each transverse straight zone (Z1) of the first transverse straight zone(s) group being arranged in such a way as to allow elongation with partial breakage of at least one transverse straight zone (Z1) of the first transverse straight zone(s) group in the first overall direction (G1),
- at least one transverse straight zone (Z2) of a second transverse straight zone(s) group, each transverse straight zone (Z2) of the second transverse straight zone(s) group being arranged in such a way as to prevent breakage of each transverse straight zone (Z2) of the second transverse straight zone(s) group, each transverse straight zone (Z1, Z2) of each first and second transverse straight zone(s) group extending across the entire width of the woven first fabric (26).

4. Assembly (24) according to Claim 3, in which, with the woven first fabric (26) comprising first filamentary elements (66), known as weft elements, that are substantially mutually parallel and that intertwine with the first filamentary warp elements (64), each transverse straight zone (Z1) of the first transverse straight zone(s) group is arranged in such a way as to allow the filamentary weft elements (66) to be parted from one another in the first overall direction (G1) in each transverse straight zone (Z1) of the first transverse straight zone(s) group.

5. Assembly (24) according to any one of Claims 3 to 4, in which each transverse straight zone (Z2) of the second transverse straight zone(s) group is arranged in such a way as to prevent:
- breakage of the first filamentary member (65) of each first filamentary warp element (64) in each transverse straight zone (Z2) of the second transverse straight zone(s) group, and
- breakage of the second filamentary member (67) of each first filamentary warp element (64) in each transverse straight zone (Z2) of the second transverse straight zone(s) group.

6. Assembly (24) according to any one of Claims 3 to 5, in which, with the woven first fabric (26) comprising first filamentary elements (66), known as weft elements, that are substantially mutually parallel and that intertwine with the first filamentary warp elements (64), each transverse straight zone (Z2) of the second transverse straight zone(s) group is arranged in such a way as to prevent the first filamentary weft elements (66) from being parted from one another in the first overall direction (G1) in each transverse straight zone (Z2) of the second transverse straight zone(s) group.

7. Assembly (24) according to any one of Claims 3 to 5, in which, with the woven first fabric (26) comprising first filamentary elements (66), known as weft elements, that are substantially mutually parallel and that intertwine with the first filamentary warp elements (64), each transverse straight zone (Z2) of the second transverse straight zone(s) group is arranged in such a way as to allow the first filamentary weft elements (66) to be parted from one another in the first overall direction (G1) in each transverse straight zone (Z2) of the second transverse straight zone(s) group.

8. Assembly (24) according to any one of Claims 3 to 7, in which, with each filamentary bearing element (32) comprising a first filamentary portion (76) for anchoring each filamentary bearing element (32) in the woven first fabric (26), prolonging the filamentary bearing portion (74) in the woven first fabric (26):
- each transverse straight zone (Z1) of the first transverse straight zone(s) group is devoid of any first filamentary anchoring portion (76) across the entire width of the woven first fabric (26),
- each transverse straight zone (Z2) of the second transverse straight zone(s) group comprises at least a first filamentary anchoring portion (76) across the width of the woven first fabric (26).

9. Impregnated assembly (21), **characterized in that** it comprises:
- first and second layers (33, 35) respectively made of first and second polymer compounds (34, 36);
- an assembly (24) according to any one of the preceding claims, in which:
- the woven first fabric (26) is at least partially impregnated with the first polymer composition (34);
- the woven or knitted second fabric (28) is at least partially impregnated with the second polymer composition (36).

10. Tyre (20) of revolution about a main axis (YY'), that comprises:
- a first structure exhibiting symmetry of revolution (25) comprising a woven first fabric (26) comprising first filamentary elements (64), referred to as warp elements, which are substantially parallel to one another and extend in a first direction (C1), referred to as the warp direction, the circumferential direction (XX') of the tyre (20) making an angle less than or equal to 10° with the first warp direction (C1), each first filamentary warp element (64) comprising first and second filamentary members (65, 67),
- a second structure exhibiting symmetry of revolution (27) comprising a woven or knitted second fabric (28), the second structure exhibiting symmetry of revolution being arranged radially on the inside of the first structure exhibiting symmetry of revolution (25),
- a bearing structure (30) comprising filamentary bearing elements (32) connecting the woven first fabric (26) and the woven or knitted second fabric (28) together, each filamentary bearing element (32) comprising at least one filamentary bearing portion (74) extending between the woven first fabric (26) and the woven or knitted second fabric (28), **characterized by**
- an interior annular space (52) delimited radially by an internal face (42) of the woven first fabric (26) and an internal face (46) of the woven or knitted second fabric (28), where:
∘ H0 is the mean radial height of the interior annular space (52) when each filamentary bearing portion (74) is at rest,
∘ H is the mean radial height of the interior annular space (52) in the absence of load applied to the tyre (20) and in the absence of pressure in the tyre (20), such that H0 x K ≤ H where K = 0.50,
in which tyre:
- the first filamentary member (65) of each first filamentary warp element (64) exhibits, at least over part of its length, a non-zero elongation in the first warp direction (C1) and is non-broken, and
- the second filamentary member (67) of each first filamentary warp element (64) is broken at least at one point along its length.

11. Tyre (20) according to the preceding claim, in which the woven first fabric (26) comprises:
- at least one transverse straight zone (Z1) of a first transverse straight zone(s) group, each transverse straight zone (Z1) of the first transverse straight zone(s) group exhibiting non-zero elongation in the circumferential direction (XX') of the tyre (20) and being partially broken,
- at least one transverse straight zone (Z2) of a second transverse straight zone(s) group, each transverse straight zone (Z2) of the second transverse straight zone(s) group being unbroken,
each transverse straight zone (Z1, Z2) of each first and second transverse straight zone(s) group extending across the entire width of the woven first fabric (26).

12. Tyre (20) according to any one of Claims 10 to 11, in which:
- the first filamentary member (65) of each first filamentary warp element (64) of each transverse straight zone (Z1) of the first transverse straight zone(s) group exhibits a non-zero elongation in the first warp direction (C1) and is non-broken, and
- the second filamentary member (67) of each first filamentary warp element (64) of each transverse straight zone (Z1) of the first transverse straight zone(s) group is broken at least at one point along its length in at least one transverse straight zone (Z1) of the first transverse straight zone(s) group.

13. Tyre (20) according to any one of Claims 10 to 12, in which, with the woven first fabric (26) comprising first filamentary elements (66), known as weft elements, that are substantially mutually parallel and that intertwine with the first filamentary warp elements (64), the first filamentary weft elements (66) of each transverse straight zone (Z1) of the first transverse straight zone(s) group exhibit a pairwise separation in the circumferential direction (XX') of the tyre (20) that is greater than the pairwise separation in the circumferential direction (XX') of the tyre (20) between the first filamentary weft elements (66) of each transverse straight zone (Z2) of the second transverse straight zone(s) group.

14. Mounted assembly (23), **characterized in that** it comprises a tyre (20) according to any one of Claims 10 to 13 mounted on a mounting means (22) for mounting the mounted assembly (23) on a vehicle.

15. Method for manufacturing a tyre (20), comprising:
- there is wound, about a tyre-building drum (80) substantially of revolution about an axis of revolution (YY'), an assembly (24) comprising:
∘ a woven first fabric (26) comprising first filamentary elements (64), referred to as warp elements, which are substantially parallel to one another and extend in a first direction (C1), referred to as the warp direction, each first filamentary warp element (64) comprising first and second filamentary members (65, 67),
- a woven or knitted second fabric (28),
- a bearing structure (30) comprising filamentary bearing elements (32) connecting the woven first fabric (26) and the woven or knitted second fabric (28) together, each filamentary bearing element (32) comprising at least one filamentary bearing portion (74) extending between the woven first fabric (26) and the woven or knitted second fabric (28),
in such a way that the first warp direction (C1) and the circumferential direction (XX') of the tyre-building drum (80) make an angle less than or equal to 10°, **characterized in that**
- the woven first fabric (26) is moved radially away from the axis of revolution in such a way:
- as to form an interior annular space (52) delimited radially by an internal face (42) of the woven first fabric (26) and an internal face (46) of the woven or knitted second fabric (28) and distant from one another by a mean radial distance H such that H0 x K ≤ H where K=0.50 and H0 is the mean radial height between the internal face (42) of the woven first fabric (26) and the internal face (46) of the woven or knitted second fabric (28) when each filamentary bearing portion (74) is at rest,
- that the first filamentary member (65) of each first filamentary warp element (64) becomes elongated in the first warp direction (C1) over at least part of its length without breaking, and
- that the second filamentary member (67) of each first filamentary warp element (64) breaks at least at one point along its length.
